# EUROPEAN PATENT APPLICATION

(11) **EP 2 811 255 A1**
(43) Date of publication of application: **10.12.2014**
(21) Application number: 14179187.1
(22) Date of filing: 27.01.2012
(51) Int. Cl.: F41H 7/00

(54) **Small unmanned ground vehicle**

(30) Priority: 27.01.2011 US 201161436994 P; 14.02.2011 US 201161442790 P; 18.03.2011 US 201113052022; 29.12.2011 US 201113340456; 30.12.2011 US 201113340957; 31.12.2011 US 201113342022
(62) Divisional of application: 12152964.8
(71) Applicant: Meaney, Todd M., San Luis Obispo, CA 93405 (US); Rudakevych, Pavlo E., Arroyo Grande, CA 93420 (US); Gossage, Garran M., San Luis Obispo, CA 93401 (US); Morey, Christopher L., San Luis Obispo, CA 93405 (US); Ohm, Timothy R., Grover Beach, CA 93433 (US); Wozniak, Adam, Burlington, MA 01803 (US)
(72) Inventor: Meaney, Todd M., San Luis Obispo, CA 93405 (US); Rudakevych, Pavlo E., Arroyo Grande, CA 93420 (US); Gossage, Garran M., San Luis Obispo, CA 93401 (US); Morey, Christopher L., San Luis Obispo, CA 93405 (US); Ohm, Timothy R., Grover Beach, CA 93433 (US); Wozniak, Adam, Burlington, MA 01803 (US)
(74) Representative: McKinnon, Alistair James

(57) **Abstract**

The present invention relates to a tracked mobile robot (100) comprising axles (142, 144), resilient wheels (106, 118, 130, 136), flippers (110) mounted on one of the axles, a front camera (124) and side cameras (114), whereby the flippers comprise apertures configured to substantially align with the side cameras when the flippers are in a position extending between the axles.

## Description

### INTRODUCTION

This patent application claims priority to U.S. Patent Application No. 13/342,022, filed December 31, 2011, for Small Unmanned Ground Vehicle, to U.S. Patent Application No. 13/340,456, filed December 29, 2011, for Antenna Support Structures, to U.S. Patent Application No. 13/340,957, filed December 30, 2011, for Resilient Wheel Assemblies, and to U.S. Patent Application No. 13/052,022, filed March 18, 2011, for Mobile Robot Systems and Methods, the entire content of these applications is incorporated herein by reference.

The present teachings relate generally to a small unmanned ground vehicle. The present teachings relate more particularly to a small unmanned ground vehicle weighing less than about five pounds, and which is designed to absorb an impact from being dropped or thrown and climb stairs of a conventional size, to perform a variety of behaviors such as stair climbing, self righting, and gap crossing, and to be sealed to prohibit ingress of liquids and debris.

### Background

The section headings used herein are for organizational purposes only and are not to be construed as limiting the subject matter described in any way.

In military and industrial settings, personnel often encounter dangerous situations where intelligence of what lies ahead could save lives. Dismounted military patrols can use a lightweight, portable robot to maneuver into small spaces prone to ambush, and inspect potential threats, including suspected improvised explosive devices (IEDs). A small search robot can also be used to assess situations before exposing personnel to harm. In industrial settings, emergency personnel can pre-position or insert a small inspection robot in hazardous spaces to evaluate the situation before humans enter the area. Such a robot can evaluate the extent of danger before rescue teams enter sealed areas in mining operations, chemical plants, or nuclear reactors.

### SUMMARY

A robot in accordance with embodiments of the present teachings can comprise a lightweight, man-portable search robot designed to help keep military personnel and industrial personnel out of harm's way. It can be deployable and extremely maneuverable, and can serve as a forward-looking eye that travels ahead of dismounted military forces or industrial emergency personnel. Embodiments of the robot can also indicate the presence of IEDs, enemy combatants, and other potential hazards.

The present teachings provide a tracked mobile robot having tracks and rotatable flippers and a weight of less than about 6 pounds, the tracked mobile robot being configured to include at least three modes of operation, the modes of operation comprising: a gap crossing mode allowing the mobile robot to cross a gap that is greater than about eighty percent of a body length of the mobile robot, the gap crossing mode utilizing the rotatable flippers to pivot a chassis of the mobile robot clockwise to be inclined with respect to a surface over which the mobile robot drives before encountering the gap; a stair climbing mode utilizing the rotatable flippers to pivot the chassis of the mobile robot clockwise or counter-clockwise to cause the tracks to contact a top surface of a riser of a conventional stair; and an obstacle surmounting mode utilizing the rotatable flippers to pivot the chassis of the mobile robot clockwise or counter-clockwise to cause the tracks to contact an upper portion of the obstacle. The mobile robot dimensions can be less than about 10 inches long and about 9 inches wide and about 4 inches high exclusive of the antenna.

The present teachings also provide a tracked mobile robot comprising: a chassis having a interior volume and sensors thereon, the chassis and sensors being sealed to prevent ingress of dust and liquid to the sensors and the chassis interior volume during at least temporary submersion up to about 1 meter for about 30 minutes; and a battery housed within the chassis and having a battery volume, the battery being configured to support intended missions of the mobile robot for at least 6 hours, the intended missions including at least driving the mobile robot and powering a processor and a radio thereon. The mobile robot weighs less than about 6 pounds and the battery volume is at least about 10 percent of the interior volume of the chassis. The battery weight can be at least 16 percent of the total weight of the mobile robot without a payload.

The present teachings further provide a mobile robot system having a weight of less than about 10 pounds, the mobile robot system comprising: a chassis with an interior volume and sensors thereon, the chassis and sensors being sealed with one or more of O-ring type seals, membranes, and silicone rubber gaskets to prevent ingress of dust and liquid to the sensors and the chassis interior volume during exposure to harsh weather conditions and temporary submersion; and an operator control unit configured to communicate with the mobile robot. The operator control unit comprises: a housing; an antenna supported by the housing and configured to transmit to and receive signals from the mobile robot; a display configured to provide information regarding the operation of the mobile robot; and an input device coupled to the display and configured to receive operator input. The mobile robot can comprise a sealed microphone and a sealed speaker. The sensors can include cameras, cliff sensors, and wall-following sensors.

The present teachings still further provide an integrated circuit comprising: a processing unit; an inter-integrated circuit (I2C) interface coupled to the processing unit and to an external I2C bus; a data bus interface coupled to the processing unit and to an external data bus; and a data storage unit coupled to the processing unit configured to store at least one processor-executable program comprising instructions executable by the processing unit. The at least one processor-executable program comprises an I2C driver program to configure the processor to: receive a request for data from at least one target external device of a plurality of external devices coupled to the external bus, the request comprising a unique address associated with the target external device; communicate with an external I2C multiplexer through the I2C interface to select an I2C sub-branch of the I2C multiplexer corresponding to the target external device based on the unique address; communicate only with the target external device through the I2C interface, wherein the communication does not include the unique address; and communicate only with the target external device through the external data bus, wherein the communication is independent of the unique address. The external data bus can comprise a video data bus, the plurality of external devices comprises a plurality of video cameras, and the target external device comprises one of the plurality of video cameras. Communicating only with the target external device through the I2C interface can comprise requesting the target external device to transmit a video data through the external data bus. Communicating only with the target external device through the external data bus can comprise receiving the video data from the target external device through the external data bus. Communicating only with the target external device through the I2C interface comprises communicating with the target external device through the external I2C multiplexer. The I2C driver program can further configure the processor to provide an application programming interface to the at least one processor-executable program to: provide a unique address identifying each device of the plurality of external devices coupled to the external data bus in response to a request for the identification information from the at least one processor-executable program; and bridge the I2C interface with an I2C interface from at least one target external device of the plurality of external devices coupled to the external data bus through the external I2C multiplexer in response to a selection of the target external device, the selection comprising a unique address identifying the target external device. The I2C driver program can further configure the processor to provide an application programming interface to the at least one processor-executable program to provide data received from the target external device through the external data bus in response to a request for data from the target external device. Requesting data from the target external device can further comprise a data rate for receiving the requested data. The external data bus can comprise a video data bus, the plurality of external devices can comprise a plurality of video cameras, and the identification information can comprise a direction towards which a corresponding video camera is aimed relative to a point of reference. The plurality of video cameras can be mounted on a remote controlled vehicle and the point of reference comprises the remote controlled vehicle.

The present teachings additionally provide a remote controlled vehicle comprising: a processing unit; a plurality of data-gathering devices coupled to the processing unit through a data bus; an inter-integrated circuit (I2C) multiplexer coupled to the processing unit and to the plurality of data gathering devices; a data storage unit coupled to the processing unit and configured to store at least one processor-executable program comprising instructions executable by the processing unit. The at least one processor-executable program comprises an I2C driver program to configure the processing unit to: receive a request for data from at least one target external device of a plurality of external devices coupled to the external bus, the request comprising a unique address associated with the target external device; communicate with the I2C multiplexer to select an I2C sub-branch of the I2C multiplexer corresponding to the target external device based on the unique address and couple the processing unit with the target external device through the I2C multiplexer; communicate only with the target external device through the I2C multiplexer, wherein the communication does not include the unique address; and communicate only with the target external device through the data bus, wherein the communication does not include the unique address. The data bus can comprise a video data bus, the plurality of data-gathering devices comprises a plurality of video cameras, and the target external device comprises one of the plurality of video cameras. Communicating only with the target external device through the I2C multiplexer can comprise requesting the target external device to transmit a video data through the data bus. Communicating only with the target external device through the data bus can comprise receiving video data from the target device through the data bus. The I2C driver program can further configure the processor to provide an application programming interface to the at least one processor-executable program to: provide a unique address identifying each device of the plurality of data-gathering devices in response to a request for identification information from the at least one processor-executable program; and bridge the processing unit with the target external device through the I2C multiplexer in response to a selection of the target external device, the selection comprising a unique address identifying the target external device. The I2C driver program can further configure the processor to provide an application programming interface to the at least one processor-executable program to provide data received from the target external device through the data bus in response to a request for data from the target external device. Requesting data from the target external device can further comprise a data rate for receiving the requested data. The data bus can comprise a video data bus, the plurality of data-gathering devices can comprise a plurality of video cameras, and the identification information can comprise a direction towards which a corresponding video camera is aimed relative to the remote controlled vehicle.

The present teachings additionally provide a tracked mobile robot having a chassis, one or more front axles, one or more rear axles, and a weight of less than about 6 pounds, the chassis including a front camera mounted on the chassis at a location between the front wheels and side cameras mounted on the chassis at a location between a front axle and a rear axle, the tracked mobile robot comprising: resilient front wheels mounted on one or more front axles and configured to absorb axial and radial impact when the mobile robot is thrown; resilient rear wheels mounted on one or more rear axles and configured to absorb axial and radial impact when the mobile robot is thrown; tracks spanning the front a rear wheels and being driven by one of the front wheel or the rear wheel; and flippers mounted on one of the front axle or the rear axle and being driven thereby, the flippers extending between the front axle and the rear axle in a stowed position, each flipper comprising an aperture configured to be substantially aligned with a side camera when the flipper is in a stowed position.

The present teachings additionally provide a method for causing a mobile robot to jump a gap, the method comprising: maneuvering the mobile robot to a distance from the gap that is sufficient for the mobile robot to attain a predetermined speed prior to reaching the gap; rotating flippers of the mobile robot to tilt a chassis of the mobile robot upward into a prairie dog pose; and driving the mobile robot in a direction of the gap at a speed sufficient to cause the mobile robot to cross the gap.

Additional objects and advantages of the present teachings will be set forth in part in the description which follows, and in part will be obvious from the description, or may be learned by practice of the present teachings. The objects and advantages of the present teachings can be realized and attained by means of the elements and combinations particularly pointed out in the appended claims.

It is to be understood that both the foregoing general description and the following detailed description are exemplary and explanatory only and are not restrictive of the present teachings, as claimed.

The accompanying drawings, which are incorporated in and constitute a part of this specification, illustrate exemplary embodiments of the present teachings and together with the description, serve to explain the principles of those teachings.

### BRIEF DESCRIPTION OF THE DRAWINGS

FIG. 1 is a side perspective view of an exemplary embodiment of a robot in accordance with the present teachings.
FIG. 2 is a side view of the embodiment of FIG. 1.
FIG. 3 is a perspective view of an exemplary embodiment of a flipper structure in accordance with the present teachings
FIG. 4 is a side perspective view of the embodiment of FIG. 1, with the cover, antenna, left flipper, left wheels, and left track removed.
FIG. 5 is a top perspective view of the embodiment of FIG. 1, showing the cover, antenna, certain internal elements like printed circuit boards (PCBs) and the battery, left flipper, left wheels, and left track removed.
FIG. 6 illustrates an embodiment of a flipper clutch for a robot in accordance with the present teachings.
FIG. 7 illustrates the flipper clutch gear of FIG. 6.
FIG. 8 is a cross sectional view of the robot of FIG. 1, taken through the drive gears and looking toward a front of the robot.
FIG. 9 is a cross sectional view of the robot of FIG. 1, taken through the front axle and looking toward a rear of the robot.
FIG. 10 is a cross sectional view of the robot of FIG. 1, taken through the side cameras and looking toward a rear of the robot.
FIG. 11 is a cross sectional view of the robot of FIG. 1, taken through the rear axle and looking toward a rear of the robot.
FIG. 12 is a cross sectional view of the robot of FIG. 1, taken through a portion of the right-side drive gear assembly and looking toward a right side of the robot.
FIG. 13 is a cross sectional view of the robot of FIG. 1, taken midway through the robot and looking toward a right side of the robot.
FIG. 14 is an exemplary robot system diagram.
FIGS. 15A-15B illustrate two exemplary communication PCB diagrams.
FIG. 16 is an exemplary infrared (IR) sensor diagram.
FIG. 17 is an exemplary camera PCB diagram.
FIGS. 18A-18B illustrate an exemplary power system diagram.
FIG. 19 illustrates an exemplary interconnection of robot PCBs.
FIGS. 20-21 illustrate exemplary embodiments of a handheld controller for controlling a robot in accordance with the present teachings, including some exemplary measurements in millimeters.
FIGS. 22-23 illustrate the handheld controllers of FIGS 20-21 including an additional exemplary measurement in millimeters.
FIG. 24 is a side view of the handheld controller of FIG. 20.
FIG. 25 is a side view of the handheld controller of FIG. 20, with the case being transparent.
FIG. 26 is a top perspective view of the handheld controller of FIG. 20, with the cover and screen removed.
FIG. 27 is a side perspective view of another embodiment of a controller that can be attached to an operator's wrists using one or more straps.
FIG. 28 is a side perspective view of the controller of FIG. 27, with the top cover removed.
FIG. 29 is a side perspective view of the controller of FIG. 27, with the top cover and display screen removed.
FIG. 30 is a cross sectional view of the controller of FIG. 27.
FIG. 31 is another cross sectional view of the controller of FIG. 27.
FIG. 32 is an embodiment of an operator control unit (OCU) system diagram.
FIG. 33 is a system diagram for an embodiment of a robot docking station and charger.
FIG. 34 is a system diagram for another embodiment of a robot docking station and charger.
FIGS. 35-36 illustrate a robot system with an exemplary storage/charging dock.

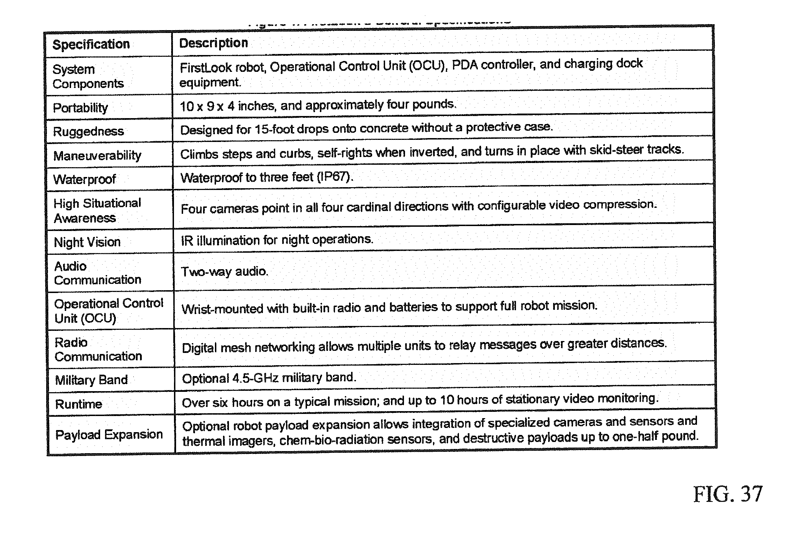

FIG. 37 illustrates exemplary general specifications in embodiments of the present teachings.
FIG. 38 is a side perspective view of an exemplary embodiment of a robot in accordance with the present teachings, having the chassis represented as transparent to show the location of various components and seals within the chassis.
FIG. 39 is a side cutaway view of the exemplary embodiment of FIG. 38.
FIG. 40A is a partial cutaway view of FIG. 39.
FIG. 40B is a partial cutaway view of an exemplary sealed cliff sensor in accordance with the present teachings
FIG. 41 is a partial cutaway view of the exemplary embodiment of FIG. 38.
FIG. 42 is a partial cutaway view of the exemplary embodiment of FIG. 38.
FIG. 43 is a schematic diagram of an exemplary embodiment of an integrated circuit for use in accordance with the present teachings.
FIG. 44 is a schematic diagram of an exemplary embodiment of a system in accordance with the present teachings.
FIG. 45 is a flow chart illustrating an exemplary method for multiplexing video data in accordance with the present teachings.
FIG. 46 is another flow chart illustrating an exemplary method for multiplexing video data in accordance with the present teachings.
FIG. 47 illustrates an exemplary operator control unit and remote vehicle for use in a system in accordance with the present teachings.
FIG. 48A - 48C illustrates a mobile robot in accordance with the present teachings employing an exemplary gap-crossing method.

### DESCRIPTION

Reference will now be made in detail to exemplary embodiments of the present teachings, examples of which are illustrated in the accompanying drawings.

The present teachings contemplate a small remote vehicle system, embodied herein for exemplary purposes as a small robot. In an embodiment, the small robot can have a mass of approximately 4 pounds, and can be, for example, about 10" in length x 9" in width x 4" in height (e.g., without consideration of an extended antenna height). Embodiments of the small robot can include a radio with a 200 meter range and which can function in a designated frequency range or designated frequency ranges, for example 2.4 GHz, 5.4 GHZ, or 4.5 GHz. In certain embodiments of the present teachings, the radio can be compatible with CREW (Counter Radio-controlled improvised explosive devices (RCIED) Electronic Warfare) program specifications. The present teachings also contemplate the use of optional encryption schemes. The radio can be two-way to provide situational awareness.

In various embodiments of the present teachings, the robot can be ruggedized, for example, to withstand a fall from a height of greater than 3 meters, to tumble down stairs, and/or to be waterproof. The robot can exhibit excellent mobility characteristics including the ability to climb 8" obstacles and to maneuver in common urban terrain, including navigation of stairs, curbs, and gravel. The robot system can be capable of ground speeds of greater than 1.5 m/s (5.4 kph) using wheels, treads, tracks, or other propulsion devices. In certain embodiments, a long-lasting power supply and energy conservation capabilities can provide up to 11 km driving distance, and/or up to 8 hours performance in a surveillance mode.

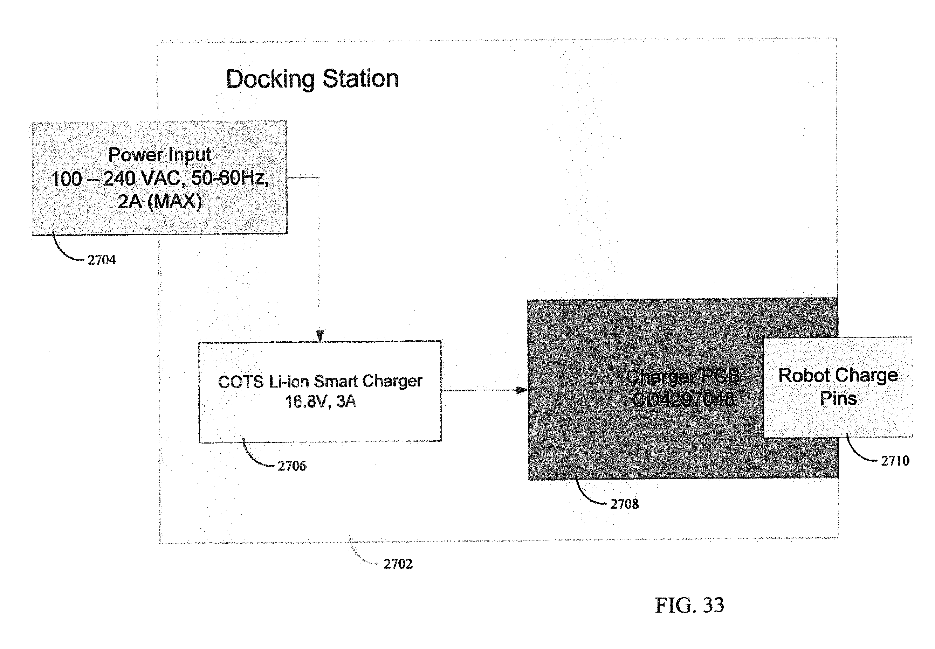

Embodiments of the robot system can include cameras, infrared (IR) illuminators, and sensors to provide situational awareness. When used with a two-way radio or other communication capability, the robot system can provide a user with extended situational awareness. In certain embodiments of the present teachings, an operator control unit (OCU) can provide wireless command and control over the robot system, which can be highly portable and ruggedized for, for example, combat scenarios. Embodiments of the OCU can include a touchscreen or other input device, and can further provided a device to allow attachment of the OCU to an operator's wrist. The robot system can also be configured to communicate with other robot systems, including the capability of forming ad-hoc communication networks, including mesh networking and "bucket brigade" (i.e., daisy chained communication) to extend a communication range through use of a plurality of robot systems. The robot system can further be configured to perform a variety of behaviors autonomously or semi-autonomously, including self-righting, step climbing, cliff avoidance, wall and obstacle avoidance and navigation, wall following, and retro-traverse behaviors. A plurality of robot systems can also perform maneuvers cooperatively, to accomplish tasks a single robot system would be unable to perform. For example, one or more robots in accordance with the present teachings can be interoperable with an entire fleet of robots and controllers allowing one operator to control many robots. Interoperability can enable cooperative and marsupial missions involving heterogeneous robot platforms using, for example, an advance behavior engine such as iRobot's® Aware® 2 Robot Intelligence Software technology. Robot interoperability can facilitate providing cost-effective, multi-robot systems that can adapt to a wide variety of real-world challenges. An example of general specifications of a small robot in accordance with embodiments of the present teachings is illustrated in FIG. 33.

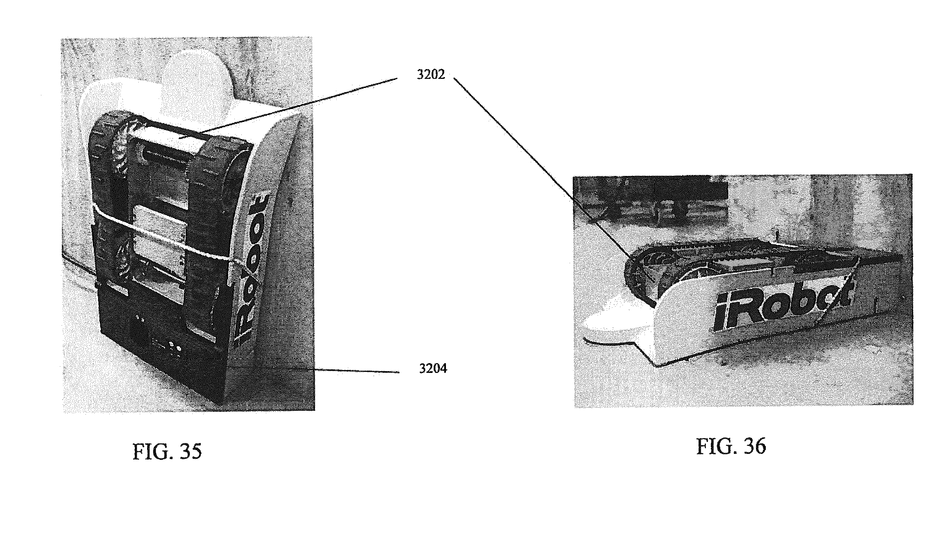

FIGS. 35 and 36 illustrate a robot system with an exemplary storage/charging dock in accordance with the present teachings which can comprise, for example, a robot 3202 and charging dock equipment 3204. In embodiments, an operator control system (not illustrated in FIGS. 35 and 36) can also be included. Prior to using the robot system, batteries of the robot system can be charged while the robot 3202 is secured in the charging dock equipment 3204. The robot 3202 and controller can be removed from the charging dock and stowed in a backpack, vest-mounted pouch, or similar carrying device. The robot 3202 can remain conveniently stowed away until needed for a reconnaissance or other mission. When needed, the robot is removed from its carrying compartment 3204 and activated. The robot 3202 can be a throwable robot and can be tossed down a corridor, into a window, or up a stairwell. The robot can absorb impact forces as described above and, after landing, can right itself if necessary and be remotely operated. Video feed can be evaluated before determining the next course of action.

Using a robot in accordance with the present teachings can reduce collateral casualties by allowing military personnel to determine a degree of hostile intent before entering a dangerous environment. The robot can also look for and determine the presence of IEDs and other safety hazards. In certain embodiments of the present teachings, utilizing several robots can extend a range of operations by acting as communication-relay nodes. A wider area of communication coverage can be provided if a robot is tossed onto a roof top or other high locations with good visibility.

For certain applications, a system in accordance with the present teachings that includes a docking station can be permanently installed at floor level inside a containment building, where the robot can charge in its charging dock (see above) until needed to perform a mission in the building or elsewhere. When an incident occurs, remote personnel can deploy the robot from its charging dock to evaluate, for example, the extent and type of an incident. The robot can, in certain embodiments, autonomously return to its charging dock when the mission is completed. Indeed, the present teachings contemplate a remote vehicle that can be remotely deployed from its charging station and autonomously return thereto, requiring no on-site human intervention.

In an exemplary use, in a civilian industrial setting, a home or building inspector can keep the robot in a wall-mounted charging dock inside an equipment truck until needed. When arriving on site, the robot can be charged and ready for deployment. The inspector can remove the robot from its charging dock and deploy it for evaluation tasks, especially for tasks in areas difficult or dangerous to reach, such as under-house or storm drainage system inspection. After use, the robot can be returned to its charging dock.

Various embodiments of a system in accordance with the present teachings, including training documentation, can fit into a small box weighing less than ten pounds, and can be easily shipped. Optionally, the system can be shipped or carried in, for example, a rugged waterproof case, commonly referred to as a Pelican case. Certain embodiments of the robot have a small form factor with two tracks, similar to a small tank. The robot preferably has side flippers, which in certain embodiments can rotate 360° around their axles to assist the robot in stair climbing, obstacle surmounting, self-righting, and certain other behaviors.

In various embodiments of the present teachings, the robot can climb stairs and curbs. The robot's platform can be, for example, about 10 x 9 x 4 inches, weigh about four pounds, and can be dropped fifteen feet onto a hard/inelastic surface (e.g., a concrete floor) without incurring structural damage that may impede its mission. For power, the robot can use, for example, built-in rechargeable lithium ion batteries, which can support typical mission durations of in excess of six hours. Certain embodiments of the robot can contain a small payload interface on top where optional sensors, manipulators, or other payloads can be attached. Certain embodiments of the robot can, for example, accommodate a payload of up to 0.5 pound without impeded mobility. In accordance with various embodiments, the robot's motor can provide a top speed near 1.5 m/sec (3.4 mph). Exemplary embodiments of such robots are further described in U.S. Patent Application No. 13/052,022, filed March 18, 2011, for MOBILE ROBOT SYSTEMS AND METHODS, which is herein incorporated by reference in its entirety.

In various embodiments, the robot's primary processor system can comprise an ARM processor, which can handle processing of commands and telemetry (which can be, for example, JAUS/SAE AS-4 compliant), motor-control loops, video processing and compression, and assistive autonomous behaviors implemented in an advanced behavior engine such as iRobot®'s Aware® software architecture. The robot can optionally be configured to be compliant and/or compatible with various robot interface standards, including JAUS and SAE AS-4.

In certain embodiments, a set of sensors for perceiving terrain (e.g., obstacles, cliffs and walls), inclinations, and orientation can be utilized to assist the operator with common tasks such as obstacle detection and avoidance, wall following, and cliff avoidance, relieving the need for difficult and intensive teleoperation during such tasks as driving in a straight line in a in a walled space and self-righting, The robot can interoperate with other robot products and compatible operator control units (OCUs). Interoperability can allow the same OCU to operate two robots (of the same type or a different type) simultaneously.

In accordance with various embodiments, a small, wrist-mounted OCU includes a radio, an antenna, and a battery capacity to accommodate the robot's mission life. The OCU can, for example, measure 6.5 x 4.5 x 2 inches, weigh approximately one pound, and conveniently stow in pockets such as the cargo pocket of a military uniform. The OCU can, for example, display all of the robot's real-time video streams simultaneously, allow direct control of the robot, and allow initiation of assorted autonomous and/or semi-autonomous behaviors. The OCU can additionally display, for example, the status of the robot's systems, including battery state of charge and flipper mechanism position. In various embodiments, the OCU can be weather resistant and configured to operate, for example, over a -10°C to 50°C temperature range.

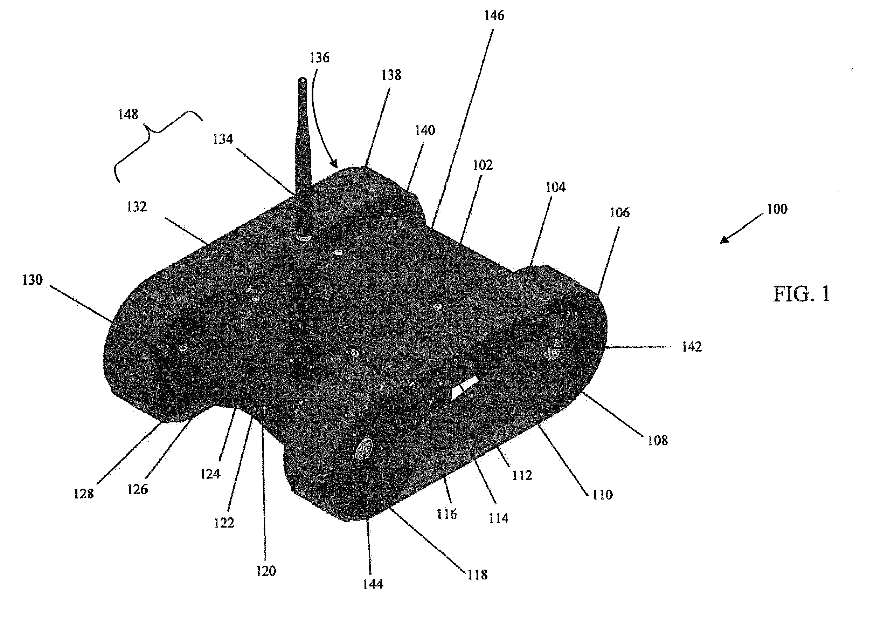

A robot in accordance with the present teachings is preferably a small, lightweight, tracked vehicle with trackless flippers as shown in FIG. 1. The flippers can be mounted to a rear axle of the robot. In accordance with various embodiments, when the flippers are stowed, the robot can be, for example about the size of a large telephone book, and can fit into an assault pack. The robot's small form factor and light weight can lend it well to dropping throwing into restricted spaces; and no external protective device is needed to protect the robot upon landing. The present teachings contemplate several robots being carried in a single backpack. In various embodiments of the present teachings, a small, ruggedized, PDA-style controller can be provided with the robot. The controller can weigh, for example, about one pound. The robot's charging dock can, for example, fit in an assault pack with the robot and its controller.

Various robots in accordance with the present teachings provide the smallest robot that can climb stairs, street curbs, and other obstacles common in urban environments. Such climbing is accomplished with the flippers as shown and described above. Embodiments of the robot can have, as illustrated herein, four wheels, rubber elastic tracks, and a flat brick-shaped body. The flippers are capable of continuous 360-degree rotation in both directions. The flippers can self-right the robot if it inverts, and can help the robot to overcome a wide variety of obstacles that typically obstruct a small robot. Such robots are further described in the aforementioned U.S. Patent Application No. 13/052,022, which is incorporated by reference herein in its entirety.

Certain embodiments of robot systems in accordance with the present teachings can climb stairs and crawl over rough terrain without getting stuck in rubble and debris. Certain embodiments of the robot can climb 60° slopes, and traverse 45° slopes. In various embodiments, the flippers can help the robot cross gaps over six inches in length. The tracked drive train can, in some embodiments, move the robot at speeds in excess of 1.5 meters/sec. The flipper system provides a high degree of mobility. The flippers' 360-degree rotation allows the robot to "swim" over rubble piles and rugged terrain that typically stop small robots with low ground clearance. The flippers can also self-right the robot when it is thrown or dropped onto a hard surface. The flipper-based self-righting feature allows the robot to self right even when its radio antennas and payloads such as sensors are designed into the top of the robot for appropriate visibility. The ability to position payloads and antennas on top of the robot is not available on existing invertible robot systems that do not have flippers.

Various embodiments of a robot in accordance with the present teachings are waterproof to IP67, and operate over a wide temperature range. The robot's low form factor can make it resistant to very high winds, in excess of 45 mph, with little degradation of mission performance. As stated above, embodiments of the robot can operate in temperatures ranging from -10°C to 60°C, with the operational temperature range being largely dictated by current lithium ion battery technology.

In certain embodiments, video is provided through four small multi-megapixel cameras built into the robot. Each camera can be pointed in a cardinal direction (front, back, left, and right) to allow full situational awareness, and can have a sufficient field of view to ensure full situational awareness. In certain embodiments, the operator can digitally pan-tilt and zoom within this field of view, take snapshots, and records videos for purposes of collecting intelligence data. The cameras preferably tolerate full sun, and do not wash out images. For low-light or night operations, an IR illumination array can be utilized to provide sufficient illumination to operate in typical urban situations.

In certain embodiments, to preserve true daylight colors, the camera lenses can have infrared (IR) cut filters with a notch band for the specific wavelength of the IR illumination. This can eliminate most ambient daylight IR light, preventing the washed out colors common in lenses with IR cut filters removed.

In various embodiments, the batteries can support over two hours of continuous, full-speed driving, or up to 10 hours of stationary observation, while transmitting full-motion video. In an embodiment, each battery can include one or more metal ion rechargeable batteries, for example, eight cells in a two-parallel, four-series configuration of, for example, 18650 cell-style lithium ion batteries. In various embodiments, a battery stack can be built into the robot, allowing the robot to be smaller, lighter, more rugged, and cheaper to build with fewer potential leak points than with a user-replaceable battery pack. A built-in battery design can eliminate duplicate bulkheads and seals that are typically needed for a user-replaceable battery compartment. The small size and light weight of lithium ion batteries allow the robot to be shipped by common air carrier without special hazardous materials packaging. For example, embodiments of the robot with eight Li-ion cells contain less than eight total grams of lithium.

The robot charging dock can utilize a continuously-available power source such as, for example, a wall socket electrical supply in the range of 110-250V AC 50-60Hz. The robot can also operate using an optional 12-28VDC charger. The small size and low cost of the robot will allow personnel to carry spare robots instead of spare batteries, if extended mission runtime is expected.

The robot's radio can comprise, for example, a USB module, and can support bidirectional digital communication and mobile ad hoc mesh networking. The default radio can operate on a frequency of 5.8GHz, and have a line-of-sight range in excess of 200 meters. The radio can also support operations on 2.4GHz, or can be replaced to support a wider variety of frequencies. The robot can optionally be equipped with a radio supporting a military band of 4.475-4.725 GHz with 200m range. The radio can be connected to a flexible antenna mounted on top of the robot with a unique collapsible mast such as the mast disclosed in U.S. Patent Application Serial No. 13/340,456, filed December 29, 2011, for Antenna Support Structure, the entire disclosure of which is incorporated by reference herein. When the robot flips over or onto its side, autonomous self-righting behavior self-rights the robot to allow such a flexible antenna to regain its upright position. The radio can comprise, for example, a bi-directional 802.11 class radio relying on greater than a 900 MHz bandwidth.

In accordance with certain aspects of the present teachings, in areas where RF performance may be degraded by background noise, or obstructed by terrain, several robots can be used together as relay nodes to extend the operational range. If the first robot reaches its RF communications limit, a second robot can be deployed to drive past the first robot into an inaccessible area, utilizing the first robot as a radio-relay node. The mesh networking capability can be built into some embodiments of the robot.

In certain embodiments, sensors on the robot can measure, for example: battery state of charge; voltage; amperage; tilt/inclination and bump sensing; cliff detection; wall following; yaw-angular rate to detect slippage and enhance odometry; motor currents; and flipper position. The robot can have on-board logging of diagnostic data, and can warn the operator of potential impending system failures requiring maintenance. The robot's autonomous capabilities can include, for example, one or more of the following.

**Self-righting** - a built-in, autonomous, self-righting behavior. When the robot is on and left undisturbed in an inverted position, the flippers activate in a series of maneuvers to upright the robot to ensure that the robot is returned to the upright position.

**Step climbing** - the robot can climb steps, preferably almost as deep as its size. However, the sequence of events that needs to occur to successfully surmount a large step is not trivial to perform when the motors are directly controlled by the operator. To facilitate step climbing, the robot can have a built-in assistive behavior initiated by the remote operator once the robot is positioned in front of the step. The assistive behavior executes the sequence of motions required to climb the step based upon the feedback from appropriate internal sensors. Further examples of such step climbing can be found in the aforementioned U.S. Patent Application No. 13/052,022.

Cliff **detection -** due to the low perspective of the robot's cameras, it is often difficult for an operator to see when the robot is driving towards a drop off, such as the top of a flight of stairs or the edge of a platform. To assist the operator in such situations, the robot can have built-in cliff sensors that are utilized in a protected driving mode. If the operator drives the robot too close to the edge of a stairwell or cliff, the robot stops, and can verify that the operator is aware of the drop off by projecting a warning message on the OCU. The operator can then decide to turn away from the edge, or to proceed and drive over the ledge.

**Wall following** - to facilitate searching a room or space, the operator can command the robot to follow a wall clockwise or counter clockwise around a room's perimeter. The robot autonomously drives around the perimeter hugging the base of the wall.

**Video Guard Mode** - the robot can be configured in a low-power, standby mode. In this mode, the robot wakes up and transmits an alert if it sees any motion. This mode can be useful when securing an area in a leave-behind scenario.

Certain embodiments of the robot can contain an expansion port for the addition of future payload modules where optional sensors, manipulators, or destructive payloads are attached. The robot can, for example, accommodate a payload of up to 0.5 pound without impeded mobility. Payload expansion can allow integration of specialized cameras and sensors, including thermal imagers, chem-bio-radiation sensors, and destructive payloads.

FIG. 1 is a side perspective view of an exemplary embodiment of a robot 100 in accordance with the present teachings. As shown, the robot 100 includes a housing 102 having wheels 106, 118, 130 and 136 on each side thereof and tracks 104, 138 spanning a front wheel and a rear wheel. The housing 102 can comprise, for example, aluminum or another suitably durable material including other metals, plastics, composites, etc. Flippers 110 can be provided, for example, attached directly or indirectly to a rear axle 142 of the vehicle (i.e., a rear axle spanning wheels 106 and 136), and can be rotatable, for example through 360 degrees, about the rear axle 142. The flippers 110 can be made from a suitably rugged material to withstand impacts that the robot may incur in use, and can be suitably strong to lift the weight of the robot and any payloads or accessories attached thereto. The flippers 110 can extend, for example, from rear axle 142 (at the flippers' proximal ends) to front axle 144 (at the flippers' distal ends), and can be tapered to be wider at their proximal ends and thinner at their distal ends. The distal end can be, for example, rounded as illustrated. The flippers 110 preferably extend generally parallel to a side of the robot when in a stored state and spaced from the robot a distance that prevents interference of the flipper with a motion of the robot or other operations of the robot while also preventing the flipper from catching on objects in the robot's environment. Flippers 110 can be mounted to the rear wheel assembly via, for example, a four-bar linkage 108 that is further described below. As will be appreciated by those of ordinary skill in the art, the robot 100 will have a center of gravity between the front axle 144 and the rear axle 142, and between tracks 104, 138

In certain embodiments of the present teachings, a top surface 146 of the robot housing 102 lies slightly below the surface of the tracks 104 and 138, and is substantially flat. The top surface 146 can include a payload expansion port cover 140 that can be removed to attach a payload to the robot, but which can optionally also serve as a surface for a sound exciter, as discussed in further detail below.

As illustrated in FIG. 1, an antenna assembly 148 extends upwardly from a top surface of the robot housing. The antenna assembly 148 can comprise, for example, an antenna mast 132 and an antenna 134. The antenna mast 132 can be, for example, bendable and resilient, and may, for example, comprise a rubber tube or an arrangement of shape memory alloy elements. In operation, antenna mast 132 can be folded over the robot housing 102 for compact storage. Such an antenna 134, mast 132 and assembly 148 are further described in U.S. Patent Application Serial No. 13/340,456, filed December 29, 2011, for Antenna Support Structure, the entire disclosure of which is incorporated by reference herein.

In the illustrated robot 100, many features of the robot can be designed to absorb an impact that the robot may receive if dropped or thrown. For example, antenna mast 132 can be bendable and resilient to absorb impact by folding. In addition, wheels 106, 118, 130 and 136 can have spiral spokes to absorb radial impact and/or slotted spokes to absorb axial impact. The flippers, such as flipper 110, can be attached to the rear axle 142 by a four-bar linkage 108 allowing the flipper to better absorb side impact. Such wheels and flippers are further described in U.S. Patent Application No. 13/340,957, filed December 30, 2011, for Resilient Wheel Assemblies, which is incorporated by reference herein in its entirety. Resilient wheel assemblies in accordance with the present teachings are discussed hereinbelow in greater detail.

Embodiments of the robot 100 can include cameras 114, 124 on the sides, front, and/or back of the robot, the cameras 114, 124 providing an operator with situational awareness. Each camera 114, 124 can optionally be provided with an IR LED (e.g., an IR LED on each side of the camera) for low-light operation. Exemplary front camera 124 with IR LEDs 122 and 126 and exemplary left-side camera 114 with IR LEDs 112, 116 are illustrated in FIG. 1.

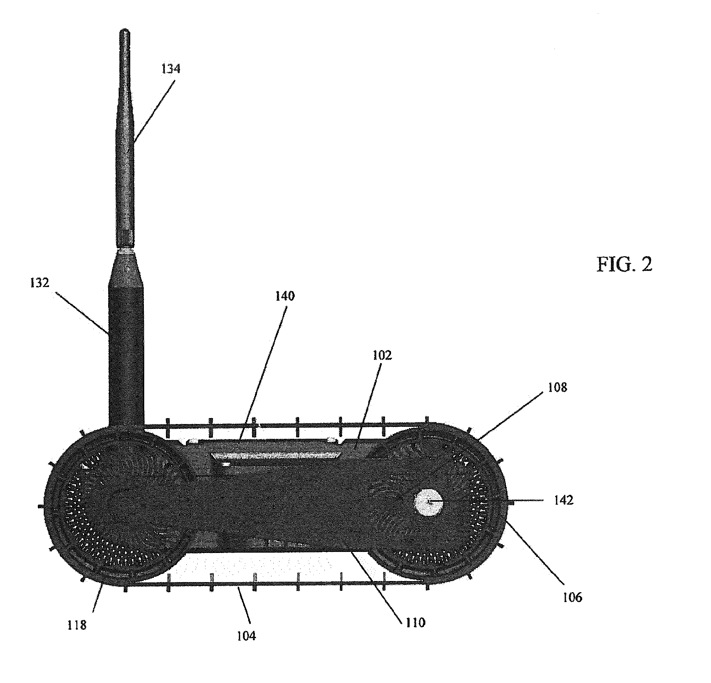

The left flipper 110 in FIG. 1 is illustrated in its stowed position, such that it extends from the rear axle 142 of the robot 100 toward the front axle 144 of the robot. In certain embodiments of the present teachings, the flipper 110 covers the side camera 114 when in a stowed position (see FIG. 2), which could potentially cause an operator to lose some situational awareness when the flipper rests in or passes through the illustrated stowed position. Such loss of situational awareness can be substantially prevented by operating the vehicle with the flippers in a position that does not cover the side cameras. Certain embodiments of the present teachings contemplate providing a cutaway, hole, or transparent portion for flipper 110, configured to prevent the flipper from blocking at least a portion of the field of view of the side camera 114, IR LED 112, 116, and/or a wall-following sensor located adjacent thereto, thereabove, or thereunder.

The antenna mast 132 (or in some embodiments, antenna assembly 148) being bendable and resilient additionally allows the robot to drive under objects with a clearance less than its antenna height, and perform a self-righting maneuver more easily because the flippers need not overcome the height of the mast to flip the robot over. Further, the height of the antenna assembly 148 (i.e., the height of the antenna mast 132, the antenna 134, or both) can be selected to allow a desired communication range with the operator control unit, which, for example, can be a 200 meter-to-300 meter range. In certain embodiments of the present teachings, the antenna assembly 148 can be positioned toward a front end of the robot to facilitate stair climbing, so that the weight of the antenna moves the center-of-gravity of the robot forward, helping the front end of the robot tip forward as, for example, it surmounts the stair riser. The size of the robot can be configured to accommodate the size of the antenna. For example, the robot can be sized so that the antenna can rest on and be supported on a top surface 146 of the robot housing 102. In various embodiments, the top surface 146 of housing 102 can be lower than the top of tracks 104 and 138 to form a gap above the top surface 146 and between the tracks 104, 138. In such embodiments, the antenna can bend or fold to fit within a gap between the top of the housing and the tracks, so that the antenna, when folded over, is no higher than the top of the tracks 104, 138. Further, the antenna can be sized so that, when folded over, it does not extend beyond the back of the housing 102. This can protect the antenna during storage, during rollover, or when the robot is passing under a low object.

FIG. 1 also illustrates cliff sensors 120, 128 under the camera 124 and IR LEDs 122, 126 on the front of the robot. Cliff sensors 120, 128 can also be provided at the rear of the robot, particularly if the robot can drive in a reverse direction. In various embodiments, a wall-following sensor can also be provided on each side of the robot, for example under each side camera 114 and side IR LEDs 112, 116.

In certain embodiments of the present teachings, the robot can have a front-to-back overall length of about 260 millimeters. The distance between the front and rear axles can be about 165 millimeters. The height of the robot excluding the antenna can be about 95 millimeters. The height of the robot including the antenna can be about 307 millimeters, indicating that embodiments of the antenna can extend about 211 millimeters above the robot, although the actual height of the antenna in the illustrated embodiment is greater than 211 millimeters because the antenna is slightly recessed below the top track. The width of the robot can be about 224 millimeters between flipper external surfaces and about 204 millimeters between track outer edges.

FIG. 2 is a side view of the embodiment illustrated in FIG. 1, illustrating an exemplary size and shape of the flipper 110 and its four-bar linkage 108 where it mounts to the rear axle 142 of the robot 100. FIG. 2 also illustrates that, in a stowed position, the flipper 110 can cover the side camera 114 and IR LEDs 112, 116. A wall-following sensor, when available on the robot, may also be covered by flipper 110. The present teachings contemplate flippers comprising a necked taper or other accommodation (not shown) to reduce coverage of the cameras and/or wall sensors.

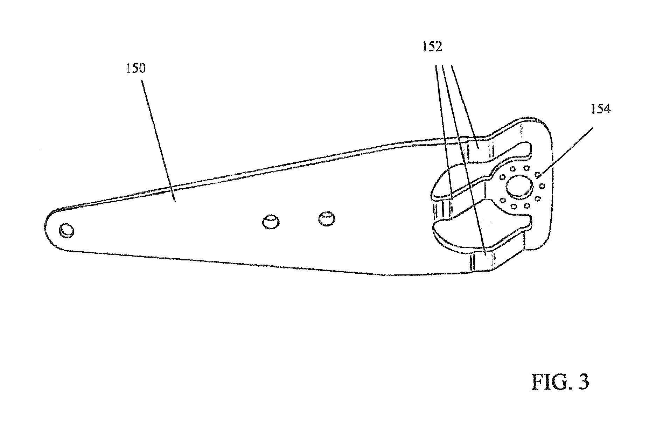

FIG. 3 is a perspective view of an exemplary embodiment of a flipper structure in accordance with the present teachings. The flipper structure may comprise, for example, an arm 150, a plurality of legs 152, and an attachment base 154. As shown in FIGS. 1 and 2, for example, when the flipper structure is attached to a remote vehicle, such as, for example, a remote vehicle 100, the flipper 110 may extend longitudinally along the side of the remote vehicle 100. The legs 152 and base 154 comprise a four-bar linkage which can flex to allow an outer surface of the flipper 110 to remain substantially parallel to the robot even when the flipper 110 deflects in response to a side-impact force. Flipper structures and linkages are further described in U.S. Patent Application No. 13/340,957, filed December 30, 2011, for Resilient Wheel Assemblies, which is incorporated by reference herein in its entirety.

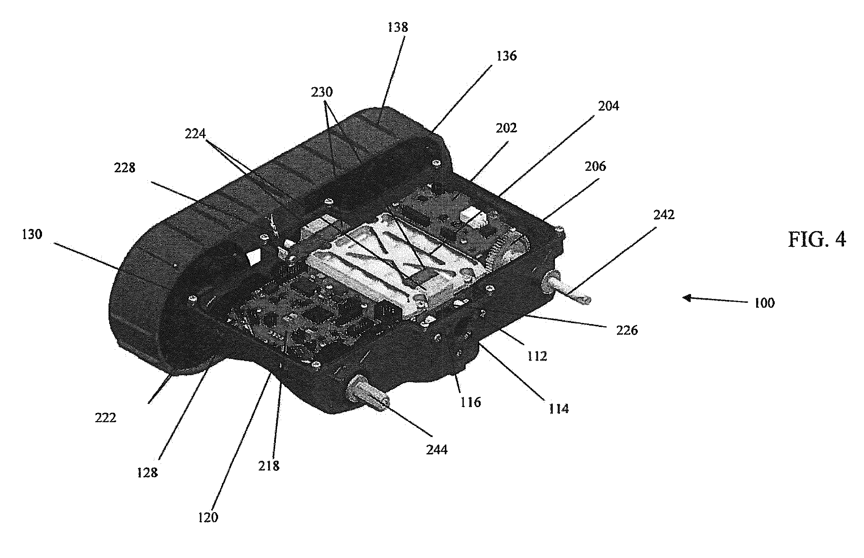

FIG. 4 illustrates a side perspective view of the robot embodiment of FIG. 1, with the cover, antenna, left flipper, left wheels, and left track removed to show an interior of the robot. A battery (not visible in FIG. 4) can be centrally located and housed, for example, between a bottom of the robot and battery cover 204. The battery can be, for example, a 14.8V 5.6Ah (82.88Wh) Lithium-ion battery with a PCB, for example an 8-cell battery. The battery can weigh, for example, about 385 grams (13.6 ounces). The present teachings contemplate utilizing any battery that can provide enough power to maintain the power needs of the robot for at least the desired mission length of about 6-10 hours, and that is small enough to accommodate the small form factor of the robot.

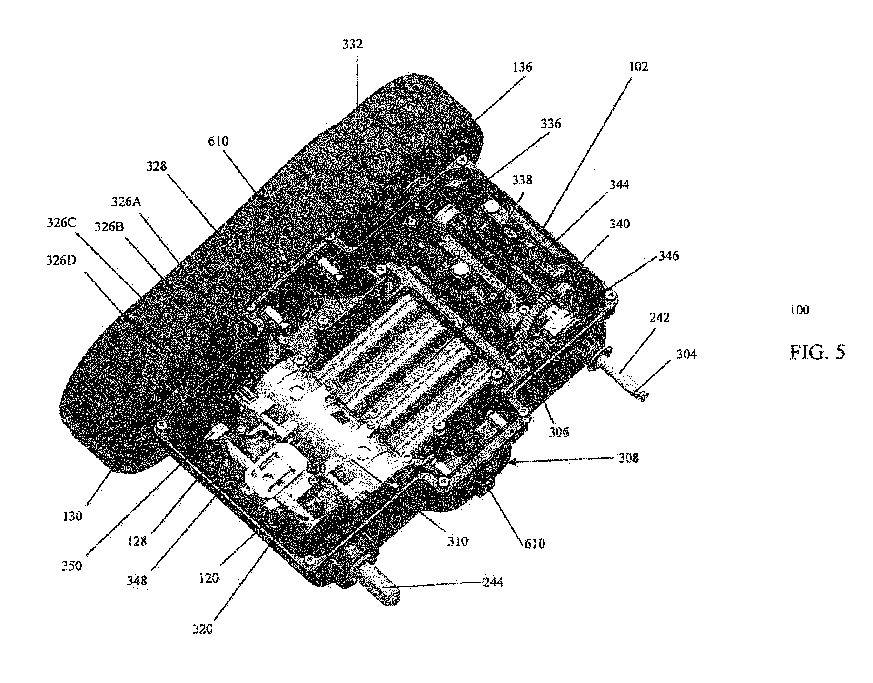

FIG. 4 also illustrates a mobility board (PCB) 218 located at a forward position in the robot 100. The mobility board 218 can control motors (for example, within casing 310 illustrated in FIG. 5) to drive the front axle 244, and can receive input from sensors such as one or more gyros, accelerometers, sensors for a side-of-shaft magnetic encoder for odometry, temperature sensors for each front wheel drive motor, and power monitoring electronics. The mobility board 218 can be coupled to cliff sensors 120, 128, which are illustrated on a bottom portion of the front of the robot housing.

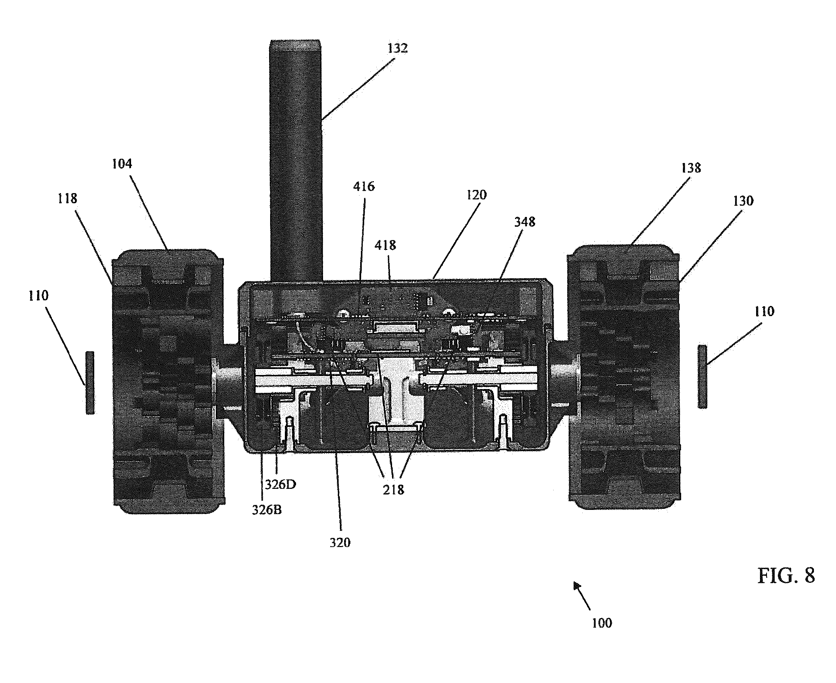

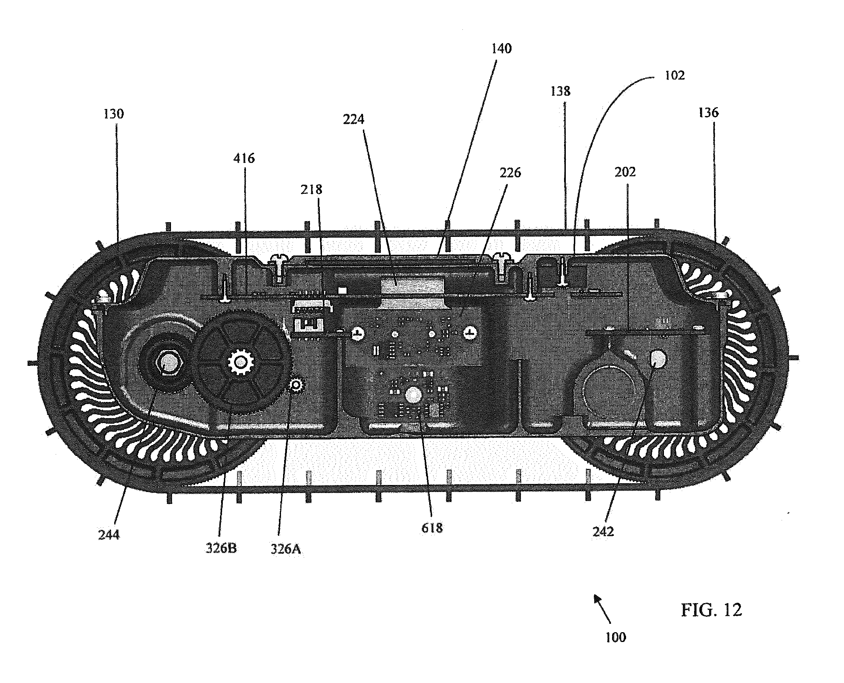

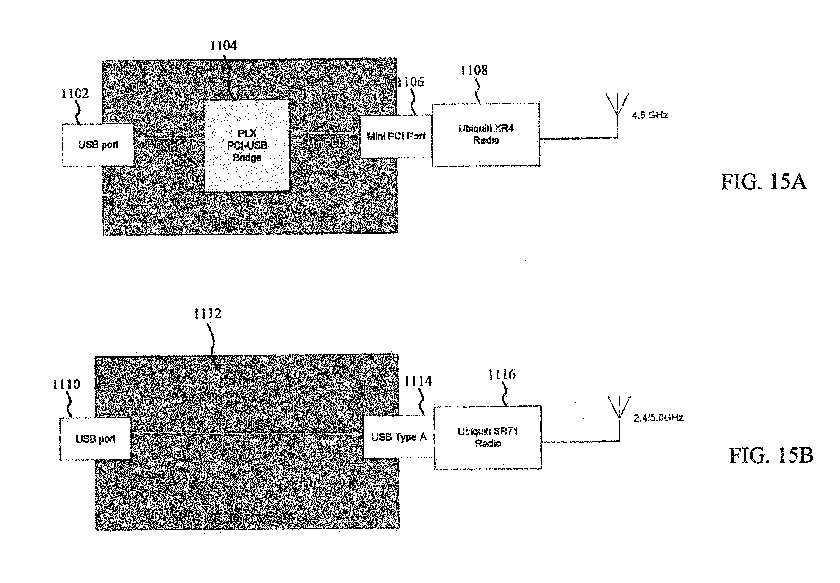

A flipper board (PCB) 202 can be provided on a rear side of the battery cover 204. The flipper board 202 can control a flipper motor and can also receive input from, for example, temperature sensors monitoring a flipper motor temperature and a temperature of a shell (housing) of the robot. An application board (such as application board 416 in FIG. 8) can be provided above the battery cover 204. The application board can be seen in cross section in FIGS. 4, 6, and 9, and is illustrated schematically in FIG. 15. The application board 416 can be connected to the mobility board 218 and the flipper board 202, and also to camera PCBs (such as camera PCB 418 in FIG. 8 and 626 in FIG. 12). For example, flexible cables 224 and connectors 230 can be used to connect the camera PCBs 226, 228 to the application board.

Front axle 244 and rear axle 242 are illustrated exposed in FIG. 4, and drive gear assembly 222 for the front wheels is partially visible on a side of the mobility board 218. A portion of the flipper clutch 206 is illustrated in FIG. 4 on a side of the flipper board 202, and is further described below.

FIG. 5 illustrates a top perspective view of the embodiment of FIG. 1, with the cover, antenna, certain internal elements like printed circuit boards (PCBs) and the battery, left flipper, left wheels, and left track removed. Cliff sensors 120, 128 and cliff sensor PCBs 320, 348 can be seen at a front of the housing 102. Behind the cliff sensors 120,128 is a casing 310 for two front wheel drive motors. The casing 310 also supports gear 326A of each of the drive gear assemblies 326 (comprising drive gears 326A-326D) for a front wheel. Various embodiments of the present teachings can include a right drive gear assembly and a left drive gear assembly. Each drive gear assembly 326 can be used to translate motor rotation to a respective front wheel 130 with proper speed reduction, as would be understood by those skilled in the art.

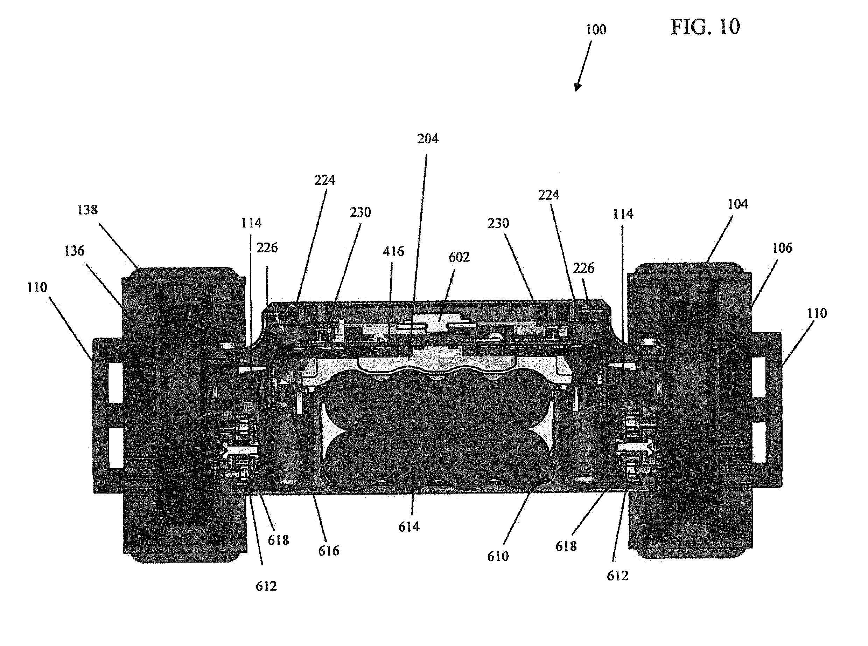

Behind the front wheel drive motor casing 310 is a contoured portion 344 of the housing bottom that can be used to support a battery (such as battery 614 in FIG. 10). In an embodiment, the contours 344 can be arranged to accommodate an 8-cell battery having four cells supported by a bottom of the housing 350. One skilled in the art will understand, however, that the bottom of the housing 350 need not be contoured to the battery, or can be contoured to accommodate other battery shapes. The contours 344 can assist in dissipating heat from the battery, because the contours increase a surface area of the housing that can be used for heat dissipation. A wall (610 in FIG. 10) on either side of the contoured bottom portion of the housing can optionally be provided to hold the battery securely in the housing.

On an outside of each battery-securing wall 610 are the camera, IR LEDs, and wall-following sensors 308. The housing 102 can protrude along the side to provide space for side-located cameras, IR LEDs, wall-following sensors 308, and their PCBs 328. The housing protrusion preferably can fit within a cavity bounded by the wheels 106, 118, 130, and 136 to the front and rear (that is, by wheels 106 and 118 on one side of the robot, and by wheels 130 and 136 on another side of the robot), by the track 138 on the top and bottom, and/or by a flipper (when in its stowed position) on the outside. For impact protection, the protrusion can be sufficiently low-profile to be protected at least in part by the wheels, track, and flipper if the robot is thrown or dropped.

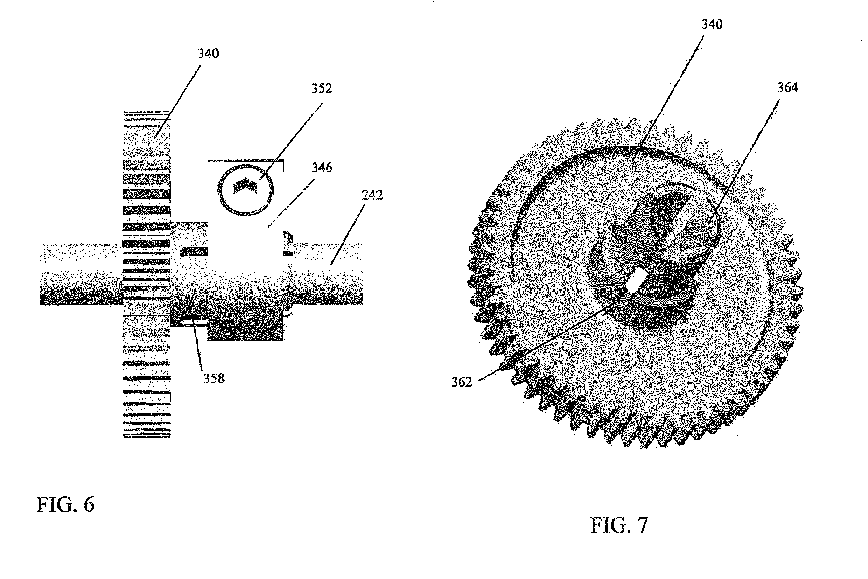

Behind the contoured bottom portion 344 of the housing is a flipper motor 338 attached by a small gear 306 to a flipper drive gear 340. The flipper drive gear 340 can include a friction-based slip clutch as described hereinbelow. Referring to FIGS. 6 and 7, in certain embodiments of the present teachings, the flipper drive gear 340 includes a slotted cylindrical protrusion 358 (comprising protrusions 364 and slots 362) that surrounds the rear axle 242. The slotted cylindrical protrusion 358 can be surrounded by a collar 346 that can be tightened by tightener 352 to compress the slotted cylindrical protrusion 358 to clamp the gear 340 to the rear axle 242, for example, at a predetermined torque corresponding to a slip torque. The slots in the protrusion 358 can facilitate clamping by the collar, because they allow the protrusion 358 to shrink around the axle 242. The flipper drive gear 340 can comprise, for example, brass or another suitably strong material such as certain metals, plastics, or composites.

In the illustrated exemplary embodiment of FIG. 5, on a side of the rear axle 302 opposite the flipper drive gear 340 is a side-of-shaft magnetic encoder 336 to track a rotational position of the flipper 110. The magnetic encoder 336 can be connected to a sensor, for example, on flipper board (PCB) 202 (see FIG. 2). For simplicity and space savings, the respective sensors for the flipper position magnetic encoder 336 and an odometry magnetic encoder 350 can be located, for example, adjacent to associated encoders on the flipper board 202 and the mobility board 218, respectively. Rear axle 242 can also comprise an offset flat surface 304, which can engage with flippers 110 to rotate the flippers about the rear axle 242.

FIG. 8 is a cross sectional view of the robot of FIG. 1, taken through the front axle drive gear 326B and looking toward a front of the robot. Application board 416 is disposed within housing 102 above mobility board 218. Front camera PCB 418 is disposed within housing 102 forward of the application board 416. The front cliff detector PCBs 320, 348 can also be seen disposed forward of the application board 416 within housing 420.

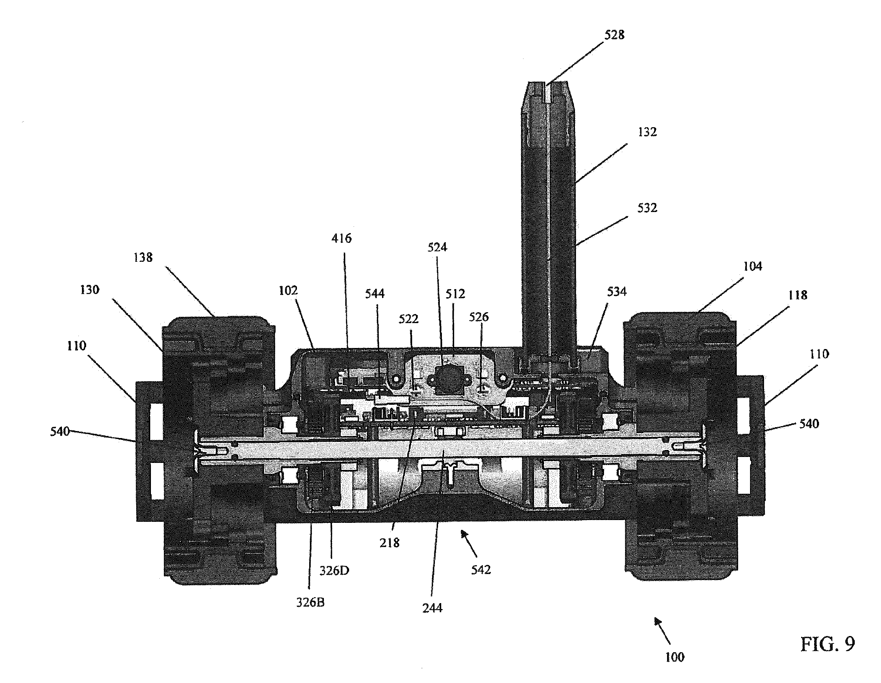

FIG. 9 is a cross sectional view of the robot embodiment of FIG. 1, taken through the front axle 244 and looking toward a rear of the robot. The rear camera 524, camera PCB 512, and IR LEDs 522, 526 are disposed within housing 102 rearward of the mobility board 218 and the application board 416, which are illustrated in cross section. The front axle 244, the drive gears 326B and 326D, the front wheels 118, 130, tracks 104, 138, and fasteners 540 can be seen in cross section. The fasteners 540 couple the wheels 118, 130 to the front axle 244. In the illustrated exemplary embodiment, a bottom surface of the housing raises up in the center 542 under the front axle. The antenna mast 132 and its radio frequency (RF) connector 528 can be seen in cross section, along with the RF cable 532 and its connector 544. The RF cable 532 connects the antenna (not illustrated) to the radio. An example of the radio 924 is illustrated in FIG. 9. In the illustrated embodiment, the antenna mast 132 is mounted in a recessed area 534 of the top surface of the housing 102. This can protect the mounting area of the antenna mast 132 from impacts to a top surface of the robot. The mounting area may be less pliable than the mast and therefore more likely to be damaged upon impact because it cannot bend to absorb forces. If, for example, the robot rolls over, the antenna mast 132 can bend and the recessed area 534 can substantially protected the antenna mount from direct impact forces due to its placement in the recess. One skilled in the art will understand that the antenna mast 132 need not be mounted in a recessed area of the housing and can be mounted to a top surface of the housing, within the housing and protruding through an aperture in a top surface of the housing, etc.

FIG. 10 is a cross sectional view of the robot of FIG. 1, taken through the side cameras 114 and looking toward a rear of the robot. The cameras 114, camera PCBs 226, wall-following sensors 612, and wall-following sensor PCBs 618 can be seen in cross section on each side of the robot. In certain embodiments of the present teachings, the wall-following sensor PCBs 618 will be connected to mobility board 218. The camera PCBs 226 can be connected to the application PCB 416 via, for example, flexible cables 224 extending from the camera PCBs 226 on each side of the robot to connectors 230 that are connected to the centrally-located application board 416. The battery cover 204 can be seen in cross section under the application board 416, and a cross section of a sound exciter 602 can be seen above the application board. Battery 614 can be provided below and in contact with battery cover 204. Battery cover 204 can be made of an appropriate heat conducting material to conduct heat away from battery 614, and additionally can be made of a material that can withstand the heat produced by the battery and the robot in a variety of environmental conditions and for a variety of tasks. In addition, battery cover 204 can include contouring or other shaping to accommodate battery 614 to increase the surface area of contact between the battery 614 and battery cover 204, to better conduct heat from the battery 614. The present teachings contemplate utilizing a variety of rechargeable and non-rechargeable power sources in addition to, or instead of, the illustrated battery 614.

Various embodiments of robot 100 in accordance with the present teachings can produce sound. Sound can be produced in a number of ways, for example using a conventional small speaker or by the illustrated sound exciter 602. Sound exciter 602 can turn virtually any solid object into a speaker by vibrating it at speeds of up to 20,000 cycles per second (Hz). The solid object preferably has a large, flat surface area. In the illustrated embodiment, a payload expansion port cover (such as cover 140) can serve as the surface vibrated by the sound exciter 602 to produce sound. However, if the payload expansion port cover is removed to allow attachment of a payload, another suitable surface can be provided for vibration by the sound exciter 602. A sound exciter can use less energy than a conventional speaker to produce a suitable sound. The sound exciter can be used to provide a speaker that is sealed from debris and liquid when the chassis is sealed, for example when the payload expansion port cover is sealed to the upper portion of the chassis in a manner described in an exemplary embodiment hereinbelow.

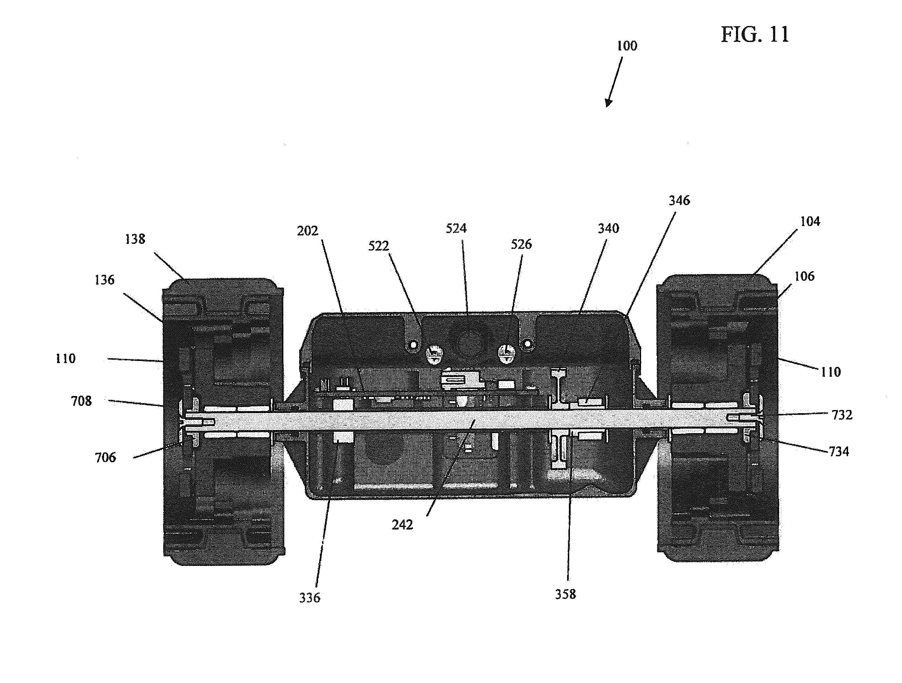

FIG. 11 is a cross sectional view of the robot of FIG. 1, taken through the rear axle 242 and looking toward a rear of the robot. A cross section of the rear axle 242, tracks 104, 138, rear wheels 106, 136, and flippers 110 can be seen, as well as inserts 706, 734 and fasteners 708, 732 (which can be the same as fasteners 540 shown in FIG. 9), which couple the wheels and flippers to the rear axle 242. In certain embodiments, the rear axle 242 does not drive the rear wheels 106, 136 and thus the rear wheels can be free to rotate about the rear axle 242. However, the rear axle 242 can drive the flippers 110. The flippers 110 can be driven, for example, by engagement of a small offset flat surface 304 on each end of the rear axle 242 engaging a complementary offset flat surface on an insert 706, 734 that attaches to each flipper base in a manner set forth in the disclosure of U.S. Patent Application No. 13/340,957, filed December 30, 2011, for Resilient Wheel Assemblies, which is incorporated by reference herein in its entirety.

Magnetic encoder 336 tracks a rotational position of the flippers 110, and is illustrated proximate to the flipper board 202. In addition, the flipper drive gear 340 and its cylindrical protrusion 358 can be seen in cross section, along with the collar 346 that can be used to tighten the cylindrical protrusion 358, and therefore the flipper drive gear 340, to the rear axle 242.

FIG. 12 is a cross sectional view of the robot of FIG. 1, taken through a portion of a right-side drive gear assembly and looking toward a right side of the robot. The rear axle 242, the front axle 244 and two of the front wheel drive gears 326A and 326B can be seen. In addition, the flipper board 202, the mobility board 218 and the application board 416 can be seen in cross section. The payload expansion port cover 140 at the top of the robot housing 102 can also be seen in cross section. A side camera PCB 226 and a wall-following sensor PCB 618 can be seen, along with a flexible cable 224 connecting at least the camera PCB 226 to the application board 416.

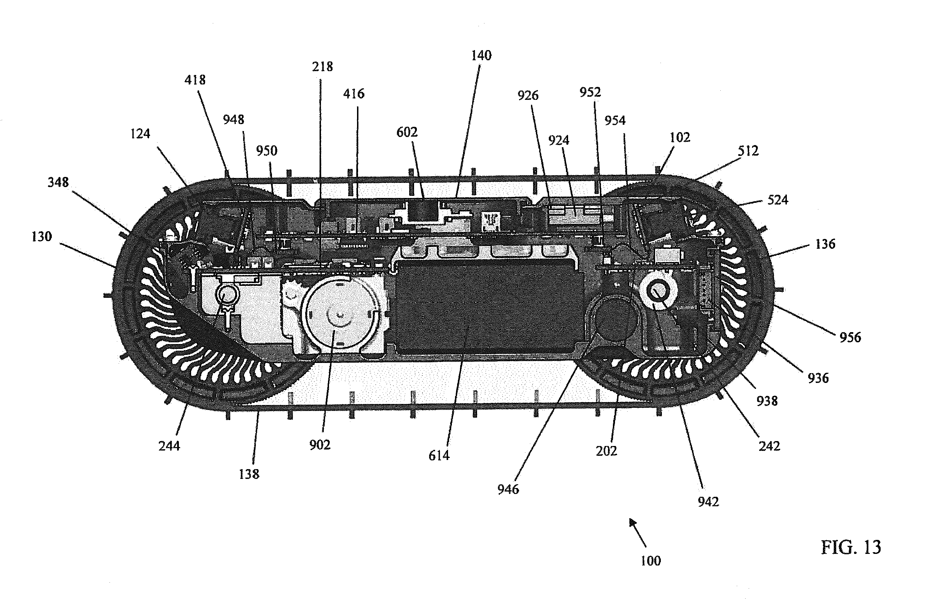

FIG. 13 is a cross sectional view of the robot of FIG. 1, taken midway through the robot and looking toward a right side of the robot. A drive motor 902 for the right front wheel 130 can be seen in a location forward of the battery 614. The flipper drive motor 946, flipper board 202, rear axle 242, and rear camera 524 can be seen in cross section at a location rearward of the battery 614. It can be seen by comparing the side cameras 114 illustrated in FIG. 10 to the front and rear cameras 124, 524 illustrated in FIG. 13, that the angles of the front and rear cameras in the illustrated embodiment are aimed higher than the side cameras. For example, as illustrated in FIG. 10, side cameras 114 can be aimed substantially parallel to, for example, the front and rear axles. By comparison, front and rear cameras 124, 524 can be aimed above a plane described by the front and rear axles. Exemplary connections of the front camera 124 and rear camera 524 to the application board 416 (e.g., via a flexible cables 948, 954 and connectors 950, 952) are shown below a forward and a rearward end of the application board.

In the illustrated embodiment, a power ON/OFF switch 938 can be provided rearward of the rear axle 940, along with a charge port 936 and charge portion PCB assembly 956. One skilled in the art will understand that the charge port 936 and power switch 938 can be located in other locations on the remote vehicle. In the illustrated exemplary embodiment, a radio 924 is provided above the application board 416 between the rear camera 524 and the sound exciter 602. In the illustrated embodiment, the radio 924 is mounted to the housing 102 via thermal pads 926 that can conduct heat from the radio 924 to the housing 102 to help dissipate heat produced by the radio during operation. Forward of the radio is the sound exciter 602, which is located directly under the payload expansion port cover and exciter surface 140. The payload expansion port cover 140 can be vibrated by sound exciter 602 to produce sound.

The radio 924 can be, for example, an 802.11 family digital radio, with 100 mW transmit power, operating on 2.4 or 4.9 GHz. 802.11 family digital radios include digital radios that can operate in a variety of frequency ranges, and in embodiments can be capable of maintaining bidirectional data connections to multiple peers at the same time. In embodiments, the robot 900 can establish and maintain connections up to 6 Mbps through radio 924. The radio is connected in a known manner with the antenna discussed hereinabove.

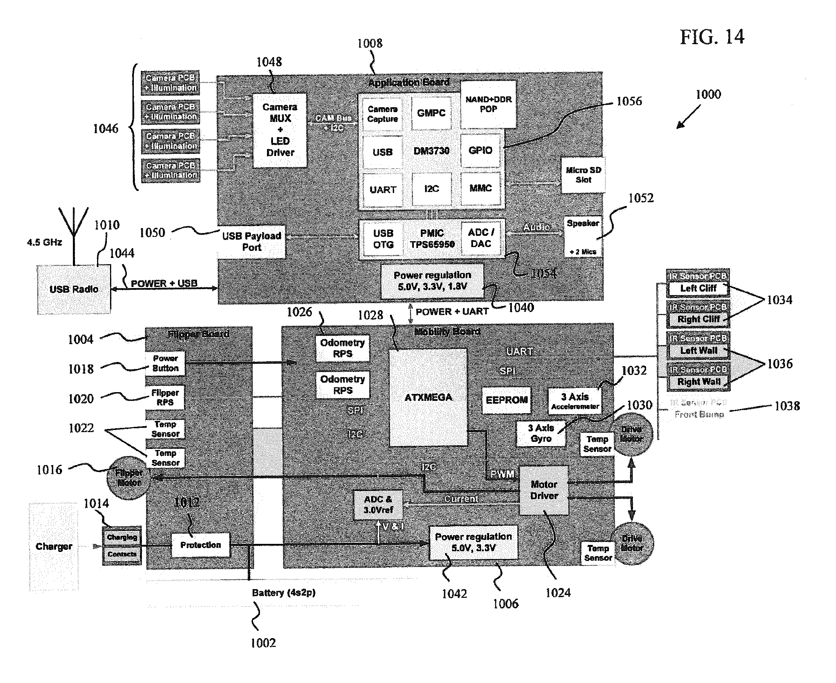

FIG. 14 is a schematic diagram of an exemplary embodiment of a robot system 1000 in accordance with the present teachings. The battery 1002 is connected directly or indirectly to the flipper board 1004, the mobility board 1006, the application board 1008, and the radio 1010 to provide component power. A charge port 1012 is connected to charging contacts 1014 on the flipper board 1004. The flipper motor 1016 is connected to the flipper board 1004, as is the power button 1018, temperature sensors 1022, and a flipper position sensor 1020 that reads a magnetic flipper position encoder such as, for example, magnetic flipper position encoder 704 or 942. On the mobility board 1006, the motor driver 1024 can send a signal via the flipper board 1004 to the flipper motor 1016 to drive the flipper motor 1016.

The mobility board 1006 can also comprise one or more odometry position sensors 1026 that read a magnetic odometry encoder, and a microcontroller 1028 such as, for example, a ATXMEGA microcontroller or similar microcontroller or microprocessor to control operations of the robot system. Inputs to the microcontroller 1028 can include a flipper position from flipper position sensor 1020, temperature information from temperature sensors 1022 (e.g., temperature of the housing, each drive motor, and the flipper motor), power level information from battery 1002, and information from such sensors as a gyro 1030 and an accelerometer 1032. The microprocessor 1028 can also receive data from cliff sensors 1034 and wall following sensors 1036 (e.g., via a universal asynchronous universal transmitter (UART)). The microprocessor 1028 can be coupled with a memory device, such as an EEPROM or other similar memory device, to store data and/or machine-readable instructions for retrieval and execution by microprocessor 1028. In the illustrated embodiment, a front bump sensor 1038 can also be included to provide information to microcontroller 1028. Power can be provided to mobility board 1006 from battery 1002 through appropriate power connections, and the power can be routed through power regulator 1042 for voltage regulation.

The mobility board 1006 is connected to the application board 1008 and can send power and data thereto through appropriate power and data connections. Power sent to the application board 1008 can pass through a power regulator 1040. A power and USB connection 1044 is provided between the radio 1010 and the application board 1008. Cameras 1046 (e.g., a front camera, rear camera, left side camera, and right side camera) can also be connected to the application board 1008. Cameras 1046 can be, for example, connected to the application board 1008 via a camera multiplexer (MUX) and LED driver 1048, which can also drive illumination provided for the cameras.

The application board 1008 can also include a USB payload port 1050 that can be located under a payload expansion port cover such as the payload expansion port cover 140 illustrated in FIGS. 1 and 12. The payload port 1050 and a sound exciter 1052 can connect to a power management integrated circuit 1054, such as the illustrated PMIC circuit. In an alternative embodiment, instead of sound exciter 1052, the robot can comprise an audio system of one or more speakers and one or more microphones in position 1052. The illustrated application board 1008 also includes a processor 1056 such as the illustrated digital media processor, for example the illustrated DM3730, including camera capture, memory such as NAND +DDR PoP, connection for an SD memory card, etc. It will be appreciated that any appropriate processor can be used in the place of processor 1056.

FIGS. 15A and 15B provide two exemplary communication PCB diagrams for PCBs that may be used in connection with the embodiments of the present teachings, illustrating two PCBs for the communications module/card to support multiple radio options. A communication PCB illustrated in FIG. 15A comprises USB port 1102, PCI-USB bridge 1104, PCI port 1106, and radio 1108. USB port 1102 enables a connection with, for example, the application board. Bridge 1104 enables translation between communication formats, for example between PCI and USB formats. PCI port 1106 communicates with radio 1108, which can be any appropriate radio to enable wireless communication, for example, a Ubiquity XR4 radio. In contrast with FIG. 15A, a communication PCB illustrated in FIG. 15B can utilize a USB connection between USB port 1110 and radio 1116, obviating a bridge or similar device to communicate with radio 1116.

The use of an additional PCB for radio communication is optional, and in embodiments a USB port can be employed on the application board, so that a separate communication PCB is not needed. If additional radio options are desired, the present teachings encompass utilizing the illustrated communication PCBs. Alternatively, or additionally, space can be reserved on the application board to accommodate a USB radio. In embodiments, space is provided on the application board for a relatively large USB radio (i.e., larger than a presently typical WiFi radio).

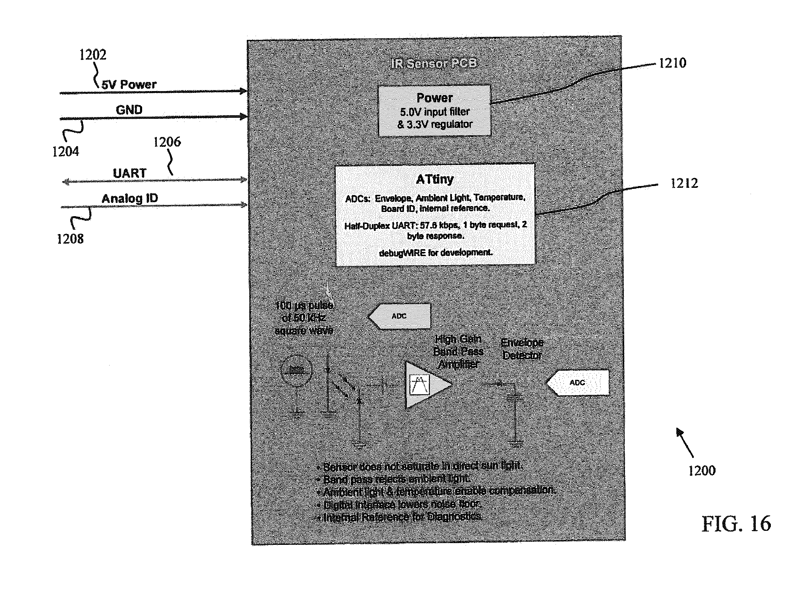

FIG. 16 illustrates a diagram of an exemplary infrared (IR) sensor PCB 1200 for wall-following sensors or cliff detection sensors (both of which are typically IR sensors). Analog data 1208 is received by the PCB and sent to, for example, a mobility board 1006 as illustrated in FIG. 10. Power 1202 is also received from a power supply, such as battery 1002 as illustrated in FIG 14, through an appropriate connection also including a ground 1204. A power filter and regulator 1210 can be included on the PCB 1200, as well as a microcontroller 1212, to control the operation of IR illuminators and sensors. In the illustrated exemplary embodiment, the microcontroller 1212 includes an ATtiny microcontroller. IR sensor PDC 1200 can comprise one or more IR sensors and associated circuitry. In certain embodiment of the present teachings, an IR sensor does not saturate in direct sunlight when a band bass filter is utilized to reject ambient light, and further ambient light and temperature enable compensation, which may be performed by microcontroller 1212. Further, a digital filter such as a digital interface can be utilized to lower a noise floor. Thus, using the illustrated IR sensor PCB, the IR sensor PCB can provide a signal that is filtered to be substantially noise-free. An internal reference can also be included for diagnostic purposes. In various embodiments, an analog signal processor is also provided in communication with the microcontroller. In various embodiments, for cliff sensing and wall following, 2 LEDs operate in a known manner at a modulation rate to sense an object.

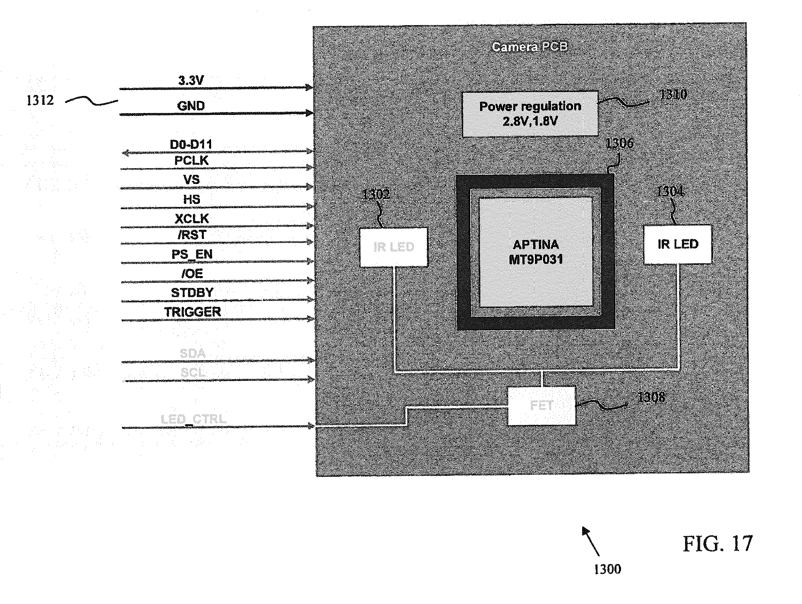

FIG. 17 is a diagram of an exemplary camera PCB 1300. Two IR LEDs 1302, 1304 are illustrated on either side of digital image sensor 1306, in communication with a field-effect transistor (FET) 1308. A digital image sensor 1306 is also provided on the PCB, for example an APTINA CMOS digital image sensor. Power regulation 1310 can regulate voltage provided to the PCB via power supply 1312, which can be provided through an appropriate power connection, including a ground. In embodiments, the camera PCB 1300 can receive power and ground from the application board and can send image data to the application board. The camera PCB can also receive LED and a variety of other control signals from the application board and other information, as illustrated.

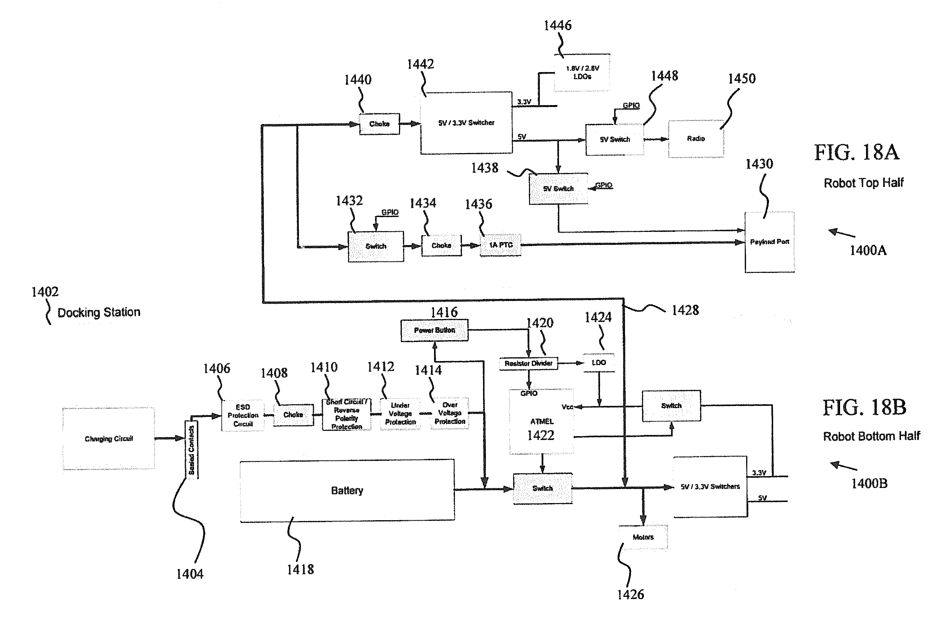

FIGS. 18A and 18B illustrate an exemplary power system that shows the top half 1400A and bottom half 1400B of a robot system. A docking station 1402 is shown with a charging circuit and an engagement path to sealed contacts 1404 on the robot bottom half 1400B. Power from the charging circuit of the docking station 1402 can pass through an electrostatic discharge diode (ESD) protection circuit 1406, a choke 1408, a short circuit/reverse polarity protection 1410, an under voltage protection 1412, and an over voltage protection 1414, to charge the battery 1418. A power button 1416 can also be connected to the battery 1418 to send power to a resistor divider 1420 that divides power between a microcontroller 1422 (which can be, e.g., an ATMEL microcontroller or other appropriate microprocessor or microcontroller) and a low-dropout regulator (LDO) 1424 that also channels power to the microcontroller 1422. The microcontroller 1422 controls the illustrated motors 1426 (e.g., the flipper motor and the front wheel drive motors).

The illustrated robot top half 1400A comprises a radio 1450 and a payload port 1430, as well as the supporting switches 1432,1438, 1442, 1448, chokes 1434, 1440, voltage regulators (LDOs) (such as LDO 1446), and resistors (such as thermistor 1436), which can communicate with the robot bottom half 1400B by appropriate connectors 1428.

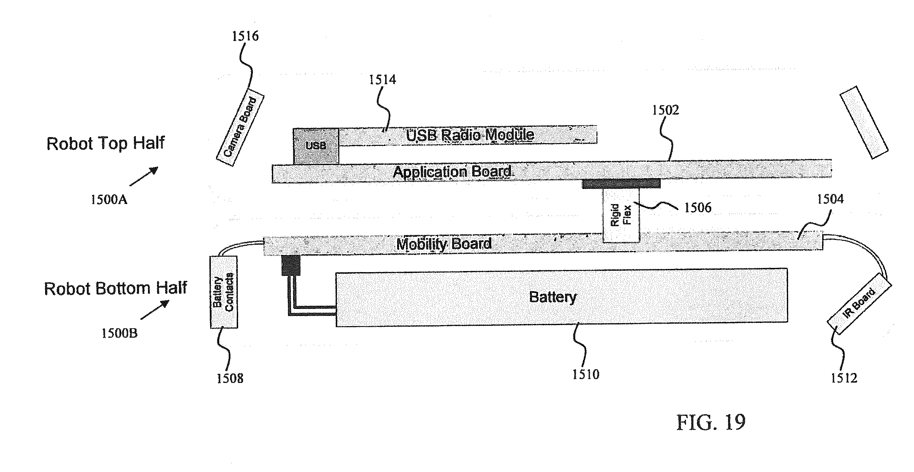

FIG. 19 illustrates an exemplary interconnection of robot PCBs such as application board 1502 and mobility board 1504, dividing the top half 1500A and the bottom half 1500B of the robot for illustrative purposes. The robot bottom half 1500B includes battery contacts 1508 and a battery 1510 connected to the mobility board 1504 and to one or more IR boards 1512 (e.g., boards for the wall-following and cliff detection IR sensors). A rigid flex connector 1506 connects the mobility board 1504 to the application board 1502. An example of a rigid flex connector 1506 is flexible cable 224 illustrated in FIG. 2. The application board 1502 is connected to the radio 1514 through, for example, a USB connection, and can also be connected to the camera boards illustrated in the top half 1500A.

Regarding the relative robot and antenna sizes, from experimentation (or calculation), a necessary antenna height can be determined that will prevent excessive signal loss, such as Fresnel loss, at a desired maximum operational distance. In embodiments, an antenna height can be determined to maximize a first, second, etc. Fresnel zone determined from the radiation of signals from the antenna, to minimize the effect of out-of-phase signals and other obstacles which may reduce received signal strength of signals from the robot. Additionally, given the determined antenna height, the robot should be sized to provide a sufficient base for the antenna relative to its size and weight. A secondary and optional consideration regarding relative robot size is that the robot should be large enough to allow the antenna to fold flat, for example diagonally, across a top surface of the robot, so that it can be conveniently and safely stowed. A longer antenna might require an alternative configuration either to wrap around the body, or have a design such as a z-fold or a more complex design to permit the mast to collapse or fold for stowing, yet stand up during routine operation. In addition, the robot must include a battery large enough to support the power draw of the radio over the entire mission duration along with the expected robot driving profile. The battery size and weight can add to the size and weight of the robot.

In certain embodiments of the present teachings, sufficient room is provided for the antenna to fold over and fit within a gap or crush volume between a top surface of the tracks and a top surface of the housing, the gap or crush volume being bounded by a plane across the top of the tracks and the top surface of the housing. Certain embodiments may not provide enough room for the antenna to fold over and fit inside the crush volume (i.e., the gap) which can be expected from a 15ft drop of the robot (which volume may be reduced by compression of the wheels, tracks, and other components upon impact), and depending on how the antenna is folded, the antenna components could be subject to damage from pinching or impact from a sufficiently long fall. Accordingly, the present teachings contemplate embodiments providing enough room for the antenna to fold over and fit inside the gap between the top of the track and the top surface of the housing and be protected from damage which may result from a long fall.

In various embodiments of the present teachings, the height, length, depth a placement of the wheels, flippers, and tracks (e.g., where the tracks are the tallest feature on the robot other than the antenna) allows the robot to survive drops in random orientations from 5 meters onto concrete. To survive such drops the wheels are used as energy absorbers and thus all of the features on the robot housing (except for the bendable, resilient antenna) are recessed below the outline of the wheel, allowing space for the wheels to compress before the housing hits the ground.

An exemplary process for robot stair climbing using a remote vehicle such as a small unmanned ground vehicle is set forth in U.S. Patent Publication No. 2010/0139995, filed December 9, 2008, titled Mobile Robotic Vehicle, the disclosure of which is incorporated herein by reference in its entirety. The disclosed climbing methodology in the '995 publication applies to a robot of the size and weight class defined herein on conventional stairs. Conventional stair are defined as having a riser height of about 7.5" to about 8.0".

### Operator Control Unit

Embodiments of the present teachings also provide a rugged and water resistant operator control unit (OCU) that is preferably of a hand-held size and can optionally be worn on the user's wrist. Embodiments of the OCU should be daylight readable, preferably backlit for reading at night, and have a 200-meter radio range to the robot. In various embodiments, the OCU can be provided with an attachment device so that the OCU can be affixed to an operator's wrist or arm, and thus be "wearable". The OCU preferably does not require users to wear wires or other boxes, so that it is easy to put on and take off. Various embodiments of the OCU also include a suitable built-in radio for communication with one or more associated remote vehicles. The OCU preferably has a battery life that at least matches that of the robot(s) it is intended to control, for example about 8 hours.

The Exemplary illustrated OCU embodiment has a curved (recessed) back surface, which helps the OCU accommodate the curve of an operator's forearm when worn thereon. Elastic straps or other similar attachment devices can be used to allow attachment to the operator's arm or another object that operator may wish to attach the device to.

Electronically, various embodiments of the design can be built around a microcontroller such as Texas Instruments^{®} OMAP 3530 or similar microcontroller core, which can include a Gumstix Overo Module or a custom PCB. In an embodiment, the OMAP can tie directly to the OCU's LCD and touch screen interface, and a USB port can be used to interface to the radio system. In certain embodiments, a spare USB port can be provided via a waterproof connector, so that the operator can attach, for example, a USB audio device, such as a headset, or can attach the OCU to a desktop computer to download recorded images or videos. Additionally, the internal battery can be charged, for example, via a separate waterproof connector, and a sealed power switch can complete the external interface of the OCU. The OCU's radio antenna preferably folds conveniently out of the way for storage, and can be flipped up when maximum range is needed.

Certain embodiments of the OCU can include four battery cells that are split into two separate strings, allowing them to fit into the mechanical structure of the OCU in such a way as to provide the forearm-complementing recess along the back of the OCU mentioned above.

The OCU includes an input device to receive input from an operator. In embodiments, the input device can be a joystick, keyboard, or other tactile input mechanism. In embodiments, the input device can be, for example, a touchscreen interface on a display of the OCU, such as an LCD panel. Combinations of the above are also possible. The present teachings contemplate employing two conceptual methods for driving the robot: (1) a "virtual thumbstick" conceptual method; and (2) a "click to drive" conceptual method. For the virtual thumbstick method, a cross-hair is drawn on the screen by an operator, and touching the screen in the vicinity of the cross-hair sends instructions to the robot to drive/turn appropriately. In the click-to-drive method, touching the video image causes the robot to drive toward the area selected in the image.

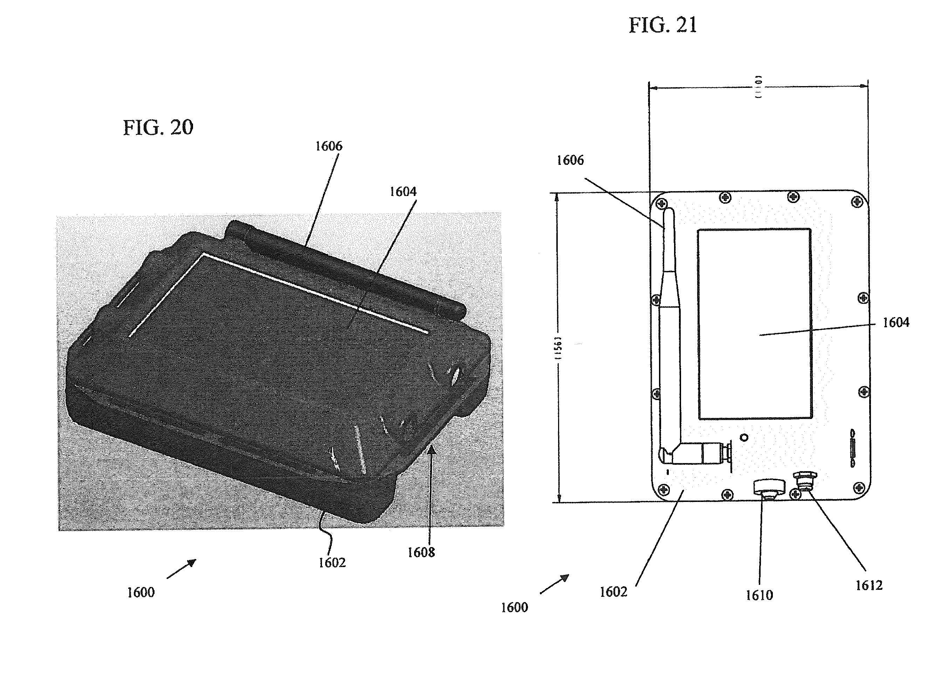

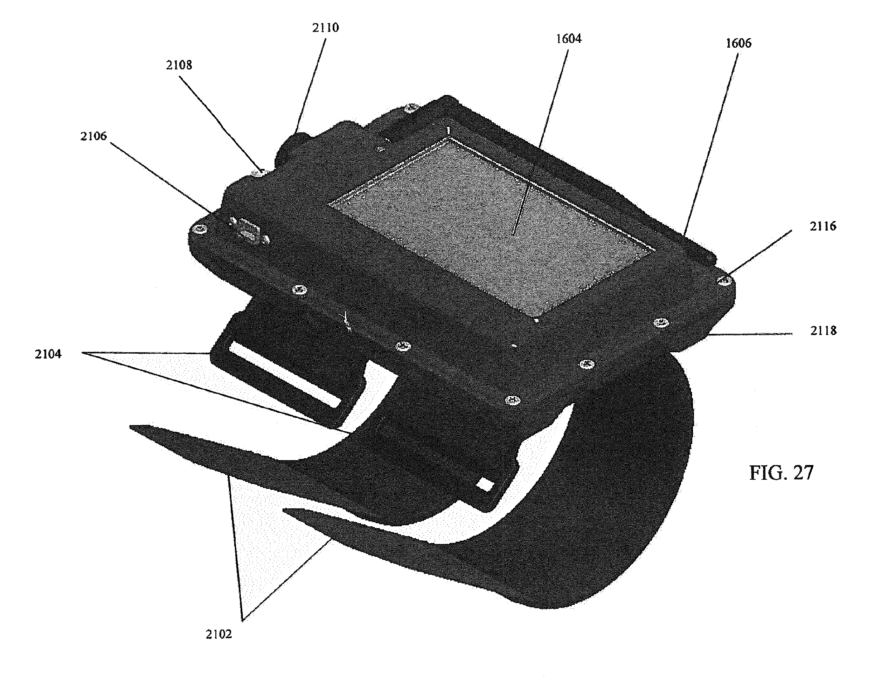

FIGS. 20 and 21 illustrate an exemplary embodiment of a handheld controller (OCU) for controlling a robot in accordance with the present teachings, FIG. 21 including some exemplary measurements in millimeters. The two figures illustrate slightly differing embodiments of the OCU. Housing 1602 supporting a display 1604 and a stowable antenna 1606 (illustrated in a stowed state). Housing 1602 also comprises a recess 1608, which can accommodate an operator's forearm to support the housing 1602 when worn on an operator's forearm. Housing 1602 can also comprise an attachment device, such as straps or other appropriate attachment (see, for example, FIGS. 27-31), to secure the housing 1602 to an operator's forearm or another object or surface. Display 1604 can comprise, for example, a liquid crystal display (LCD) screen (e.g., a WVGA 800x480 side LED backlit). A charge connector 1612 and a power button 1610 are also shown in FIG. 16B. In certain embodiments, the power button 1610 can be pressed to turn the OCU on, can be pressed briefly to put the OCU in a sleep mode, and can be pressed and held for a predetermined time (e.g., 4 seconds) to turn the OCU completely off. In an exemplary embodiment, embodiment, the OCU is 110 millimeters wide and 156 millimeters long.

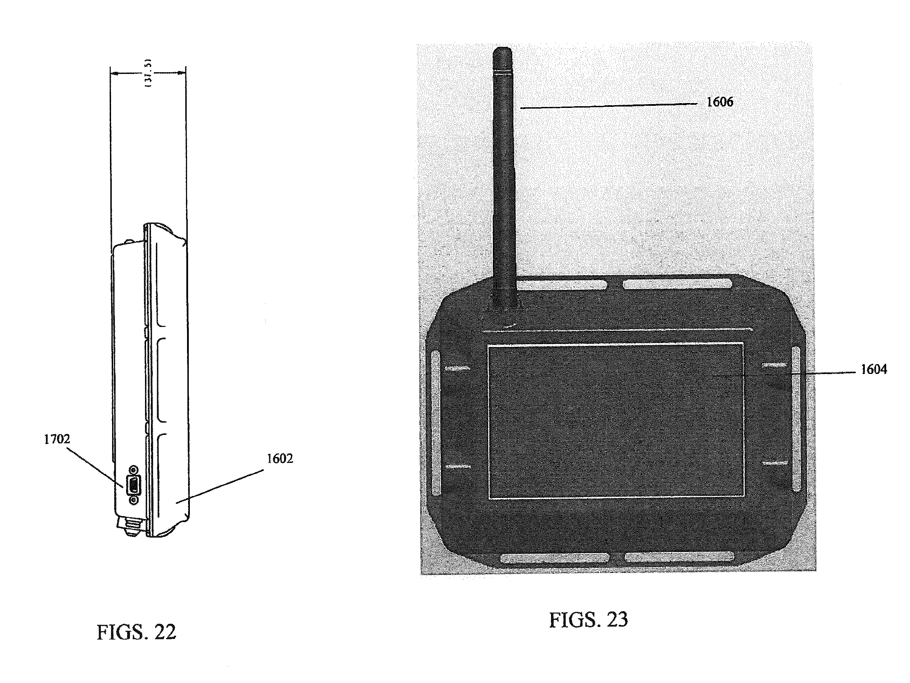

FIGS. 22 and 23 illustrate the handheld controllers of FIGS 20 and 21, with FIG. 22 including an additional exemplary measurement in millimeters. A USB port 1702 is illustrated on housing 1602, to permit a data/power connection to another appropriate device. In FIG. 22, the exemplary OCU can have a thickness of 37.5 mm, however the thickness can vary in other embodiments of the OCU. Antenna 1606 is illustrated in a state deployed for operation to communicate with a robot system. Display 1604 can be, for example, a touch input device to provide commands to the OCU as well as to display information.

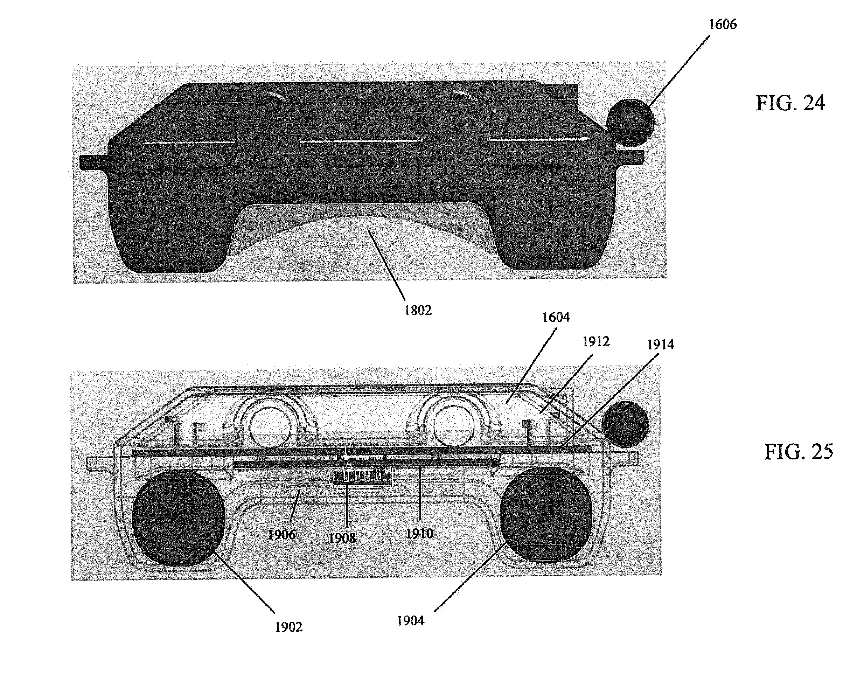

FIG. 24 is a side view of the handheld controller of FIG. 20. FIG. 24 illustrates recess 1802 to accommodate, for example, a user's forearm when the OCU is worn thereon,. Antenna 1606 is illustrated end-on in a stowed position.

FIG. 25 is a side view of the handheld controller of FIG. 20, with the housing illustrated as transparent to permit a view of internal components of the OCU. Battery units 1902, 1904 can be accommodated in portions of the OCU housing which protrude in a rearward direction of the OCU housing. In embodiments, the housing can be molded to provide portions which can accommodate batteries and which are formed to sides of the recess 1802. When two battery compartments are so provided, the weight of the battery units 1902, 1904 can be distributed on either side of the recess, to balance the OCU when strapped to an arm or other object. Also visible in cross-section are a radio 1904, a USB connector 1906, a processor 1910, display 1604, a display support 1912, and a main board 1914, also discussed below.

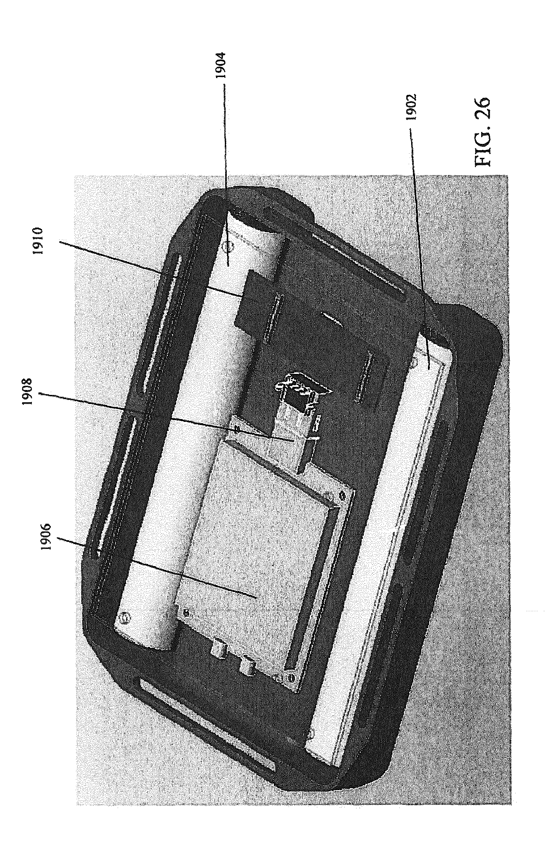

FIG. 26 is a top perspective view of an embodiment of the handheld controller shown in FIG. 20, with the cover and screen removed. The batteries 1902, 1904 can be seen disposed along sides of the OCU. Radio 1906 and USB connector 1908 can be provided in the OCU, in between the battery units 1902, 1904. Processor 1910 can also be provided to control operation of the OCU. In an exemplary embodiment, the processor 1910 can be a Gumstix module, though it will be appreciated that any appropriate processor can be used in the CU.

FIG. 27 is a side perspective view of another exemplary embodiment of an OCU that can be attached to an operator's forearm or wrist using one or more attachment devices. In the illustrated embodiment, straps 2102 and accommodating buckles 2104 can be provided on the rear of the OCU housing permit attachment to an operator. The illustrated OCU comprises a housing having a top portion 2116 and a bottom portion 2118, a display 1604 (such as an LCD screen, which can be, e.g., a WVGA 800x480 side LED backlit LCD screen), a power button 2110, a charge connector 2108, and a USB port 2106. Wrist straps 2102 and buckles 2104 can be attached to the bottom portion 2118 of the housing.

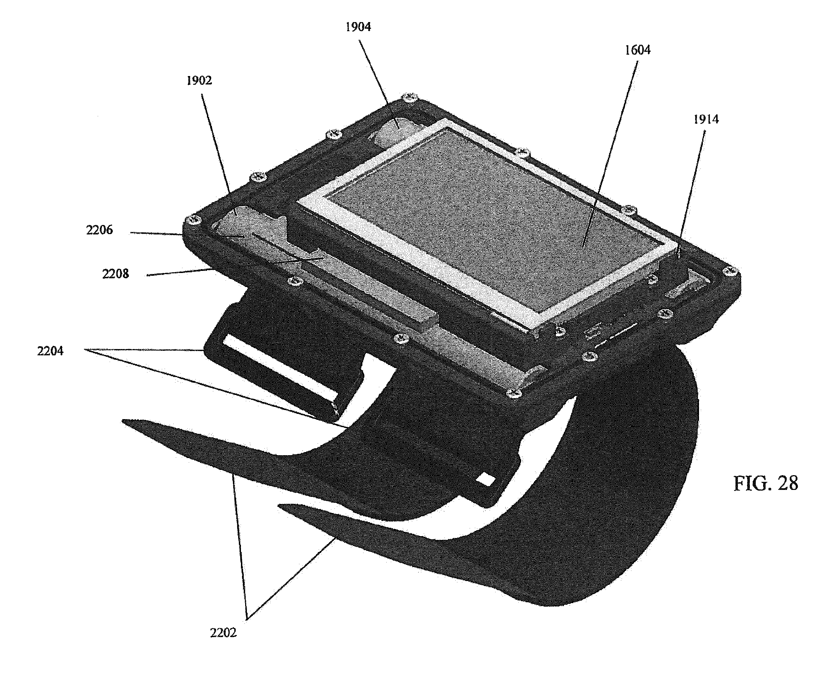

FIG. 28 is a side perspective view of the controller of FIG. 27, with the top portion of the housing removed. Display screen 1604 can be seen disposed within the housing and supported by display support 1914 to support an outer portion of the display screen 1604. A battery protection board 2206 is illustrated covering each of the battery units 1902, 1904 to protect the battery units. The battery protection boards 2206 can include a protrusion 2208 which protrudes toward the top portion of the OCU, and which in embodiments can support an inner surface of the top portion of the OCU.

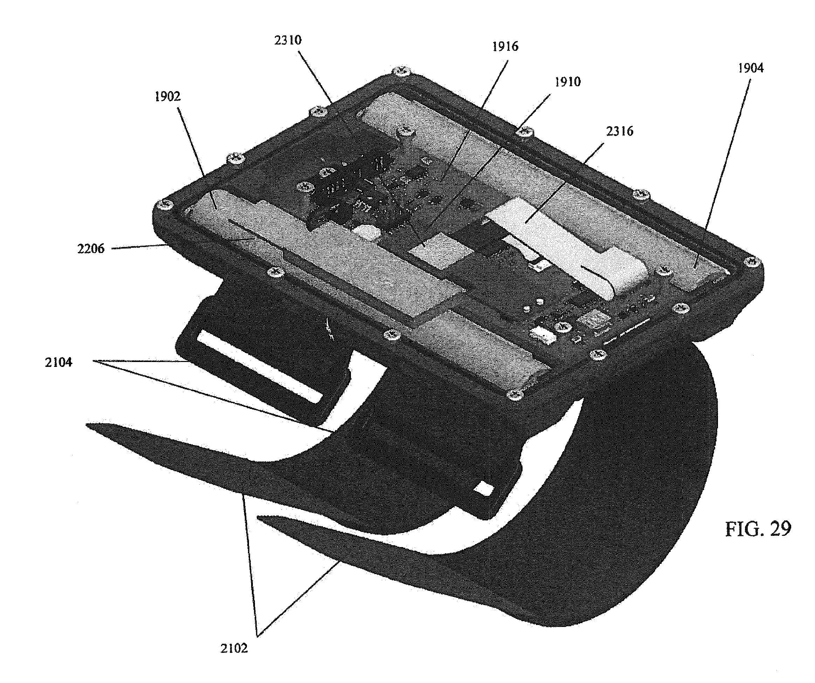

FIG. 29 is a side perspective view of the OCU of FIG. 27, with the top portion of the housing and the display screen removed. Batteries 1902, 1904 can be provided along a side surface of each side of the OCU housing, with at least one of the batteries including a battery protection board 2306. Main board (PCB) 1916 is shown disposed along an inner surface of the lower half of the OCU housing, which supports processor 1910 (such as, for example, a Gumstix module) and an SD card slot 2310. A flexible connector or cable 2316 can be used to connect the main board to at least a display screen.

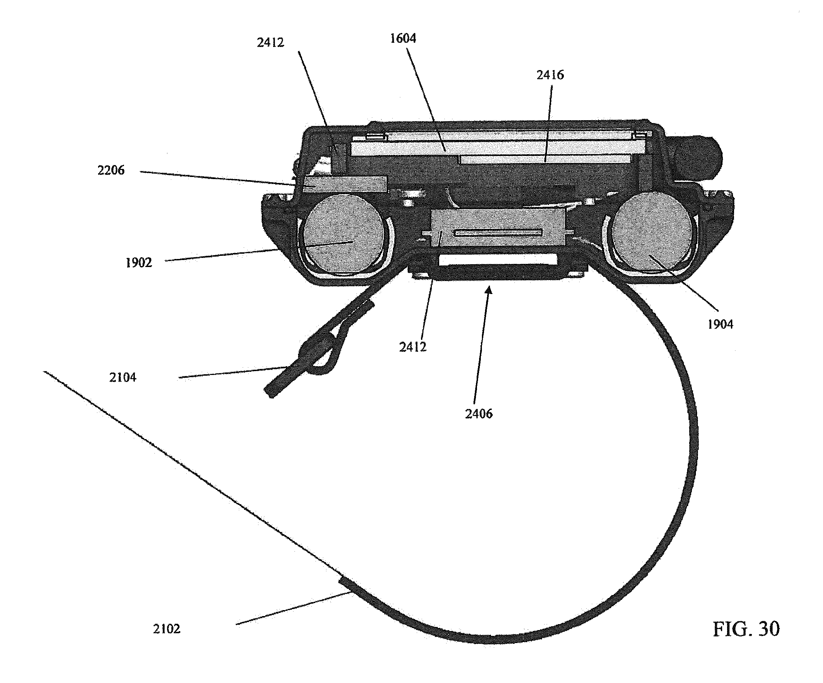

FIG. 30 is a cross sectional view of the controller of FIG. 27. Strap 2102 and buckle 2104 are attached to the lower half of the OCU housing by a fastener 2406. A battery 2102, 2104 can be seen on each side of the housing, with at least one of the batteries including a battery protection board 2206. A radio or radio module 1906 is in a bottom portion of the OCU housing between the batteries 1902, 1904. An SD card slot 2412, display device 1604, and display board (PCB) 2416 can be provided in an upper portion of the OCU housing.

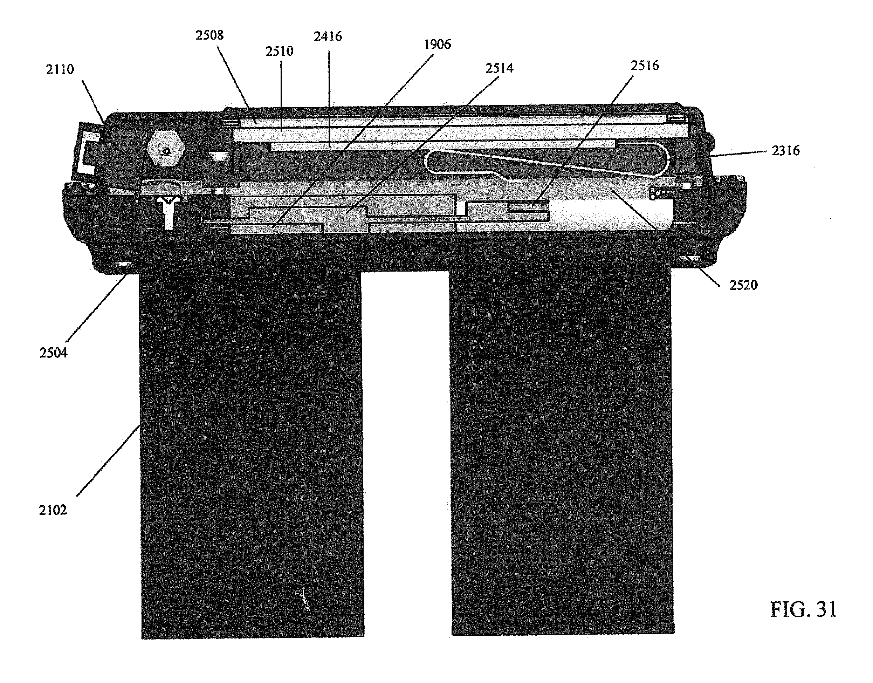

FIG. 31 is another cross sectional view of the controller of FIG. 27. Straps 2102 are attached to a lower portion of the OCU housing by strap connectors 2504 (for example, fastener 2406). A touch panel 2508 can be provided above display 1604 to enable the OCU to receive inputs. Display board (PCB) 2416 is disposed below display 1604 to control operations of the display 1604. A flexible connector 2316 can be used to connect the display board 2416 to the main board 1916. Radio or radio module 1906 can be disposed in a bottom portion of the housing, along with a USB connection 2514 to permit a data/power connection with the radio/module 1906 through USB connector 2516. Power button 2110 is disposed along a surface of the housing to permit the control of operational states of the OCU.

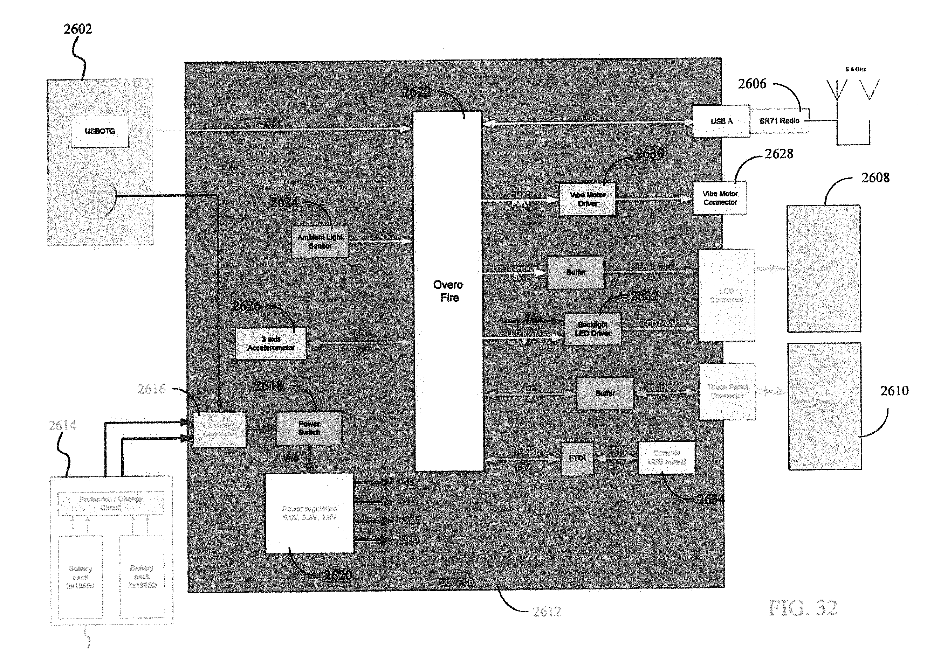

FIG. 32 illustrates an embodiment of an OCU system diagram, illustrating connections of a charger 2602, batteries 2604, radio 2606 (which can be, for example, a SR71 Radio), a display board (PCB) 2608, and a touch panel 2610 to the main PCB 2612. Battery protection board 2614 communicates with battery connector 2616, which can receive power from a charger jack of charger 2602. Power from the batteries can pass through a power switch 2618 to a power regulation system 2620 for the main PCB 2612. Processor 2622 (which can be, in embodiments, a Gumstix Overo Fire processor, or other appropriate processor) can receive input from, for example, an ambient light sensor 2624 and a three-axis accelerometer 2626. A vibration motor can optionally be provided comprising a driver 2630 and a connector 2628. A backlight LED driver 2632 can also be provided drive a backlight for display 2608. Touch panel 2610 can receive input and communicate the input to processor via an appropriate connector through a connection, which can optionally include a data buffer to provide smooth transfer of data.

FIG. 33 is a system diagram for an exemplary embodiment of a robot docking station 2702 including a charger. The docking station 2702 can comprise power input 2704 to receive power from an external electrical source which provides received power to smart charger unit 2706. Smart charger unit 2706 is in communication with charger PCB 2708, which controls charging operation of the docking station 2702. The charger PCB is also in communication with charge pins 2710, through which charging power is provided to a robot when the robot is coupled with docking station 2702 to charge battery units of the robot.

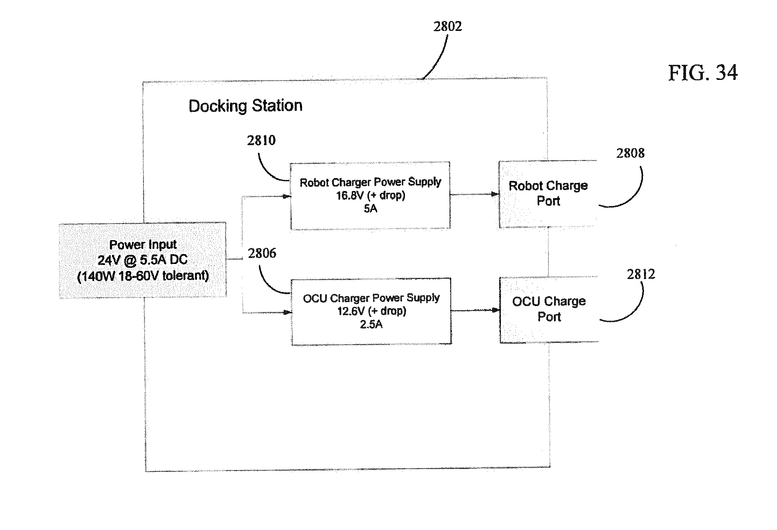

FIG. 34 is a system diagram for another exemplary embodiment of a robot docking station and charger. Docking station 2802 can comprise power input 2804 to receive power from an external electrical source which provides received power to power supplies 2806 and 2810, to provide power to the robot charge port 2808 and the OCU charge port 2812, respectively. Docking station 2802 can thus accommodate both a robot system at charge port 2802 and an OCU for the robot system at charge port 2812, to permit convenient charging of the robot and the OCU at the docking station 2802.

In certain embodiments of the present teachings, the same type of processor can be used in both the robot and the OCU. The processor is preferably a low power/high performance processor intended for battery power, and having a digital signal processor to perform mathematical computation. In certain embodiments, tasks can be broken up by processor and calculations can be simultaneously made on both the robot and the OCU.

### Motor Dithering

Certain embodiments of a robot in accordance with the present teachings can use a Freescale Semiconductor MC33932VW H-Bridge to control one or more drive motors. Because the maximum PWM frequency for this H-bridge (11KHz) is in the audible range, reducing the audible component of the driving PWM signal can be desirable. Reducing the audible component can be accomplished by randomly varying the PWM frequency slightly, so that no single frequency carries all of the audible energy generated by the motors.

The robot main control loop runs 128 times per second. Each time through the control loop, a PWM dithering function can be called to adjust the frequency of the PWM signal. The frequency can, for example, be set as a center frequency, plus or minus a small random percentage. Because this is done frequently, efficient integer math is used in all calculations.

The center frequency can be chosen, for example, to be 10.4166 KHz, because this is a convenient divisor of the embodiment's selected CPU's 8MHz PWM timer clock just below the 11 KHz H-Bridge maximum. This is 768 ticks of the 8MHz PWM timer. A Galois Linear Feedback Shift Register can be used to generate pseudorandom numbers to adjust the period to the range 752 to 783, which is about plus or minus 2% of 768. For a given duty cycle, a new PWM comparison value can be chosen based on this new PWM period.

There can be an additional constraint imposed by the H-Bridge that the minimum on or off pulse times should be greater than 10uS to allow the FETs to switch fully on or off. At 10.4166KHz, this corresponds to duty cycles below 10% and above 90%. For these cases, instead of dithering the PWM period, the PWM comparison value is dithered. A random value between 80 and 120 is chosen (10uS to 15uS) for the on or off time, and the PWM period is calculated based on the desired duty cycle.

This process can provide a reduced acoustic signature for stealth operation and can allow use of a more efficient H-bridge to provide longer run times. A more efficient H - bridge can also provide improved thermal characteristics which lead to less heat sinking and therefore a lighter robot, and the ability to operate in higher ambient temperatures. In addition, dithering PWM frequency and pulse width reduces radiated emissions.

### Sealed Embodiments

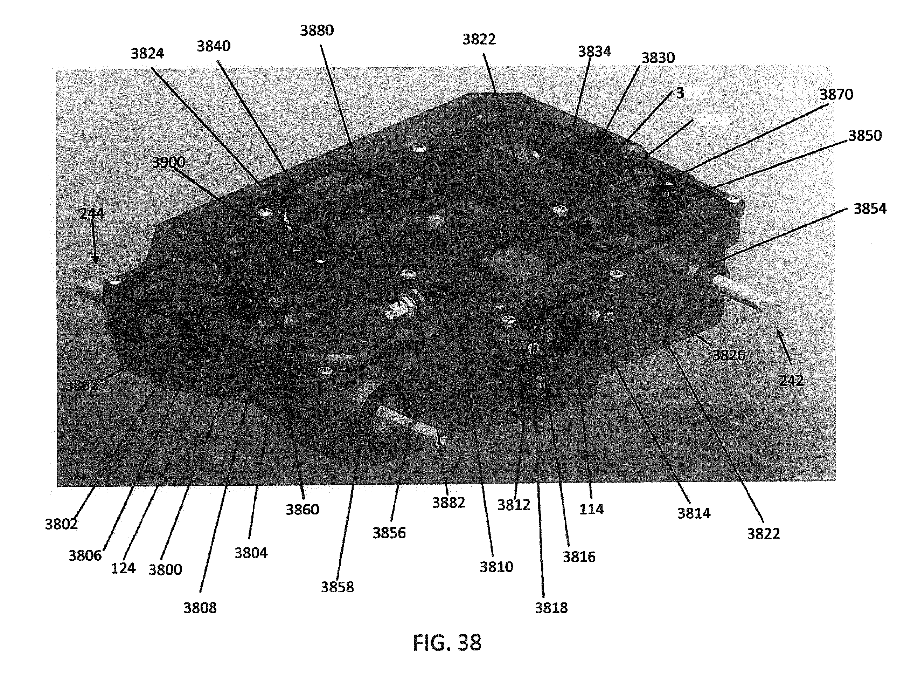

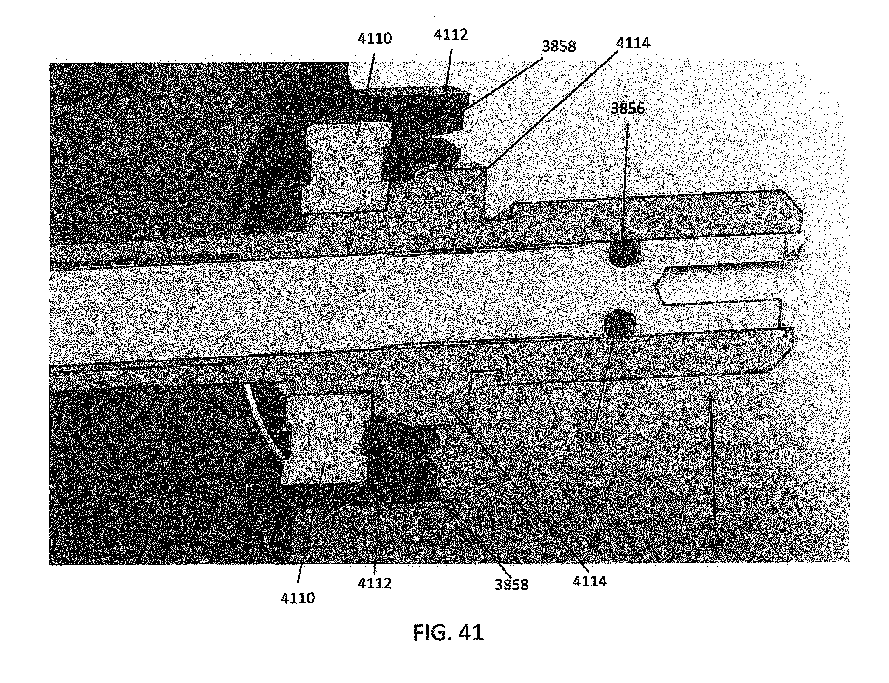

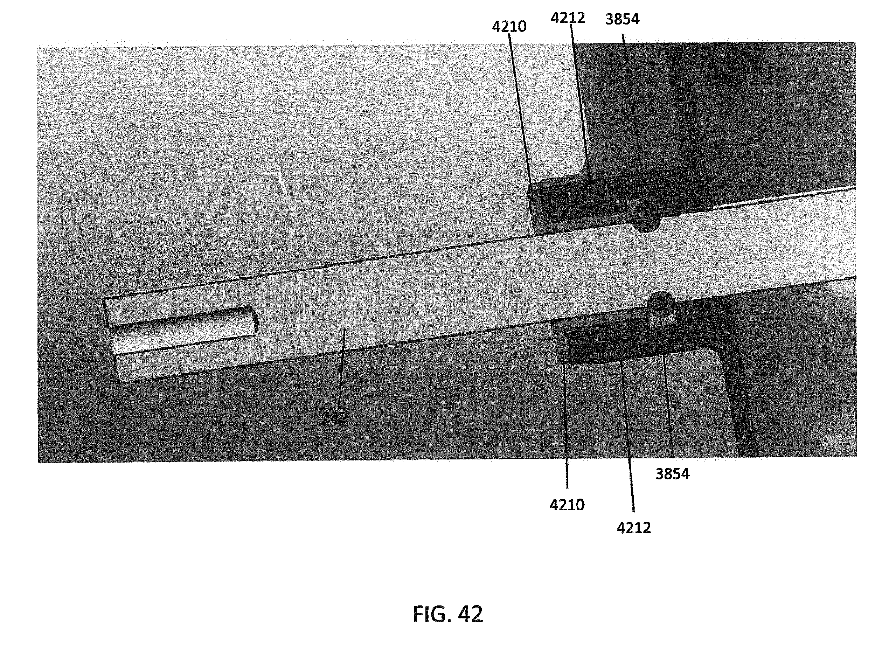

FIG. 38 is a side perspective view of an exemplary embodiment of a robot in accordance with the present teachings, having the chassis represented as transparent to show the location of various components and seals within the chassis. As shown, a seal 3840 is provided between the payload expansion port cover and a top surface of the housing. Another seal 3810 is provided between a top half of the chassis and a bottom half of the chassis. The chassis seals 3840 and 3810 can be O-ring type seals. Each side of the front axle 244 and rear axle 242 is sealed. In the illustrated exemplary embodiment, the front axle 244 (shown in detail in FIG. 41) is sealed on both ends by means of a small O-ring 3856 that preferably resides in a groove spaced from the distal end of the front axle 244. A drive bushing 4110 (see FIG. 41) can be provided at each end of the front axle 244 to transmit torque from the wheel motors to the front wheels. The drive bushing 4110 is sealed to the housing using a lip seal 3858. A lip seal 3858 can be utilized instead of an O-ring for the drive bushing 4110 (see Fig. 41), because it provides better sealing for the high rotation speeds of the front axle 244. In the illustrated embodiment, sealing of the rear axle 242 (shown in detail in FIG. 42) includes only a single O-ring 3854 that preferably resides within a chassis protrusion 4212 and in a groove spaced from the distal end of the front axle 242.

The side camera 114 has an associated O-ring seal 3822, and its two surrounding IR LEDs are similarly sealed with O-rings 3812, 3814. In the view afforded by FIG. 38, an O-ring 3824 for an opposing side camera can also be seen in part. A vacuum test port 3826 can be provided for the robot and can comprise a screw with an O-ring seal 3822 surrounding the screw. To test or adjust vacuum pressure within the robot, the screw can be removed and a vacuum fixture can be hooked up to the resulting aperture. After vacuum is tested or adjusted, the screw is replaced to keep the robot sealed.

The embodiment of FIG. 38 includes a payload connector 3870 that is sealed with an O-ring 3850. The payload connector 3870 allows future payloads to attach to the top of the robot and connect to the robot. The payload connector can, for example, comprise a USB connector and a power supply. The embodiment of FIG. 38 also includes an RF connector 3880 for connecting to an antenna. The RF connector 3880 includes an O-ring seal 3882 and can be a sealed bulkhead, which means that the robot can have the antenna swapped out without breaking the sealed volume.

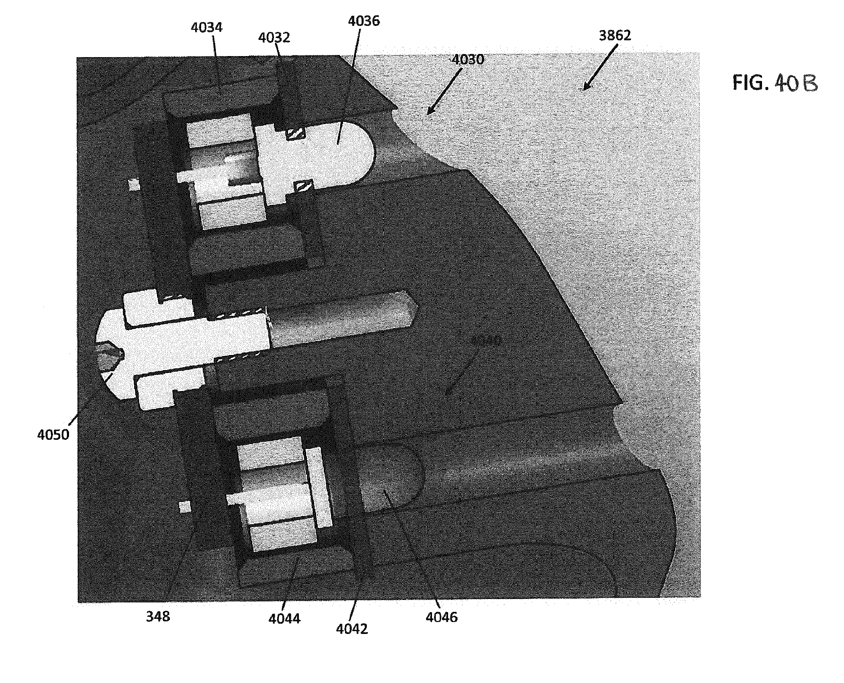

A front camera 124 has an O-ring seal 3800 and, in the illustrated embodiment, includes four surrounding IR LEDs. Having four LEDs can provide better illumination than the two IR LEDs shown in the above embodiments. The upper two IR LEDs associated with the front camera are preferably angled outward to illuminate a larger area. If all of the illuminators are pointing in the same direction, a smaller area is illuminated. The upper two IR LEDs are sealed via O-rings 3802, 3804, and the bottom two IR LEDs are also sealed via O-rings 3806, 3808. The back camera is sealed via O-ring 3830, and its associated IR LEDs are also sealed via O-rings 3832, 3834, 3836. In the embodiment of FIG. 38, only the front and back cameras have four IR LEDs per camera. The side cameras still only have 2 LEDs per camera, for example due to space constraints. The embodiment of FIG. 38 also shows sealed cliff sensor assemblies at 3860 and 3862, which are shown in greater detail in FIG. 40B.

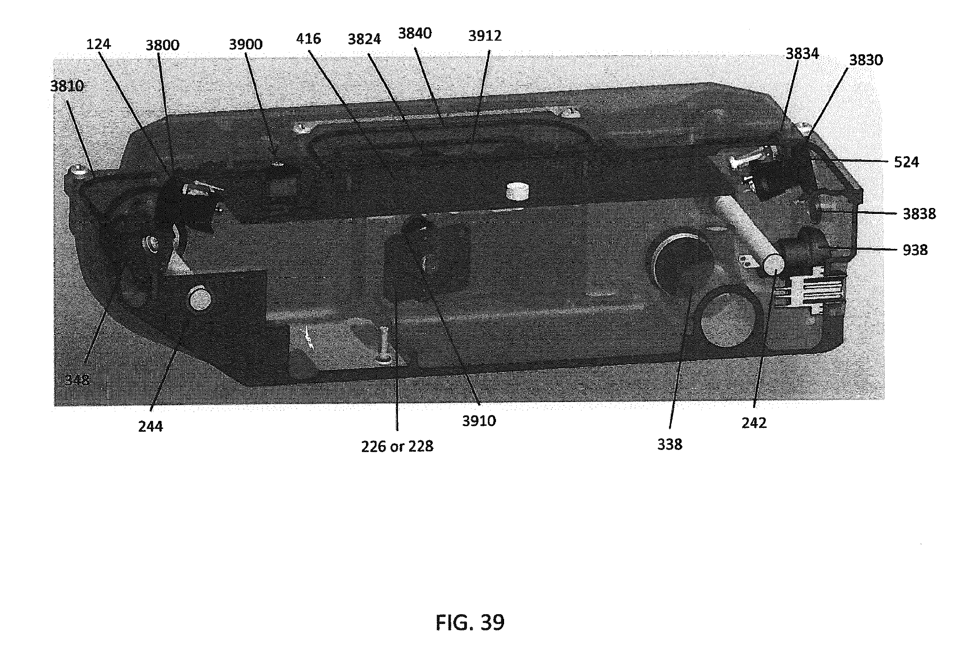

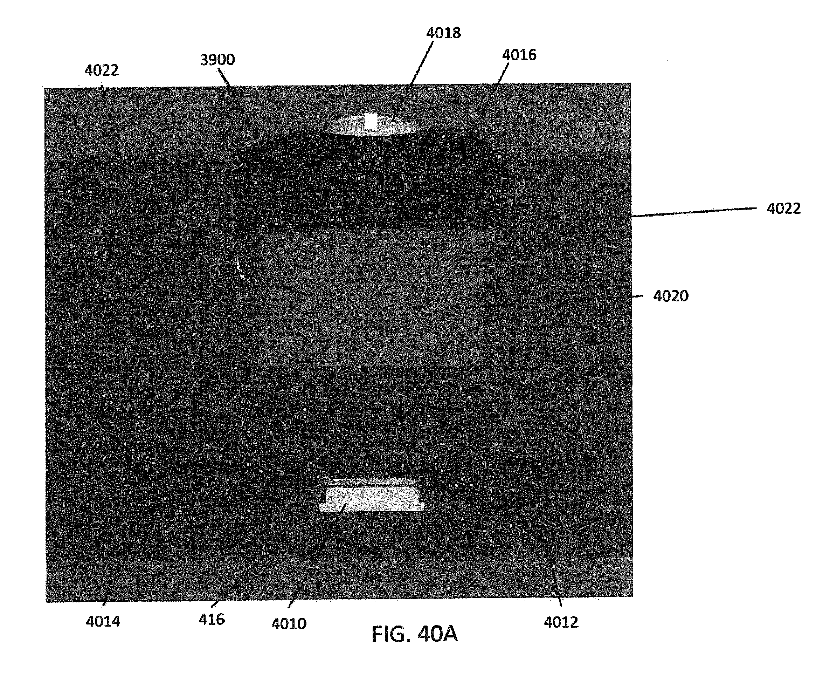

FIGS. 39 is a side cutaway view of the exemplary embodiment of FIG. 38, taken along a longitudinal centerline of the chassis. The applications PCB 418 is shown in section, along with a wall-following sensor PCB 618 and a cliff sensor PCB 348. The front camera 124, front camera O-ring seal 3800, rear camera 524, and rear camera O-ring seal 3830 are shown in cross section. The front axle 244 and rear axle 242 are also shown in cross section. An exemplary embodiment of a microphone assembly 3900 is shown in cross section and is explained in more detail below with respect to FIG. 40A. The O-ring type seal 3840 is shown as it is held between the payload expansion port cover and a top surface of the housing. The O-ring type seal 3810 is shown as it is held between a top half of the chassis and a bottom half of the chassis. The power button 938 can be seen, and is preferably mounted to the chassis with a sealed mount utilizing, for example, an O-ring. An O-ring type seal 3838 for a lower rear camera IR LED can be seen, along with the O-ring type seal 3834 for the upper rear camera ID LED. A silicone rubber gasket 3910 for a wall-following sensor assembly is shown in part.

FIG. 40A is a partial cutaway view of FIG. 39, showing an exemplary sealed microphone assembly in accordance with the present teachings. The microphone assembly 3900 is sealed using a thin silicone membrane 4014 that is compressed between a donut-shaped rubber piece 4012 situated atop the applications PCB 416 and a portion 4022 of the chassis. The donut-shaped rubber piece 4012 provides a compressive force to push the thin silicone membrane 4014 against the portion 4022 of the chassis. The microphone 4010 is preferably situated below the membrane, on the applications PCB, in the hole of the donut-shaped rubber piece 4012.

A cap 4016 can be used to retain a small cylinder of foam 4020 within the chassis and above the membrane 4014. In addition to retaining small cylinder of foam 4020, the cap 4016 provides some protection for the membrane seal. The cap 4016 can have holes, for example four small holes extending from the top of the cap through to the foam, to allow sound to penetrate the cap while preventing sharp objects from reaching and piercing the membrane 4014 to break the membrane seal. The small cylinder of foam 4020 allows sound to pass through but keeps dirt and dust from collecting inside a cavity above the membrane 4014 and microphone 4010. The membrane 4014 preferably comprises a very thin piece of material that maintains a seal while allowing sound to reach the microphone 4010.

FIG. 40B is a partial cutaway view of an exemplary sealed cliff sensor assembly 3862 in accordance with the present teachings. Two cliff sensors 4030, 4040 are preferably sealed via, for example, silicone rubber gaskets 4032, 4042 that fit over an emitter/detector 4036, 4046 of the cliff and wall sensors. A cylindrical plastic part 4034, 4044 can be sandwiched between the gaskets 4032, 4042 and the wall-following assembly's PCB 348. When a screw 4050 mounting the PCB to the chassis is tightened, the gaskets 4032, 4042 are compressed to create a pressurized seal. The wall-following sensor(s), located beneath the camera 114 can also be sealed in this manner using silicone rubber gaskets 3816, 3818.

FIG. 41 is a partial cutaway view of the exemplary embodiment of FIG. 38, showing one end of the front axle 244 in cross section (the other end of the front axle preferably being a mirror image thereof). The illustrated front axle embodiment includes an inner axle member 4122 and an outer axle member 4120. The outer axle member 4120 includes an annular protrusion 4114. A drive bushing 4110 can be provided at each end of the front axle 244 to transmit torque from the wheel motors to the front wheels. The drive bushing 4110 is sealed to the chassis using a lip seal 3858 that resides between a portion 4112 of the chassis and an outer surface of the annular protrusion 4114. A lip seal 3858 can be utilized instead of an O-ring for the drive bushing 4110, because it provides better sealing for the high rotation speeds of the front axle 244. The inner axle member is sealed with the outer axle member 4120 on both ends of the front axle 244 using a small O-ring 3856 that preferably resides in a groove spaced from the distal end of the front axle 244.

FIG. 42 is a partial cutaway view of the exemplary embodiment of FIG. 38, showing one end of the rear axle 242 in cross section (the other end of the rear axle preferably being a mirror image thereof). In the illustrated embodiment, sealing of the rear axle 242 (shown in detail in FIG. 42) includes only a single O-ring 3854 that preferably resides within a chassis protrusion 4212 and in a groove spaced from the distal end of the front axle 242. An insert 4210 may also be provided between the chassis portion 4212 and the rear axle 242.

A robot in accordance with various embodiments of the present teachings is rugged and suitable for outdoor missions and exposure to harsh weather conditions. In certain embodiments, the robot is fully sealed. A fully sealed robot such as the robot illustrated in FIGS. 38-42 can remain sealed during heavy rainfall and other extreme weather conditions, preventing ingress of dust and liquid to sensors and the chassis interior during at least temporary submersion up to 1 meter (3.2 feet) for 30 minutes. Payloads connected to the robot via the a payload connector 3870 may not be similarly protected from the environment.

### Multiplexing of Data by Inter-Integrated Circuit Bus

The present teachings provide a system to multiplex data on a data bus using an inter-integrated circuit (I2C) bus. The system includes an integrated circuit including a processing unit, an I2C interface coupled to the processing unit and to an external I2C bus, a data bus interface coupled to the processing unit and to an external data bus, and a data storage unit coupled to the processing unit and configured to store at least one processor-executable program comprising instructions executable by the processing unit.

The at least one processor-executable program includes an I2C driver program to: configure the processor to receive a request for data from at least one target external device of a plurality of external devices coupled to the external bus, the request comprising a unique address associated with the target external device; communicate with an external I2C multiplexer through the I2C interface to select an I2C sub-branch of the I2C multiplexer corresponding to the target external device based on the unique address; communicate only with the target external device through the I2C interface, wherein the communication does not include the unique address; and communicate only with the target external device through the external data bus, wherein the communication is independent of the unique address.

The present teachings further provide a remote controlled vehicle comprising a processing unit, a plurality of data-gathering devices coupled to the processing unit through a data bus, an inter-integrated circuit (12C) multiplexer coupled to the processing unit and to the plurality of data gathering devices, a data storage unit coupled to the processing unit and configured to store at least one processor-executable program comprising instructions executable by the processing unit.

The at least one processor-executable program includes an I2C driver program to: configure the processing unit to receive a request for data from at least one target external device of a plurality of external devices coupled to the external bus, the request comprising a unique address associated with the target external device; communicate with the I2C multiplexer to select an I2C sub-branch of the I2C multiplexer corresponding to the target external device based on the unique address and couple the processing unit with the target external device through the I2C multiplexer; communicate only with the target external device through the I2C multiplexer, wherein the communication does not include the unique address; and communicate only with the target external device through the data bus, wherein the communication does not include the unique address. The data bus of the remote vehicle includes a video data bus, the plurality of data-gathering devices of the remote vehicle includes a plurality of video cameras, and the target external device comprises one of the plurality of video cameras.

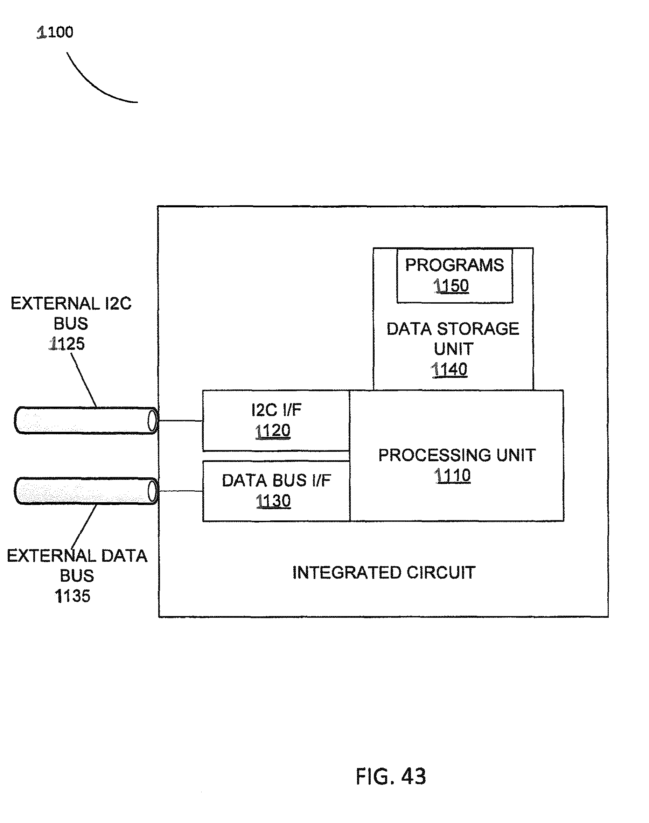

Fig. 43 illustrates an exemplary embodiment of an integrated circuit (IC) 100 for use in accordance with the present teachings, which includes certain aspects of the present teachings. In particular, IC 100 includes a processing unit 110, an inter-integrated circuit (I2C) interface 120 coupled to the processing unit 110 to allow IC 100 to communicate with other ICs through an external I2C bus (125), a data bus interface 130 coupled to the processing unit 110 to allow IC 100 to communicate with other ICs through an external data bus (135), and a data storage unit 140 coupled to the processing unit 110 to store processor-executable programs 150 executable by the processing unit 110. Those of ordinary skill in the art would recognize that IC 100 may include additional well-known components of integrated circuits, such as a power management unit, a clock unit, configuration registers, additional storage and/or processing units, additional interface units, etc., which are omitted in Fig. 43 to not obscure the present teachings.

Processing unit 110 may include a microprocessor and other circuitry that retrieves processor-executable programs 150 from data storage unit 140 and executes the processor-executable programs 150. Data storage unit 140 may include data storage circuitry and an associated recording medium, such as a random access memory (RAM) and read-only memory (ROM). Although the present embodiment includes data storage unit 140 embedded in IC 100, the present teachings are not so limited, and those of ordinary skill in the art would recognize that data storage unit 140 may be separate from IC 100 and accessible through known methods.

Processor-executable programs 150 may include computer programs, firmware, or some other form of machine-readable processing instructions which are executable by processing unit 110. Processor-executable programs 150 may include an operating system, utilities, drivers, network and port interfaces, applications, or some other type of software. When executed by processing unit 110, processor-executable programs 150 may direct processing unit 110 to implement the present teachings in addition to other functions not disclosed herein.

I2C interface 120 may include at least communication circuitry to interface with processing unit 110 and with the external I2C bus 125. An I2C bus generally includes only two lines where a data line called an SDA line carries data bits and a clock line called an SCL line is used as a clock signal. These two lines create a synchronous serial bus. The number of devices connected to the bus is only limited by the total bus capacitance, which for a standard implementation is recommended to be 400 pF, and may be higher for application-specific implementations. Data rates of 100, 400 and 3400 kbps are common, but an I2C implementation is not so limited and may include a wider range of data rates. In the present exemplary embodiment, messages sent by IC 100 through the I2C interface 120 over the external I2C bus 125 may include an address to identify one device of a plurality of devices to which the messages are directed.

Data bus interface 130 may include at least communication circuitry to interface with processing unit 110 and with the external data bus 135. External data bus 135 includes a plurality of lines for transmitting data. The plurality of lines may include 8, 12, or 16 lines, but the present teachings are not so limited and may include any number of lines supported by IC 100 and/or other devices connected to the external data bus 135.

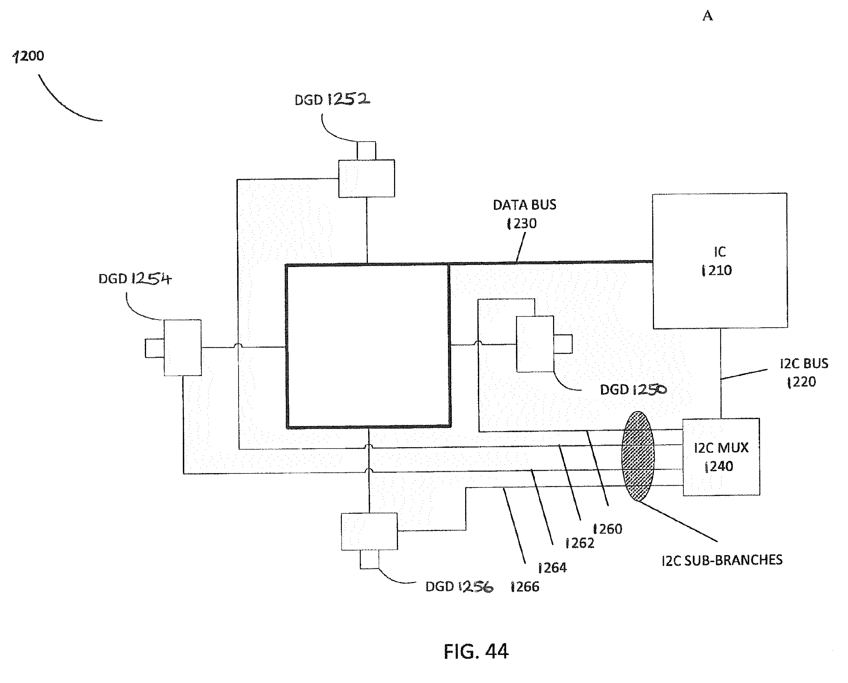

Fig. 44 illustrates a schematic diagram of a system 200 depicting an exemplary embodiment the present teachings, which includes certain aspects of the present teachings. In particular, the system 200 includes IC 210, I2C bus 220, data bus 230, I2C multiplexer (I2C Mux) 240, and data-gathering devices 250, 252, 254, and 256. IC 210 includes at least the elements of IC 100 described above. IC 210 can comprise, for example, a Texas Instruments^{®} Open Multimedia Application Platform (OMAP) processor 3530, but may be embodied by a plurality of other off-the-shelf processors and application-specific integrated circuits (ASICs) which include at least the elements of IC 100 described above.

In the present exemplary embodiment, IC 210 connects to I2C Mux 240 through I2C bus 220. I2C Mux 240 breaks an I2C bus (such as I2C bus 220) into multiple I2C sub-branches (I2C sub-branches 260, 262, 264, and 266 in the present exemplary embodiment) and may allow one or more I2C sub-branches 260, 262, 264, 266 to be selected by IC 210 for communication between the IC 210 and one or more corresponding data-gathering devices 250, 252, 254, 256, respectively,

When one of the I2C sub-branches is selected by IC 210, the I2C Mux 240 acts as a bridge, allowing the IC 210 to send commands through the selected sub-branch to the corresponding data-gathering device. In the present exemplary embodiment, the I2C Mux 240 comprises a 4x1 multiplexer, but the present teachings are not so limited, and the I2C Mux 240 may break I2C bus 220 into more or less sub-branches than those in the present exemplary embodiment.

I2C bus multiplexing through I2C Mux 240 allows for reliable switching of multiple I2C sub-branches (e.g., I2C sub-branches 260-266) for connecting I2C Bus 220 to corresponding I2C-capable devices (e.g., data-gathering devices 250-256, respectively). Furthermore, when the I2C-capable devices are multiple identical devices, I2C multiplexing facilitates address expansion when adding devices, simplifies resolution of address conflict issues between devices, and simplifies replacement of malfunctioning devices. Specifically, because each device may be addressed through a dedicated I2C sub-branch, it is not necessary to assign a unique I2C address to each device. Therefore, some or all I2C-capable devices may be configured to the same I2C address.

Data-gathering devices 250, 252, 254, and 256 may include any type of device which is capable of gathering data from a surrounding environment, such as an analog or digital camera and an analog or digital video camera. The user may request to receive data from one, some, or all available data-gathering devices and, when gathering data from multiple data-gathering devices simultaneously, the user may select to obtain data more frequently from a particular data-gathering device than from one or more of the other data-gathering devices (i.e., device biasing). Furthermore, the user may control specific functionality of the data-gathering devices, such as turning on/off the device.

For example, and not as limitation, when the data-gathering devices include video cameras, a user may request to receive video data from one, some, or all available video cameras. When gathering data from multiple video cameras simultaneously, the user may select to obtain image frames at a similar frame resolution (i.e., amount of data per frame) and similar frame rate (i.e., amount of frames transmitted per unit of time) from each video camera or may select to obtain higher (or lower) frame resolution and/or a higher (or lower) frame rate from a specific video camera (e.g., a forward-facing video camera when the remote vehicle is moving in a forward direction) relative to the frames resolution and/or frame rate at which frames are received from one or more of the other video cameras.

The frame resolution and the corresponding frame rate determine the data rate at which system 200 should provide image data. Whether system 200 is capable of meeting the request depends on multiple factors, including: maximum bandwidth of data bus 230, maximum frame resolution of each video camera, power constraints, number of video cameras employed, etc.

For example, and not as limitation, when the user requests image data from multiple cameras, the maximum bandwidth of data bus 230 is shared among the multiple cameras. If the combined data rate of the requested image data exceeds the maximum bandwidth of data bus 230, system 200 may not satisfy the request and may suggest to the user using lower resolution or a lower data rate for one or more of the multiple cameras.

As a further example, and not as limitation, if system 200 relies on battery power, and the battery power is below a pre-determined threshold, system 200 may inform the user of the low battery condition and may suggest using lower resolution or a lower data rate for one or more of the multiple cameras, or may suggest to shut down one or more of the multiple cameras.

Furthermore, in the present exemplary embodiment, when the data-gathering devices include video cameras, the user may control specific functionality of the video cameras, such as turning on/off one or more video cameras, turning on/off a light source to illuminate a target being monitored, and configuring a video camera lens zoom and focus.

In the present teachings, data-gathering devices 250, 252, 254, and 256 may be identical devices and/or have an identical I2C address. Specifically, because each data-gathering device is independently connected to the I2C Mux 240, addressing of a particular data-gathering device depends on selecting a corresponding I2C sub branch instead of a corresponding I2C address.

For example, and not as limitation, when the data-gathering devices include video cameras aiming towards pre-determined locations, addressing of a particular video camera comprises configuring the I2C Mux to bridge I2C Bus 220 with the corresponding I2C sub-branch. If a camera malfunctions and needs to be replaced, the present teachings obviate the need to configure the camera being installed in the system with the address of the camera being replaced or with a specific address. Furthermore, cameras may be repositioned within the same unit without reconfiguration of addresses because their addressing depends on where the camera is positioned as opposed to its address.

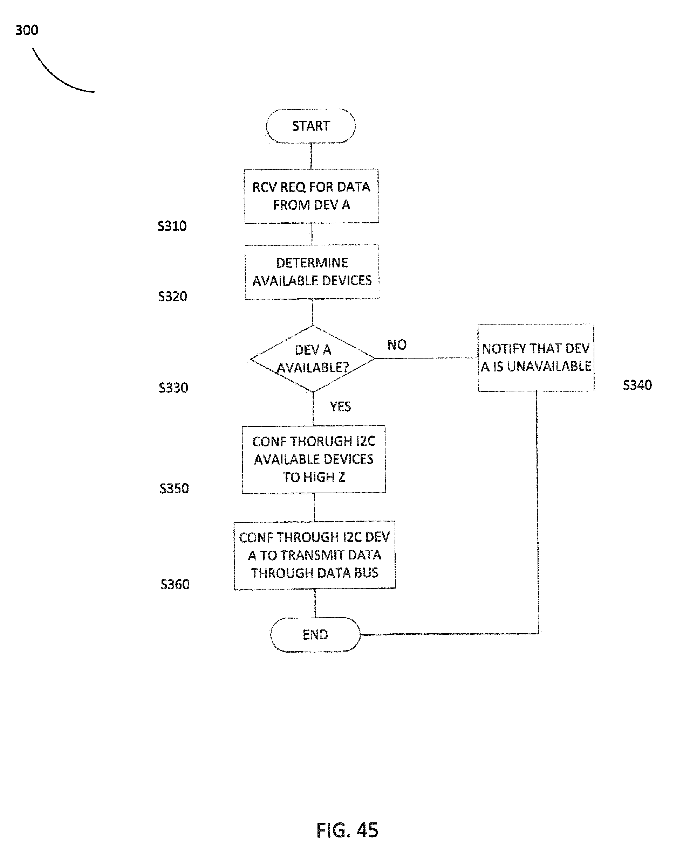

Fig. 45 illustrates an exemplary process 300 performed by an IC 100 (or 210) when configured by at least one processor-executable program 150 including certain aspects of the present teachings. At step S310, the processing unit 110 receives a request for data captured by data-gathering device A. The request may originate externally to IC 100 or may originate from another processor-executable program executed by IC 100. At step S320, upon receipt of the request, the processing unit determines which devices are available. Processing unit 110 may determine this by requesting status of all devices connected to I2C Mux 240 (Fig. 44), or may retrieve the information from a look-up table previously stored at data storage unit 140 (Fig. 43).

At step 330, processing unit 110 determines whether device A is among the available devices. When device A is not available for providing data through data bus 230, processing unit 110 notifies the requesting party that device A is not available and the process ends (S340). When device A is available for providing data through data bus 230, processing unit 110 configures all available devices through the I2C bus to set their data bus lines to high impedance (S350), and configures device A to transmit data through data bus 230 to the IC 100 (S360). Configuring all available devices may include configuring the I2C Mux to bridge I2C Bus 220 with each I2C sub-branch and its corresponding device individually, or may include configuring the I2C Mux to bridge I2C Bus 220 with some or all sub-branches and their corresponding devices simultaneously to configure the some or all devices at the same time.

Those of ordinary skill in the art would appreciate that steps S350 and S360 could be performed in a variety of ways without departing from the present teachings. For example, processing unit 110 may determine that all available devices are already in a high impedance state, and therefore, may obviate step S350.

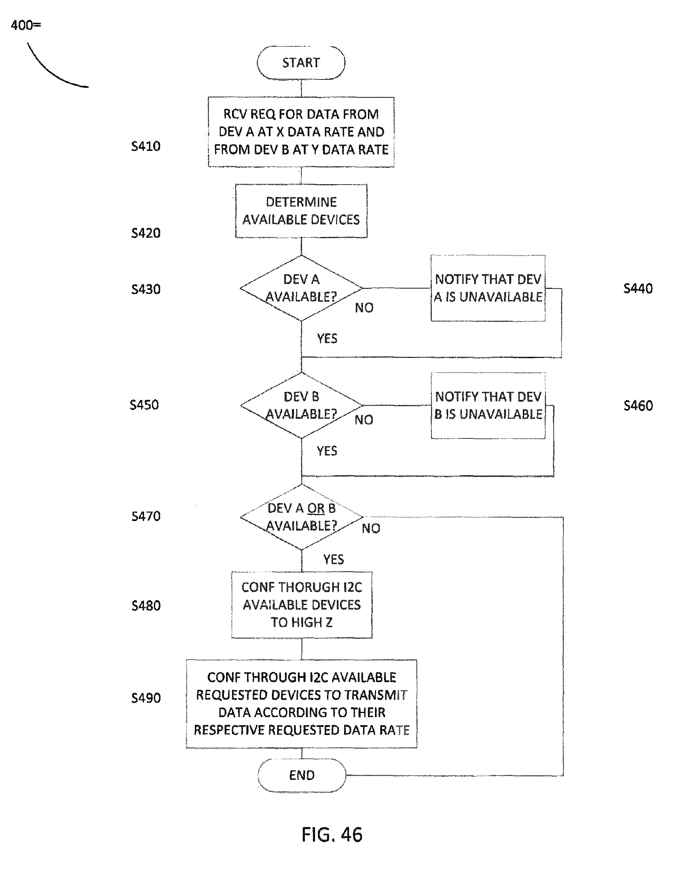

Fig. 46 illustrates an exemplary process 400 performed by IC 100 when configured by at least one process-executable program 150 including certain aspects of the present teachings. At step S410, the processing unit 110 receives a request for data captured by data-gathering devices A and B. The request further includes a desired data rate at which data should be transmitted by each device. At step S420, upon receipt of the request, the processing unit determines which devices are available. Processing unit 110 may determine this by requesting status of all devices connected to I2C Mux 240 (Fig. 44), or may retrieve the information from a look-up table previously stored at data storage unit 140 (Fig. 43).

At step S430, processing unit 110 determines whether device A is among the available devices. When device A is not available for providing data through data bus 230, processing unit 110 notifies the requesting party that device A is not available (S440). At step S450, processing unit 110 determines whether device B is among the available devices. When device B is not available for providing data through data bus 230, processing unit 110 notifies the requesting party that device B is not available (S460).

At step S470, processing unit 110 determines whether any of the requested devices is among the available devices. When none of the requested devices is available for providing data through data bus 230, the process ends. When at least one of the requested devices is available for providing data through data bus 230, processing unit 110 configures all available devices through the I2C bus to set their data bus lines at high impedance (S480), and configures the available requested devices to transmit data through the data bus at their respective required data rate to the IC 100 (S490). Configuring all available devices may include configuring the I2C Mux to bridge I2C Bus 220 with each I2C sub-branch and its corresponding device individually, or may include configuring the I2C Mux to bridge I2C Bus 220 with some or all sub-branches and their corresponding devices simultaneously to configure the some or all devices at the same time.

Those of ordinary skill in the art will appreciate that steps S480 and S490 could be performed in a variety of ways without departing from the present teachings. For example, processing unit 110 may determine that all available devices are already in a high impedance state, and therefore, may obviate S480. Furthermore, step S490 may include configuring the available requested devices to transmit data at the corresponding requested data rate, or may include requesting data from the available devices periodically according to the requested data rates and providing the data to the requesting party. Specifically, S490 may include requesting a unit of data from each available requested device (e.g., byte, a word, or an image frame), capturing the unit of data from the data bus 230, storing the unit of data at data storage unit 140, and repeating the process for each available requested device at the corresponding requested data rate.

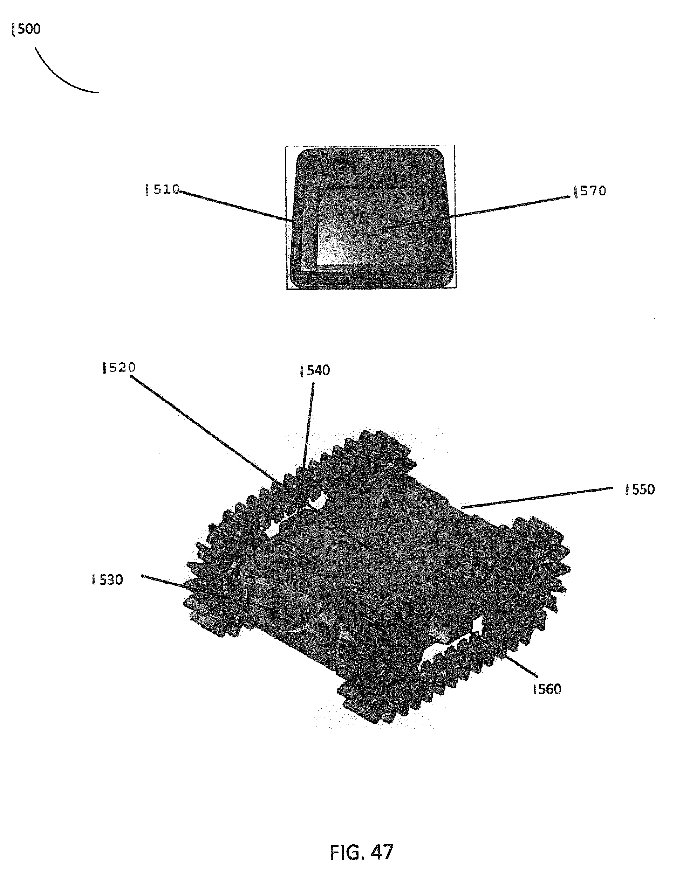

Fig. 47 illustrates an exemplary system 500, including certain aspects of the present teachings. System 500 includes remote-controlled vehicle 520 and remote control unit (or operator control unit (OCU)) 510. Remote-controlled vehicle 520 includes four video cameras (forward camera 530, side cameras 540 and 550, and rear camera 560) which may capture video or still images from the surrounding environment. In the illustrated embodiment, the video cameras are located at the front, rear, left, and right sides of the remote-controlled vehicle. Each camera can have a field of view of, for example, 90 degrees and can comprise, for example, the type of camera used in cellular phone technology today. The present exemplary system includes four cameras, but the present teachings are not so limited, and a remote vehicle may include more or less video cameras.

Vehicle 500 further comprises elements illustrated in Fig. 44 and described above (e.g., an IC 210, an I2C bus 220, a data bus 230, and an I2C Mux 240), but these elements are not shown in Fig. 47 because they are located within the chassis of the remote-controlled vehicle. Video cameras 530, 540, 550, and 560 correspond to data-gathering devices 250, 252, 254, and 256 illustrated in Fig. 44 and described above. Vehicle 520 may include additional elements associated with mobility, wireless communications, obstacle detection and avoidance, etc., which are not shown in Fig. 47 to not obscure the present exemplary embodiment.

In operation, a user controls remote-controlled vehicle 520 through remote control unit 510. The user can select one or more target cameras of the vehicle's cameras to view in the display 570 of the remote control unit 510. In certain embodiments of the present teachings, the user can additionally select the resolution and the frame rate at which he/she wishes to receive frames from the selected cameras. The resolution and frame rate may be the same for all selected cameras or may differ for each camera.

For example, when the vehicle 520 moves forward, the user may select to display image data from the forward camera 530 as the target camera and disable the other 3 cameras (540, 550, and 560). Because only the target camera is using the data bus, the bandwidth available to the target camera to transmit the requested image data to IC 210 through data bus 230 is limited by the maximum processing/transmission rate of the target camera and the maximum bandwidth supported by the data bus 230. Thus, a relatively high frame resolution and/or frame rate may be supported.

However, the user may select the forward camera 530 and from the side cameras 540 and 560 as target cameras. In this case, the user may configure the target cameras to provide image data at the same frame resolution and frame rate, or may configure the forward camera 350 to provide a higher resolution and/or frame rate relative to that of the side cameras 540 and 560. Because three target cameras are using the data bus 230, the bandwidth available to a particular camera is limited by the maximum processing/transmission rate of the particular camera, the maximum bandwidth supported by the data bus 230, and the data rate allocated to the remaining target cameras.

In the present exemplary embodiment, forward camera 530, side cameras 540 and 550, and rear camera 560 are identical cameras and/or have an identical I2C address. Because each data-gathering device is independently connected to the I2C Mux 240, addressing of a particular data-gathering device depends on selecting a corresponding I2C sub branch instead of a corresponding I2C address. In particular each camera location is physically connected to the data bus 230 and physically connected to a corresponding I2C sub-branch of I2C Mux 240 (see Fig. 44). An I2C Mux driver program executed by IC 210 is aware of the relationship between each camera and its corresponding I2C sub-branch of I2C Mux 240. When a user wishes to display images from a target camera, the addressing of the target camera depends on the camera's location instead of a pre-configured unique I2C address. Furthermore, if a camera malfunctions and needs to be replaced, the present teachings obviate the need to configure the camera being installed in the system with the address of the camera being replaced or with a specific address. Further still, cameras may be repositioned within the same unit without reconfiguration of addresses because their addressing depends on where the camera is positioned as opposed to its address.

For example, and not as limitation, if the user wishes to display images from forward camera 530 as the target camera, a software application requests I2C driver software to receive image data from the forward camera 530 using a unique address identifying the forward camera 530 as the target camera. I2C driver software configures I2C Mux 240 to bridge I2C bus 220 with a sub-branch corresponding to forward camera 530 and configures the camera to transmit image data to IC 210 through data bus 230. Thus, although the software application requests the data as if the target camera is uniquely addressed, I2C driver software addresses each camera by configuring the I2C Mux 240 to bridge I2C bus 220 with the corresponding camera.

Some or all of the actions performed by the exemplary embodiments described herein can be performed under the control of a computer system executing computer-readable codes either in a computer-readable recording medium or in communication signals transmitted through a transmission medium. The computer-readable recording medium is any data storage device that can store data for a non-fleeting period of time such that the data can thereafter be read by a computer system. Examples of the computer-readable recording medium include, but are not limited to, read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. The communication signals transmitted through a transmission medium may include, for example, signals which modulate carrier waves transmitted through wired or wireless transmission paths.

### Resilient Wheel Assemblies

A wheel structure that absorbs both radial and axial forces can be achieved in accordance with the present teachings by utilizing a plurality of spokes comprising at least one slit, wherein the at least one slit extends radially inward from a rim of the wheel (or a radially outer position of the spoke) to a hub of the wheel (or a radially inner position of the spoke). Slits in accordance with the present teachings may, for example, effectively reduce the axial stiffness of the spokes, thereby increasing the resilience of the wheel structure against axial loads (i.e., side impacts) when the vehicle is dropped and/or thrown. In accordance with certain embodiments of the present teachings, the increased resilience of the wheel in the axial direction does not negatively affect its ability to withstand loads in the radial direction.

Furthermore, a flipper structure that absorbs side impact energy and/or transmits side-impact energy (i.e., axial shock) to the wheel structure can be achieved in accordance with the present teachings by utilizing a low profile flipper arm having a plurality of legs, wherein the plurality of legs (in conjunction with an attachment base) effectively form a four-bar linkage between the flipper arm and the wheel structure. The four-bar linkage may, for example, allow translation of the flipper arm during a side impact (i.e., allowing the arm to safely collapse into the wheel structure), while still providing adequate rotational stiffness for the flipper to lift and manipulate the remote vehicle during normal remote vehicle operation.

As used herein, the terms "radial force" or "radial load" refer to a force that exits perpendicular to a wheel's axis of rotation. In other words, a radial force is a force directed radially along the surface of a wheel structure 10 as illustrated, for example, by arrow F_{R} in FIG. 1. As used herein the term "radial shock," therefore, refers to a radial impact force directed along the surface of the wheel structure as illustrated by F_{R}, which can be caused, for example, by a top and/or bottom impact to the wheel structure.

As used herein, the terms "axial force" or "axial load" refer to a force that exists parallel to a wheel's axis of rotation. In other words, an axial force is a force directed along the longitudinal axis of the wheel structure. As used herein, the term "axial shock," therefore, refers to a an axial impact force directed along the longitudinal axis of the wheel structure, which can be caused, for example, by a side impact to the wheel structure and/or flipper structure.

As used herein, the term "low profile" refers to a design and position characterized by a deliberate avoidance of prominence on a vehicle.

In various exemplary embodiments, wheel assemblies in accordance with the present teachings may be attached to and/or mounted on mobile robots, such as, for example, an axle of a robotic vehicle. Those of ordinary skill in the art would understand, however, that the wheel assemblies of the present teachings, including, for example, the wheel structures, flipper structures, and inserts of the present teachings, are useful in various applications, improving shock absorption for various vehicles, and are not intended to be limited in any way by the exemplary embodiments discussed above and below with regard to robotic systems.

### Resilient Wheel Structures

As shown in FIGS. 1, 2, 4, 5, and 8-13, resilient wheel structures in accordance with the present teachings can comprise a continuous annular rim, a hub, and a plurality of spokes interconnecting the rim and the hub. The rim is designed for maximum rigidity, allowing the force from any radial impact or load to be distributed to the maximum number of spokes. In various embodiments, for example, the distributive effects of the rim are accomplished by incorporating an inner rim, an outer rim, and one or more ribs connecting the inner rim to the outer rim. The rim, the ribs, and the relationship between the inner rim and the outer rim are discussed in detail, for example, in U.S. Patent No. 6,615,885 B1 (filed October 29, 2001; entitled "Resilient Wheel Structure"), the entire contents of which are incorporated by reference herein.

The hub is configured, for example, to attach the wheel structure to an axle of a remote vehicle. Thus, the hub may comprise a bore for receiving the axle as described below. The spokes are equispaced around the wheel structure, each spoke extending from a rim origin point at the inner rim to a hub origin point at the hub. In various embodiments, there are approximately twelve spokes spaced around the wheel. Those of ordinary skill in the art would understand, however, that the number and configuration of spokes used on the wheel structure may be chosen based on the design criteria for a specific application as discussed below.

Each spoke can have three spoke portions, a first spoke portion, a second spoke portion, and a third spoke portion, each with a different curvature. The first spoke portion is connected to the hub at the hub origin point. The second spoke portion is connected to the inner rim. The third spoke portion connects the first spoke portion to the second spoke portion.

In accordance with various embodiments of the present teachings, the third spoke portion is generally shaped, for example, to eliminate inflection points, thereby providing zero stress transitions from tension to compression along the surface of each spoke. The spokes may, therefore, absorb energy from radial shocks to the wheel structure (i.e., deflect in a radial direction) by deforming in three axes as would be understood by those of ordinary skill in the art.

Although the spokes are depicted herein as being identical (i.e., the length and curvature of each spoke portion is identical for each spoke), with a uniform thickness and a substantially rectangular cross section, those of ordinary skill in the art would understand that the spokes may have various curvature profiles, dimensions, and/or cross-sectional shapes, with various configurations of spoke portions, without departing from the scope of the present teachings. The spokes and the spoke portions are discussed in greater detail, for example, in U.S. Patent No. 6,615,885 B1.

Each spoke has at least one slit extending radially inward from the rim to the hub. In various embodiments, each spoke has three slits extending radially inward from the rim to the hub, creating four spoke layers spaced axially within each spoke. As would be understood by those of ordinary skill in the art, the slits reduce the axial stiffness of the spokes. The spokes may, therefore, absorb energy from axial shocks to the wheel structure by defecting in the axial direction.

The present teachings, therefore, provide a wheel structure, which allows a designer to tailor a wheel's axial and radial stiffness using at least slits and the number and configuration of the spokes, respectively. As would be understood by those of ordinary skill in the art, for example, the number of spokes and slits used on the wheel structure may be chosen based on the design criteria for a specific application. One of skill in the art would be able to determine, for example, the volume of material needed (e.g., the number and size of spokes needed) to actively absorb a given amount of radial force, and the number and size of slits needed (i.e., the greater the number of slits, the greater the reduction in axial stiffness of the spokes) to actively absorb a given amount of axial force, based on such variables as the material(s) used for the wheel structure.

In various exemplary embodiments, for example, the wheel structure may be machined from a high resiliency material such as an impact-resistant polymer. Since the mass of the wheel structure contributes to the energy that must be absorbed during an impact event, lightweight materials such as polymers can be used, for example, to reduce the mass of the wheel structure. Those of ordinary skill in the art would understand, however, that the wheel may be formed from various resilient materials including, for example, resilient composites, and certain high strength metals, such as, for example, spring steel, and that the material used for the wheel structure may be chosen as desired based on intended applications, strength/weight considerations, cost, and other design factors.

Furthermore, those of ordinary skill in the art would understand that wheel structures in accordance with the present teachings may be formed using various methods and/or processes. Various embodiments of the present teachings, for example, contemplate a method of manufacturing a wheel structure that comprises molding the wheel structure, such as, for example, through a conventional injection molding process.

In accordance with certain embodiments of the present teachings, layers of each spoke can be splayed apart from one another circumferentially. As above, the wheel structure comprises a continuous, annular rim, a hub, and a plurality of spokes interconnecting the rim and the hub. Each spoke has at least one slit extending radially inwardly from the rim to the hub, creating a plurality of spoke layers within each spoke. In various embodiments, each spoke has three slits, creating four spoke layers within each spoke. To mold the wheel structure, the spoke layers may, for example, be radially offset from one another around the hub. Such a configuration may, for example, permit a wheel structure with multiple spoke layers to be removed from a mold (i.e. unmolded), as would be understood by those ordinarily skilled in the art.

In various embodiments, the wheel structure may be molded, for example, from a polycarbonate resin, such as Lexan EXL1414. Those of ordinary skill in the art would understand, however, that the wheel structure may be formed from various moldable materials including, for example, various polyamide resins, such as, for example, Zytel® ST801 and Grilamid XE3910 E, and that the material used for the wheel structure may be chosen as desired based on intended application(s), strength/weight considerations, cost, and other design factors.

### Resilient Flipper Structures

A flipper structure is designed, for example, to improve the mobility of a robotic vehicle, as described, for example, in U.S. Patent Publication No. 2010/0139995 Al (filed December 9, 2008; entitled "Mobile Robotic Vehicle"), the entire contents of which are incorporated by reference herein.

With reference now to the resilient flipper structures illustrated in FIG. 1-3 and 9-11, a flipper structure in accordance with certain embodiments of the present teachings can comprise, for example, an arm, a plurality of legs, and an attachment base. When the flipper structure is attached to a remote vehicle, its arm may extend longitudinally along the side of the remote vehicle, and as described below prevent the wheel structures from twisting during impact due to forces exerted on the wheel by an impacted flipper. Due to the four-bar linkage of the flipper, side-impact forces on the flipper will be directed axially into the wheel rather than twisting the wheel in a case where the side impact force causes the flipper to rotate about its base. The four-bar linkage created by the legs allows an outer surface of the flipper to remain substantially parallel to the robot even when the flipper deflects in response to a side-impact force, and allows force translated by the flipper to the wheel to be substantially axially directed rather than torsional.

The arm comprises an inner surface and an outer surface, wherein the inner surface is generally positioned adjacent to the wheel structures. In various embodiments, the inner surface can taper inwardly (making the arm thinner) as the arm extends from the legs of the flipper to its distal end. The distal end of the arm can therefore be thinner than a proximal end of the arm, such that the arm is thickest at the proximate end (where it is supported) and gets thinner towards the distal end. This configuration may, for example, decrease the arm's weight without compromising the arm's overall strength and stiffness.

Thus, when the flipper structure is attached to a remote vehicle, in various exemplary embodiments, the inner surface of the arm slants away from the remote vehicle to form a space between the arm and the remote vehicle, while the outer surface of the arm remains parallel to the remote vehicle. As would be understood by those of ordinary skill in the art, the space between the flipper arm and the remote vehicle may be sized accordingly to, for example, (1) prevent the distal end of the arm from rubbing against the front wheel structure (or another structure of the remote vehicle) if the arm gets deformed, (2) prevent the distal end of the arm from getting caught in the front wheel structure (or another structure of the remote vehicle) when the remote vehicle is on its side, (3) prevent debris (e.g., grass, gravel, twigs, etc.) from getting lodged between the arm and the remote vehicle, and (4) prevent the distal end from catching on external objects.

The legs couple the arm to the attachment base. In various exemplary embodiments, the flipper structure can have three legs (two outer legs and one inner leg). The legs and attachment base form a four-bar linkage, wherein the attachment base is the fixed link, as would be understood by those of ordinary skill in the art. Thus, when the flipper structure is attached to a remote vehicle, the arm may translate into the remote vehicle (i.e., into the wheel structure) during a side impact (i.e., an axial shock), without the arm bending toward the remote vehicle such that its distal end catches on a front wheel structure (i.e., the arm remains substantially parallel to the remote vehicle), and while still providing adequate rotational stiffness to lift and maneuver the vehicle in accordance with the teachings of U.S. Patent Publication No. 2010/0139995. The four-bar linkage can prevent damage to the flipper structure during side impacts by transferring axial force to a wheel structure (where the force may be absorbed as described above).

As would be understood by those of ordinary skill in the art, the size and configuration of the flipper structure may be chosen based on the design criteria for a specific application and remote vehicle. One of skill in the art would be able to determine, for example, the dimensions and configuration of legs needed for adequate translation of side impact forces, and the length and thickness of arm needed for adequate rotational stiffness to lift and right the remote vehicle, based for example on the size and weight of the remote vehicle and the materials used for the flipper structure.

In various embodiments of the present teachings, the flipper structure can include one or more holes for mounting objects and/or payloads (see FIG.3). The holes can additionally or alternatively be used to allow the side camera to "see" even when the flippers are in a stowed position, when the holes are located such that they are aligned with the camera and sufficiently sized to prevent the flipper from obscuring the field of view of the side camera. In various embodiments, the flipper structure can include one or more holes positioned along a longitudinal axis of the flipper structure between the proximal end and the distal end of the arm. To prevent stress concentrations around the holes, in various embodiments, a reinforcement material may be added around the holes. As would be understood by those of ordinary skill in the art, the number, size and configuration of the holes and/or reinforcement material may be chosen based on the design criteria for a specific application and remote vehicle.

In various additional embodiments of the present teachings, the flipper structure may include a V-shaped cross section to increase the rigidity of the flipper arm (i.e., to make the flipper arm more rigid to bending, for example, away from the remote vehicle). The V-shaped cross section can extend along the longitudinal axis of the flipper structure between the proximal end and the distal end of the arm. The orientation of the V-shaped cross-section, for example, further lends itself to pushing grass and other debris away from the wheel structures (e.g., where the grass and/or debris is likely to get caught between the tracks and the wheels and inhibit the vehicle's mobility).

As would be understood by those of ordinary skill in the art, upon impact, the V-shaped cross-section may bend toward a flat cross section (i.e., be crushed flat) such that it maximizes load distribution into, for example, the rim of the wheel structure (i.e. similar to a flipper with a flat cross-section). After impact, the V-shaped cross-section may then return to its original V shape, and once again increase the rigidity of the flipper arm. The rigidity of the flipper arm may also be increased by increasing the thickness of the flipper arm as would be understood by those of ordinary skill in the art. Merely increasing the thickness of the flipper arm may, however, compromise load distribution into the rim (i.e., such that the load is not uniformly distributed into the rim upon impact), which may not only cause the wheel structure to bend at an angle, but may also create higher stresses on the flipper structure, thereby causing permanent deformation of the flipper body.

In various embodiments, the flipper structure may be molded, for example, from a polyamide resin, such as Zytel® ST801, manufactured by Dupont™. Those of ordinary skill in the art would understand, however, that the flipper structure may be formed using various methods and/or techniques, using various materials including, for example, various ductile plastics, resins, and metals, and that the material used for the flipper structure may be chosen as desired based on intended application(s), strength/weight considerations, cost, and other design factors.

In various embodiments, the attachment base is configured, for example, to attach the flipper structure to an axle of a remote vehicle via an insert. The axle can drive (i.e., rotate) the flipper. The attachment base may comprise a plurality of insert holes and a bore for receiving an insert and a fastener, respectively. In various embodiments, for example, nine insert holes may be spaced evenly around an outer surface of the attachment base to receive insert pins as described below. In various additional embodiments, a fastener (e.g., a mounting bolt) can pass through the bore to secure the flipper structure to the axle. The present teachings also contemplate employing alternative attachment mechanisms that would be known to those skilled in the art.

### Inserts

An exemplary embodiment of an insert for use in conjunction with a flipper structure (e.g., a flipper structure) of the present teachings is shown in cross section in FIG. 11. When the insert is engaged with an axle of a remote vehicle, the insert can provide a robust interface between the axle and the flipper.

The insert may comprise, for example, an annular bushing with a flange. The flange has a bore with a flat offset surface that tapers outward from a top portion of the bushing to a bottom portion of the bushing to create an offset angle. In various embodiments of the present teachings, for example, the offset angle is at least about 15 degrees from an axis of the insert, such as, for example, about 16 degrees from the insert axis. Thus, to mount the insert on an axle (see rear axle 242 in FIG. 4), the flat offset surface can mate with a corresponding offset surface (i.e., having a complementary offset angle) of the axle.

In various embodiments, the insert may also comprise a plurality of pins for mounting the flipper structure to the axel. The insert can comprise nine pins configured to respectively engage nine insert holes of the flipper structure, thereby transmitting torque between the axle, which drives (rotates) the insert, and the flipper structure. Those of ordinary skill in the art would understand, however, that flipper structures and inserts in accordance with the present teachings may respectively comprise various types, sizes, numbers and/or configurations of insert holes and pins without departing from the scope of the present teachings.

When the flipper structure and the insert are tightened to the axle, the insert can provide a zero-backlash interface (e.g., the insert can wedge the flipper against the axle via the offset surface to prevent backlash between the parts. As used herein, the term "backlash" refers to play resulting from loose connections between mechanical elements. In other words, backlash is the play resulting from a loose connection between the axle and the insert and/or between the insert and the flipper structure. The offset surface can transmit torque while preventing any loose connection and therefore backlash between the axle and the insert that may otherwise exist, for example due to manufacturing tolerances or the need to provide clearance to allow parts to mate.

In various embodiments, the insert may be formed, for example, from stainless steel, such as a grade stainless steel. Those of ordinary skill in the art would understand, however, that the insert may be formed from various high-strength materials that can be chosen based an intended application(s), strength considerations, corrosion resistance, cost, and other design factors.

### Resilient Wheel Assemblies

In various exemplary embodiments, a wheel structure, flipper structure, and insert may be assembled on a remote vehicle. A wheel assembly comprising the wheel structure, flipper structure, and insert may be assembled, for example, with an axle of a remote vehicle such as a mobile robot shown in the figures hereof.

The wheel structure may be mounted on the axle via the hub of the wheel structure, wherein the axle extends longitudinally through a bore in the wheel hub to drive the wheel structure and also to engage the insert. As above, the axle may comprise an offset surface, which complements the offset surface in the insert. Thus, the insert may be securely mated with the axle. The flipper structure may then be mounted to the axle via the insert. As above, the insert may comprise a plurality of pins to engage a plurality of insert holes in the flipper structure. The wheel structure, insert, and flipper structure may then all be secured to the remote vehicle axle (e.g., its rear axle) via a fastener, wherein the fastener extends longitudinally through the bore in the flipper structure to engage the axle.

Those of ordinary skill in the art would understand that various types, sizes, numbers, and/or configurations of bores and/or fasteners can be used without departing from the scope of the present teachings. Those of ordinary skill in the art would further understand that the wheel structure, insert, and flipper structure may be secured to the axle using various fastening mechanisms, including, but not limited to, various types of screws and/or bolts.

Thus, during operation of the remote vehicle, the wheel structures may absorb both radial and axial forces to prevent damage to the wheels and/or the chassis of the remote vehicle if the remote vehicle is, for example, jostled, thrown, tossed, or dropped. As stated above, the spokes of a wheel structure may, for example, absorb energy from radial shocks to the wheel structure (i.e., deflect in a radial direction) by deforming in three axes. Slits in the spokes of the wheel structure may also effectively reduce the axial stiffness of the spokes, thereby increasing the resilience of the wheel structure against axial shocks (i.e., side impacts) when the remote vehicle rolls or is dropped and/or thrown.

Furthermore, the flipper structures may transmit energy (i.e., axial shock) to the wheel structures to prevent damage to the flippers when the remote vehicle rolls or is dropped and/or thrown. As above, a flipper structure may, for example, have a plurality of legs, wherein the plurality of legs (in conjunction with an attachment base) effectively form a four-bar linkage between an arm of the flipper structure and a wheel structure. As would be understood by those of ordinary skill in the art, the four-bar linkage may allow translation of the arm during a side impact (i.e., allowing the arm to safely collapse into the wheel structure), while also providing adequate rotational stiffness to lift the remote vehicle during normal vehicle operation.

### Gap Crossing

For a tracked mobile robot with flippers to cross a gap having a width of less than or equal to 50% of the mobile robot's length (as measured with the flippers in a stowed position) a mobile robot in accordance with the present teachings can position its flippers to extend rearward behind the rear axle, but inclined slightly upwardly with respect to the driving surface (e.g., at a 10 degree incline to the driving surface) and drive across the gap. The flipper incline will assist in gap crossing by tilting the front of the mobile robot upward and extending the length of the robot as the rear end of the tracks drive off of the starting surface into the gap, which ensures that a front portion of the mobile robot's tracks catch and maintain traction on the ending surface.

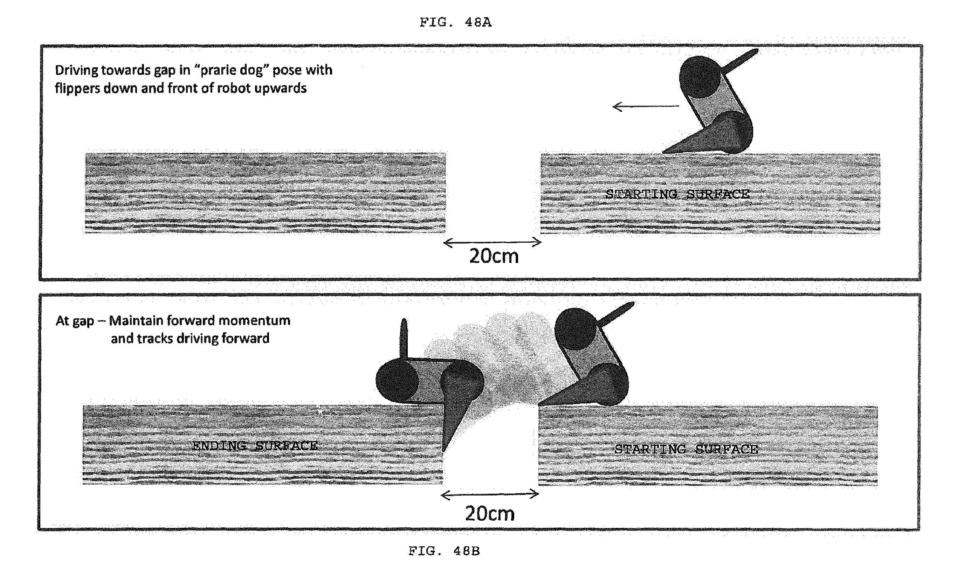

FIG. 48A - 48C illustrates a mobile robot in accordance with the present teachings employing an exemplary gap-crossing method that can allow a mobile robot to jump, for example, about 75% of its length (as measured with the flippers in a stowed position). As shown, the mobile robot moves along a starting surface toward a gap having a width of 20cm. In the illustrated embodiment, the mobile robot moves to a "prairie dog" pose prior to reaching the gap. The prairie dog pose can comprise, for example, the flippers contacting the driving surface and causing the mobile robot chassis to move to an incline of about 45° to about 75°, for example about 60° with respect to the driving surface (see FIG. 48A). The flippers can maintain the mobile robot chassis in its inclined position as the mobile robot moves along the starting surface toward the gap. The portion of the tracks maintaining contact with the driving surface is used to propel the mobile robot forward.

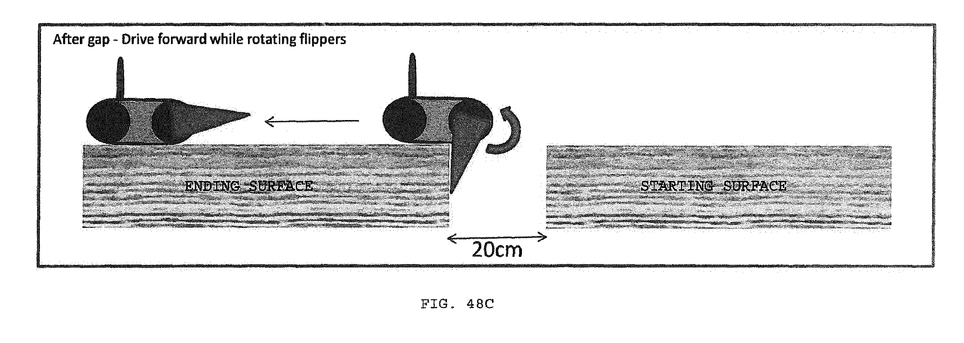

In FIG. 48A, the mobile robot has assumed a prairie dog pose and drives along a starting surface toward the gap. In FIG. 48B, the mobile robot reaches the gap and "jumps" the gap while rotating (falling) forward such that it the tracks land on the ending surface with enough traction to pull the mobile robot along the ending surface. As the robot jumps the gap, the flippers can move in a counter-clockwise direction to minimize the amount that the flippers encumber the jump by catching on a wall of the ending surface. Ideally, the flipper can rotate fast enough to avoid contact with the wall of the ending surface. Current flipper rotation speeds do not allow the mobile robot to rotate the flipper fast enough to avoid such contact, but allow the robot to successfully jump a gap. In FIG. 48C, the mobile robot has successfully jumped the gap and drives forward while rotating the flippers in a counter-clockwise direction to a desired position.

The mobile robot's acceleration and speed as it moves across a driving surface in the prairie dog pose can be limited by the degree of incline of the mobile robot's chassis while in the prairie dog pose. Inclining the chassis as shown in FIG. 48A moves the center of gravity of the mobile robot backward. The greater the chassis incline, the farther the center of gravity moves backward and therefore the lower the acceleration and speed should be to keep the mobile robot fro tipping backward as it drives toward the gap. However, a greater chassis incline can be desirable for gap crossing, because the front of the mobile robot rotates (falls) forward as the mobile robot jumps from the starting surface to the ending surface (see FIG. 48B).

In an exemplary mobile robot having a weight of 5.2 pounds, a length of about 10 inches (as measured with the flippers in a stowed position), a flipper length of about 6.7 inches (measured from the rear axle to the distal tip), a height (of the combined wheel and track without the antenna) of about 3.8 inches, the mobile robot can traverse the starting surface at 1.7 meters per second when in a prairie dog pose that inclines the mobile robot chassis about 60° from the starting surface without falling backward (in the absence of payloads other than an antenna). The speed of 1.7 meters per second in the prairie dog pose of about 60° allows the mobile robot to jump a gap of about 7.5 inches.

The present teachings contemplate gap jumping occurring as an autonomous behavior or via teleoperation. In an exemplary implementation, the operator maneuvers the mobile robot to a distance from the gap that is sufficient for the mobile robot to attain top speed prior to reaching the gap. The operator engages a "gap crossing" behavior that causes the mobile robot to rotate its flippers (e.g., in a counter-clockwise direction from a trailing position or a stowed position) to tilt the mobile robot chassis upward into a prairie dog pose of a desired angle. The chassis angle of incline can be determined, for example, by a 3-axis accelerometer. Once the mobile robot is in the prairie dog pose, the track motors can be engaged to drive the mobile robot toward the gap (e.g., in a full speed forward capacity). The mobile robot continues to move forward, monitoring the chassis angle of incline until the mobile robot chassis is at or below the desired angle of incline for more than a predetermined time period. Once the predetermined time period has ended, it can be determined that the mobile robot has crossed the gap and the flippers are sticking down into the gap. The mobile robot continues to drive the track motors forward while rotating the flippers counter clockwise, allowing the mobile robot to continue to move forward.

Although the gap crossing process described with respect to FIGS. 48A-48C can be performed manually via teleoperation, automating the process and using a 3-axis accelerometer can increase gap-crossing capabilities by allowing the mobile robot to monitor and maximize its speed and angle of inclination when approaching a gap, thereby increasing the distance that it can jump.

### Stair Climbing

A mobile robot as described herein can climb conventional stairs (or obstacles) by abutting its front end or read ends to the stair riser. A convention stair riser has a height of, for example, about 7 inches to about 8 inches. The present teachings contemplate a stair climbing method for a tracked mobile robot having a first end comprising a first pair of wheels, a second end comprising a second pair of wheels, a center of gravity between the first end and the second end, flippers coaxial with the first pair of wheels such that the first pair of wheels and the flippers can rotate freely relative to each other, and tracks surrounding the first pair of wheels and the second pair of wheels. In one embodiment, the method comprises driving the tracks to propel the mobile robot along a ground surface until the first end contacts a riser or an obstacle, rotating the flippers in a first direction to contact the ground surface to lift the second end over the center of gravity of the mobile robot and to contact an upper portion of the riser or obstacle, driving the tracks to propel the second end of the robot up and over the riser or obstacle until the center of gravity of the robot surmounts the riser or obstacle, and rotating the flippers in a second direction to trail the robot. A mobile robot in accordance with the present teachings can also climb stairs or surmount an obstacle by initially driving its second end close to or to abut the stair riser or obstacle in a known manner.

The above description and associated figures explain the best mode of the present teachings. Other embodiments will be apparent to those skilled in the art from consideration of the specification and practice of the teachings disclosed herein. It is intended that the specification and examples be considered as exemplary only, with a true scope and spirit present teachings being indicated by the following claims.

The remote vehicle embodiments described herein can also include additional components that were omitted from the drawings for clarity of illustration and/or operation. Accordingly, this description is to be construed as illustrative only and is for the purpose of teaching those skilled in the art the general manner of carrying out the present teachings. It is to be understood that the various embodiments shown and described herein are to be taken as exemplary. Elements and materials, and arrangements of those elements and materials, may be substituted for those illustrated and described herein, parts may be reversed, and certain features of the present teachings may be utilized independently, all as would be apparent to one skilled in the art after having the benefit of the description herein. Changes may be made in the elements described herein without departing from the spirit and scope of the present teachings and following claims, including their equivalents.

It is to be understood that the particular examples and embodiments set forth herein are non-limiting, and modifications to structure, dimensions, materials, and methodologies may be made without departing from the scope of the present teachings.

For the purposes of this specification and appended claims, unless otherwise indicated, all numbers expressing quantities, percentages or proportions, and other numerical values used in the specification and claims, are to be understood as being modified in all instances by the term "about" if they are not already. Accordingly, unless indicated to the contrary, the numerical parameters set forth in the following specification and attached claims are approximations that may vary depending upon the desired properties sought to be obtained by the present teachings. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the present teachings are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein.

It is noted that, as used in this specification and the appended claims, the singular forms "a," "an," and "the," and any singular use of any word, include plural referents unless expressly and unequivocally limited to one referent. As used herein, the term "include" and its grammatical variants are intended to be non-limiting, such that recitation of items in a list is not to the exclusion of other like items that can be substituted or added to the listed items.

It should be understood that while the present teachings have been described in detail with respect to various exemplary embodiments thereof, it should not be considered limited to such, as numerous modifications are possible without departing from the broad scope of the appended clauses, including the equivalents they encompass.

Yet further aspects and embodiments of the invention are enumerated with reference to the following numbered clauses.

1. A tracked mobile robot having tracks and rotatable flippers and a weight of less than about 8 pounds, the tracked mobile robot being configured to include at least three modes of operation, the modes of operation comprising: a gap crossing mode allowing the mobile robot to cross a gap that is greater than about eighty percent of a body length of the mobile robot, the gap crossing mode utilizing the rotatable flippers to pivot a chassis of the mobile robot clockwise to be inclined with respect to a surface over which the mobile robot drives before encountering the gap; a stair climbing mode utilizing the rotatable flippers to pivot the chassis of the mobile robot clockwise or counter-clockwise to cause the tracks to contact a top surface of a riser of a conventional stair; and an obstacle surmounting mode utilizing the rotatable flippers to pivot the chassis of the mobile robot clockwise or counter-clockwise to cause the tracks to contact an upper portion of the obstacle.

2. The mobile robot of clause 1, wherein the mobile robot dimensions are less than about 10 inches long and about 9 inches wide and about 4 inches high exclusive of the antenna.

3. A tracked mobile robot comprising: a chassis having a interior volume and sensors thereon, the chassis and sensors being sealed to prevent ingress of dust and liquid to the sensors and the chassis interior volume during at least temporary submersion up to about 1 meter for about 30 minutes; and a battery housed within the chassis and having a battery volume, the battery being configured to support intended missions of the mobile robot for at least 6 hours, the intended missions including at least driving the mobile robot and powering a processor and a radio thereon, wherein the mobile robot weighs less than about 8 pounds and the battery volume is at least about 10 percent of the interior volume of the chassis.

4. The mobile robot of clause 3, wherein the battery weight is at least 16 percent of the total weight of the mobile robot without a payload.

5. A mobile robot system having a weight of less than about 10 pounds, the mobile robot system comprising: a chassis with an interior volume and sensors thereon, the chassis and sensors being sealed with one or more of O-ring type seals, membranes, and silicone rubber gaskets to prevent ingress of dust and liquid to the sensors and the chassis interior volume during exposure to harsh weather conditions and temporary submersion; and an operator control unit configured to communicate with the mobile robot and comprising: a housing; an antenna supported by the housing and configured to transmit to and receive signals from the mobile robot; a display configured to provide information regarding the operation of the mobile robot; and an input device coupled to the display and configured to receive operator input.

6. The mobile robot system of clause 5, wherein the mobile robot comprises a sealed microphone and a sealed speaker.

7. The mobile robot system of clause 5, wherein the sensors include cameras, cliff sensors, and wall-following sensors.

8. An integrated circuit comprising: a processing unit; an inter-integrated circuit (I2C) interface coupled to the processing unit and to an external I2C bus; a data bus interface coupled to the processing unit and to an external data bus; and a data storage unit coupled to the processing unit configured to store at least one processor-executable program comprising instructions executable by the processing unit, wherein the at least one processor-executable program comprises an I2C driver program to configure the processor to: receive a request for data from at least one target external device of a plurality of external devices coupled to the external bus, the request comprising a unique address associated with the target external device; communicate with an external I2C multiplexer through the I2C interface to select an I2C sub-branch of the I2C multiplexer corresponding to the target external device based on the unique address; communicate only with the target external device through the I2C interface, wherein the communication does not include the unique address; and communicate only with the target external device through the external data bus, wherein the communication is independent of the unique address.

9. The integrated circuit of clause 8, wherein the external data bus comprises a video data bus, the plurality of external devices comprises a plurality of video cameras, and the target external device comprises one of the plurality of video cameras.

10. The integrated circuit of clause 7, wherein communicating only with the target external device through the I2C interface comprises requesting the target external device to transmit a video data through the external data bus.

11. The integrated circuit of clause 10, wherein communicating only with the target external device through the external data bus comprises receiving the video data from the target external device through the external data bus.

12. The integrated circuit of clause 8, wherein communicating only with the target external device through the I2C interface comprises communicating with the target external device through the external I2C multiplexer.

13. The integrated circuit of clause 8, wherein the I2C driver program further configures the processor to provide an application programming interface to the at least one processor-executable program to: provide a unique address identifying each device of the plurality of external devices coupled to the external data bus in response to a request for the identification information from the at least one processor-executable program; and bridge the I2C interface with an I2C interface from at least one target external device of the plurality of external devices coupled to the external data bus through the external I2C multiplexer in response to a selection of the target external device, the selection comprising a unique address identifying the target external device.

14. The integrated circuit of clause 13, wherein the I2C driver program further configures the processor to provide an application programming interface to the at least one processor-executable program to provide data received from the target external device through the external data bus in response to a request for data from the target external device.

15. The integrated circuit of clause 14, wherein requesting data from the target external device further comprises a data rate for receiving the requested data.

16. The integrated circuit of clause 15, wherein the external data bus comprises a video data bus, the plurality of external devices comprises a plurality of video cameras, and the identification information comprises a direction towards which a corresponding video camera is aimed relative to a point of reference.

17. The integrated circuit of clause 16, wherein the plurality of video cameras are mounted on a remote controlled vehicle and the point of reference comprises the remote controlled vehicle.

18. A remote controlled vehicle comprising: a processing unit; a plurality of data-gathering devices coupled to the processing unit through a data bus; an inter-integrated circuit (I2C) multiplexer coupled to the processing unit and to the plurality of data gathering devices; a data storage unit coupled to the processing unit and configured to store at least one processor-executable program comprising instructions executable by the processing unit, wherein the at least one processor-executable program comprises an I2C driver program to configure the processing unit to: receive a request for data from at least one target external device of a plurality of external devices coupled to the external bus, the request comprising a unique address associated with the target external device; communicate with the I2C multiplexer to select an I2C sub-branch of the I2C multiplexer corresponding to the target external device based on the unique address and couple the processing unit with the target external device through the I2C multiplexer; communicate only with the target external device through the I2C multiplexer, wherein the communication does not include the unique address; and communicate only with the target external device through the data bus, wherein the communication does not include the unique address.

19. The remote controlled vehicle of clause 18, wherein the data bus comprises a video data bus, the plurality of data-gathering devices comprises a plurality of video cameras, and the target external device comprises one of the plurality of video cameras.

20. The remote controlled vehicle of clause 19, wherein communicating only with the target external device through the I2C multiplexer comprises requesting the target external device to transmit a video data through the data bus.

21. The remote controlled vehicle of clause 20, wherein communicating only with the target external device through the data bus comprises receiving video data from the target device through the data bus.

22. The remote controlled vehicle of clause 18, wherein the I2C driver program further configures the processor to provide an application programming interface to the at least one processor-executable program to: provide a unique address identifying each device of the plurality of data-gathering devices in response to a request for identification information from the at least one processor-executable program; and bridge the processing unit with the target external device through the I2C multiplexer in response to a selection of the target external device, the selection comprising a unique address identifying the target external device.

23. The remote controlled vehicle of clause 22, wherein the I2C driver program further configures the processor to provide an application programming interface to the at least one processor-executable program to provide data received from the target external device through the data bus in response to a request for data from the target external device.

24. The remote controlled vehicle of clause 23, wherein requesting data from the target external device further comprises a data rate for receiving the requested data.

25. The remote controlled vehicle of clause 24, wherein the data bus comprises a video data bus, the plurality of data-gathering devices comprises a plurality of video cameras, and the identification information comprises a direction towards which a corresponding video camera is aimed relative to the remote controlled vehicle.

26. A tracked mobile robot having a chassis, one or more front axles, one or more rear axles, and a weight of less than about 6 pounds, the chassis including a front camera mounted on the chassis at a location between the front wheels and side cameras mounted on the chassis at a location between a front axle and a rear axle, the tracked mobile robot comprising: resilient front wheels mounted on one or more front axles and configured to absorb axial and radial impact when the mobile robot is thrown; resilient rear wheels mounted on one or more rear axles and configured to absorb axial and radial impact when the mobile robot is thrown; tracks spanning the front a rear wheels and being driven by one of the front wheel or the rear wheel; and flippers mounted on one of the front axle or the rear axle and being driven thereby, the flippers extending between the front axle and the rear axle in a stowed position, each flipper comprising an aperture configured to be substantially aligned with a side camera when the flipper is in a stowed position.

27. A method for causing a mobile robot to jump a gap, the method comprising: maneuvering the mobile robot to a distance from the gap that is sufficient for the mobile robot to attain a predetermined speed prior to reaching the gap; rotating flippers of the mobile robot to tilt a chassis of the mobile robot upward into a prairie dog pose; and driving the mobile robot in a direction of the gap at a speed sufficient to cause the mobile robot to cross the gap.

## Claims

1. A tracked mobile robot (100) comprising:
a chassis (102);
a front axle (144) supported by the chassis (102);
resilient front wheels (118, 130) mounted on the front axle (144) and configured to absorb axial and radial impact when the mobile robot (100) is thrown;
a rear axle (142) supported by the chassis (102);
resilient rear wheels (106, 136) mounted on the rear axle (142) and configured to absorb axial and radial impact when the mobile robot (100) is thrown;
tracks (104, 138) spanning the front and rear wheels (106, 118, 130, 136) and driven by one of the front wheels (118, 130) or the rear wheels (106, 136);
flippers (110) mounted on one of the front axle (144) or the rear axle (142) and driven thereby, the flippers (110) extending between the front axle (144) and the rear axle (142) in a stowed position;
a front camera (124) mounted on the chassis (102) at a location between the front wheels (118, 130); and
one or more side cameras (114) mounted on the chassis (102) at a location between the front axle (144) and the rear axle (142), each flipper (110) defining an aperture configured to be substantially aligned with the side camera (114) when the flipper (110) is in the stowed position;
wherein the tracked mobile robot (100) weighs less than about 6 pounds.

2. The tracked mobile robot (100) of claim 1, wherein each side camera (114) comprises at least one infrared light emitting diode (112, 116).

3. The tracked mobile robot (100) of claim 1 or 2, wherein the front camera (124) comprises at least one infrared light emitting diode (122, 126).

4. The tracked mobile robot (100) of any of claims 1-3, further comprising seals (3800, 3822) sealing the cameras (114, 124) on the chassis (102).

5. The tracked mobile robot (100) of any of claims 1-4, wherein the cameras (114, 124) comprise video cameras (530, 540, 550) capable of capturing video or still images of a surrounding environment.

6. The tracked mobile robot (100) of claim 5, wherein each video camera (530, 540, 550) has a field of view of 90 degrees.

7. The tracked mobile robot (100) of any of claims 1-6, wherein the flipper aperture is sufficiently sized to prevent the flipper from obscuring a field of view of the side camera (114).

8. The tracked mobile robot (100) of any of claims 1-7, further comprising an antenna assembly (148) extending upward from a top surface of the chassis (102), the antenna assembly (148) including a flexible mast (132).

9. The tracked mobile robot (100) of any of claims 1-8, wherein the mobile robot dimensions are less than 10 inches long and 9 inches wide and 4 inches high exclusive of the antenna assembly (148).
